# EUROPEAN PATENT APPLICATION

(11) **EP 1 462 317 A1**
(43) Date of publication of application: **29.09.2004**
(21) Application number: 02783559.4
(22) Date of filing: 13.11.2002
(51) Int. Cl.: B60R 16/02, B60R 11/02

(54) **DATA CREATION APPARATUS**

(30) Priority: 13.11.2001 JP 2001386801; 31.05.2002 JP 2002160681
(71) Applicant: Kabushikikaisha Equos Research, Tokyo 101-0021 (JP)
(72) Inventor: KUBOTA, Tomoki c/o Kabushiki Kaisha Equos Research, Tokyo 101-0021 (JP); HORI, Koji, c/o Kabushiki Kaisha Equos Research, Tokyo 101-0021 (JP); KONDO, Hiroaki c/o Kabushiki Kaisha Equos Research, Tokyo 101-0021 (JP); MATSUDA, Manabu, c/o Kabushiki K. Equos Research, Tokyo 101-0021 (JP); ADACHI, Kazuhide, c/o Kabushiki K. Equos Research, Tokyo 101-0021 (JP); HIRANO, Tadashi, c/o Kabushiki Kaisha Equos Rch., Tokyo 101-0021 (JP); FUJII, Kazuaki c/o Kabushiki Kaisha Equos Research, Tokyo 101-0021 (JP)
(74) Representative: VOSSIUS & PARTNER
(86) International application number: PCT/JP2002/011840
(87) International publication number: WO 2003/042002

(57) **Abstract**

An agent apparatus has a system capable of executing, periodically or when a particular condition is satisfied, processing to judge whether or not a condition to autonomously start (automatically present) an agent is satisfied based on scenario data created by a scenario creating apparatus, and automatically presenting the agent when the condition is satisfied. Thus, in the scenario creating apparatus, regardless of whether having knowledge of programming or not, it is possible to create and edit scenario data of an agent which automatically appears and responds when a particular condition is satisfied by having a scenario editor.

## Description

### Technical Field

The present invention relates to an on-vehicle apparatus, a data creating apparatus, and a data creating program. For example, the present invention relates to an on-vehicle apparatus which has an agent function to have a conversation and to autonomously perform equipment operation or the like by communicating with a passenger of a vehicle, and a data creating apparatus and a data creating program for the on-vehicle apparatus.

### Background Art

An agent apparatus which uses, for example, a pet-type robot such as a dog or the like to have a conversation with or respond to a passenger in a vehicle room by guiding equipment operation such as a navigation device and by performing questioning, offering a suggestion, and the like according to status is developed and mounted on a vehicle as an on-vehicle apparatus.

In such an on-vehicle apparatus (agent apparatus), various conceivable states related to the device are assumed, and responses to be taken upon detection of the respective assumed states are defined according to predetermined data and a program.

In a conventional agent apparatus, since a condition setting for the agent to automatically appear can only be realized by creating and modifying a program, such a creation or modification cannot be performed without having knowledge of programming, and such development requires long time and high cost.

Further, when the agent appears, it is effective to output an effective sound to notify the appearance in order for a driver to recognize the appearance of the agent without seeing the screen and not to miss hearing a questioning voice when the agent asks a question. However, in a conventional art, it is needed to perform programming for outputting such an effective sound.

The present invention is made in view of the above-described problems, and a first object thereof is to provide an on-vehicle apparatus capable of executing a screen element transition object based on a start condition thereof, the screen element transition object being configured by combining screen elements in which at least one of a display content and a processing content of a character, which are externally obtained, are defined.

Further, a second object of the present invention is to provide a data creating apparatus capable of easily creating a screen element transition object which is executed by the on-vehicle apparatus and a start condition thereof.

Further, a third object of the present invention is to provide a data creating apparatus capable of easily creating a screen element transition object capable of outputting an effective sound from the on-vehicle apparatus.

Further, a fourth object of the present invention is to provide a data creating program capable of easily creating by a computer the screen element transition object which is executed by the on-vehicle apparatus.

### Disclosure of the Invention

The present invention achieves the first object by an on-vehicle apparatus, which includes: a screen element transition storing means for externally obtaining and storing a screen element transition object constituted by combining screen elements, in which one screen element defines at least one of a display content and a processing content of a character, and a start condition of the screen element transition object; a condition judging means for judging whether or not the start condition is satisfied based on at least one of an on-vehicle sensor and user data; and a screen element transition object executing means for executing the screen element transition object when the start condition is judged to be satisfied.

Furthermore, in the present invention, the on-vehicle apparatus according to claim 1 is characterized in that the on-vehicle sensor detects at least one of a time, a location, a road type, a vehicle state, and an operating state of a navigation device.

Furthermore, in the present invention, the on-vehicle apparatus according to claim 1 is characterized in that the screen transition object executing means displays an executed screen transition object on a display device in a vehicle room.

Furthermore, the present invention achieves the second object by a data creating apparatus, which includes: an offering means for offering a plurality of selection items for at least one target out of a time, a location, a road type, a vehicle state, an operating state of a navigation device, and user data; a character setting means for selecting one or more items from the offered plural selection items and setting a display content and a processing content of a character to the selected item; and a screen element transition object creating means for creating a screen element transition object by combining screen elements, in which one screen element defines at least one of the display content and the processing content of the character, and a transition condition between the screen elements.

Furthermore, in the present invention, the data creating apparatus is characterized in that the screen element transition object starts from a screen element whose content is an active action such as a suggestion, a question, a greeting, and the like by the character.

Furthermore, the present invention achieves the third object by the data creating apparatus, which further includes: an effective sound displaying means for displaying effective sound information which specifies one or plural effective sounds in a list; an effective sound selecting means for selecting one effective sound information from the displayed effective sound information; and an effective sound setting means for setting an effective sound corresponding to the selected effective sound information as an effective sound to be outputted at a time of starting one screen element or in conjunction with the display content and the processing content of the character.

Furthermore, the present invention achieves the fourth object by a data creating program for realizing functions on a computer, the functions including: a screen element setting function to set one screen element based on a display content and a processing content of a character; a transition condition setting function to set one or more transition conditions for proceeding from one screen element to a next screen element which are set by said screen element setting function; and a screen element transition object setting function to create a screen element transition object to be executed and processed in a display device in a vehicle room based on the screen element and the transition condition.

Furthermore, in the present invention, the data creating program for realizing functions on a computer is characterized in that the functions further includes a start condition setting function to set a start condition for starting the screen element transition object by at least one of a time, a location, a road type, a vehicle state, an operation state of a navigation device, and user data.

Furthermore, in the present invention, the data creating program for realizing functions on a computer is characterized in that the functions further includes a converting function to convert the screen element transition object into an operation format to be operated in a navigation device.

Furthermore, in the present invention, the data creating program for realizing functions on a computer is characterized in that the screen element setting function includes an effective sound setting function to set an effective sound to be outputted at a time of starting the screen element or in conjunction with the display content and the processing content of the character.

Furthermore, in the present invention, the data creating program for realizing functions on a computer is characterized in that the functions further includes a mental state setting function to enable setting of the transition condition according to a mental state of the character.

### Brief Description of Drawings

FIG. 1 is a system structure view of a scenario addition system using an agent apparatus according to an embodiment of the present invention;
FIG. 2 is a block diagram showing a configuration of the agent apparatus according to the embodiment of the present invention;
FIG. 3 is a configuration diagram of a various status detecting system in the agent apparatus according to the embodiment of the present invention;
FIG. 4 is an explanatory diagram representing a relationship between an agent processing unit and an overall processing unit which are realized by executing a program on a CPU;
FIG. 5 is an explanatory diagram representing a configuration of the agent processing unit;
FIG. 6 is an explanatory diagram schematically representing information recorded in an external storage medium;
FIG. 7 is a view representing a structure of actual device format scenario data;
FIG. 8 is an explanatory view schematically representing a structure of autonomous start condition data stored in management data of a recorded scenario;
FIG. 9 is an explanatory view representing normalization of position coordinates by a first mesh and a second mesh;
FIG. 10 is an explanatory view schematically representing character data;
FIG. 11 is an explanatory view schematically representing character image selection data contents;
FIG. 12 is an explanatory view schematically showing driver information data;
FIG. 13 is an explanatory view representing a selection screen for selecting a character of an agent to be presented in a vehicle room by the agent apparatus;
FIG. 14 is an explanatory view representing an example of scene screens displayed on a display device based on scene data of a scenario;
FIG. 15 is a screen transition view representing transition of scene screens in a guidance scenario transmitted by a hotel to an expected guest by respective scenes;
FIG. 16 is a flow chart representing an autonomous start judgment processing of a scenario by an autonomous start judgment unit;
FIG. 17 is a flow chart representing processing contents of condition judgment processing;
FIG. 18 is a flow chart representing an example of a flow of scenario execution processing;
FIG. 19 is a flow chart representing an example of a flow of scene processing;
FIG. 20 is a flow chart representing processing operation of image data creating processing of a screen structure;
FIG. 21 is a flow chart exemplifying processing performed by instruction of various processing;
FIG. 22 is a flow chart representing operation of timer setting request processing;
FIG. 23 is a flow chart representing character drawing/voice output processing by a drawing/voice output unit;
FIG. 24 is a flow chart representing processing operation of voice recognition processing;
FIG. 25 is a flow chart representing contents of scenario interruption processing;
FIG. 26 is an explanatory view showing a comparison of examples of scene screens during a stopped state and a running state;
FIG. 27 is a configuration diagram of a scenario creating apparatus;
FIG. 28 is a view schematically representing structures of a scenario editing program and data;
FIG. 29 is a view schematically representing conversion of data format;
FIG. 30 is a view exemplifying items which are settable as automatic start items;
FIG. 31 is a view exemplifying items which are selectable for the automatic start items;
FIG. 32 is a view exemplifying items which are selectable for the automatic start items;
FIG. 33 is a scene branching item table in which stored are branching items (transition conditions) for branching (scene development) from a scene to a next scene;
FIG. 34 is a view representing an additional condition table;
FIG. 35 is an explanatory view schematically representing a part of contents of a display state instruction table for a character stored in a common definition DB;
FIG. 36 is an explanatory view schematically representing another part of contents of a display state instruction table for a character stored in a common definition DB;
FIG. 37 is a view representing a structure of a main window displayed on the display device when the scenario editor is started;
FIG. 38 is a view representing a flow of screen operation to edit a scenario property;
FIG. 39 is an explanatory view representing an example of a table of restrictive execution while running which defines default values of displaying/hiding while running for respective items constituting the scene screen;
FIG. 40 is a view representing a flow of screen operation for editing the scenario start condition from a main editing window of a scenario start condition;
FIG. 41 is a view representing a screen transition of operation of setting another AND condition;
FIG. 42 is a view representing a screen transition of operation of setting still another AND condition;
FIG. 43 is a view representing a selecting window of an automatic start condition range for inputting a date, time, and coordinates;
FIG. 44 is an explanatory view representing an operation procedure for setting an effective sound for each scene of a scenario in this embodiment;
FIG. 45 is an explanatory view representing a state of the main window after the effective sound is set;
FIG. 46 is a view representing a flow of screen operation of selecting a screen structure desired to be displayed on an agent display screen;
FIG. 47 is a view representing a flow of screen operation of editing a character action (agent action) instruction;
FIG. 48 is a view representing a flow of screen operation of editing a word instruction of a character (agent);
FIG. 49 is a view representing a flow of screen operation of editing a voice recognition dictionary;
FIG. 50 is a flow chart representing a flow of screen operation for performing a timer setting;
FIG. 51 is a view representing a flow of screen operation of editing a flow of a scenario;
FIG. 52 is a view representing a flow of screen operation of editing an end point of a scenario;
FIG. 53 is an explanatory view representing an example of a scene development in a created scenario; and
FIG. 54 is a view representing a flow of screen operation of compiling a created scenario into an actual device format that is usable for navigation.

### Best Mode for Carrying out the Invention

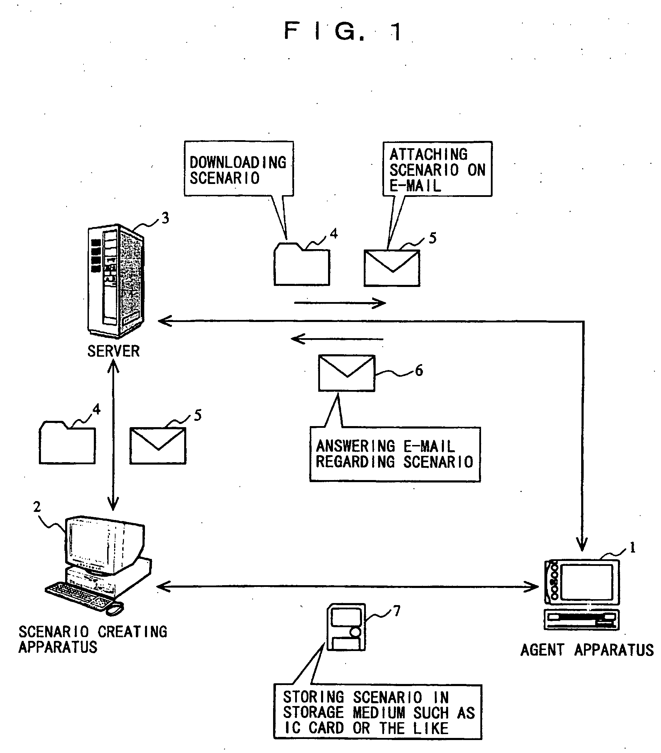

Hereinafter, an agent apparatus which is a preferred embodiment of an on-vehicle apparatus, a scenario creating apparatus which is a preferred embodiment of a data creating apparatus, and a scenario editor which is a preferred embodiment of a data creating program according to the present invention are described in details with reference to FIG. 1 to FIG. 54.

### (1) Overview of the Embodiment

The agent apparatus displays in a vehicle an image (a plane image, a three-dimensional image such as a holography, or the like) of an agent (character) having a predetermined appearance. Then, the agent apparatus performs a function to recognize and judge a surrounding state (including a motion or a voice of a person) from detecting result of a sensor on the like, and output an action or a voice according to the result, which is a function of the agent apparatus, in conjunction with a motion of appearance or a voice of the agent. For example, the agent apparatus asks a question such as "what genre of food do you like?" or the like requiring an answer (Japanese food, European food, or the like), and judges the content of an answer for this question from a user (by recognizing an answering voice, or by judging from a selection of answer-select buttons 54a), and performs processing corresponding to a next scene. The agent apparatus thus asks a question requiring an answer and starts performing predetermined operation according to the answer thereof, so that the user will be made to feel as if an agent having a pseudo personality exists in the vehicle. In the description below, execution of a series of functions of such an agent apparatus will be described as an action and operation of the agent.

In the agent apparatus according to this embodiment, the agent performs various types of communication with a driver and operation on behalf of the driver. Various actions (respective actions) which the agent autonomously performs are constituted by plural scenarios (screen element transition objects). The agent apparatus then stores scenario data which is standardized by the plural scenarios defining the contents of a series of continuous actions of the agent and by autonomous start conditions (start conditions) for autonomously starting (activating) a development of each scenario.

The scenario is constituted by one or plural continuous scenes with a scene (screen element) as a minimum unit. One scene is a scene constituted by at least one of a processing content to be autonomously performed and an image and a voice of the agent.

In the scenario, a development structure of each scene is defined by one transition condition (continuous condition) or plural transition conditions (branch conditions (conditions of a scene transition according to each state when plural states occur)) for proceeding from a predetermined scene to a next scene, and by transition target data which specifies transition target scenes corresponding to respective transition conditions.

On the other hand, the user or the like of the agent apparatus creates an original scenario according to specified standards using the scenario creating apparatus. The scenario creating apparatus can be configured by installing a scenario editing program and data into a personal computer.

By sending or downloading the created scenario to the agent apparatus through a network such as the internet, or by storing in the agent apparatus through the intermediary of a semiconductor memory, it is possible to make the agent perform actions (communication or processing) in accordance with desires of oneself (a third person).

A first scene of the scenario to be created may be, for example, a scene of a scenario of asking a person a question requiring an answer. Then, originally created scenario data can be inputted from an external device through an input device. In this case, when the scenario data to be added is stored in a semiconductor memory, the input device is a storage medium drive device which reads the contents of the semiconductor memory, and when the scenario data is downloaded from a specific server or the like through a network such as the internet, the input device is a communication control device. The scenario is executed according to this newly inputted scenario data.

By including e-mail and browser software, the agent apparatus downloads the scenario using the browser or the like and judges whether or not the downloaded file is scenario data to activate the agent, and when it is scenario data, the agent apparatus incorporates it into the agent program to make it usable. Further, in the case of an attachment on an e-mail, the agent apparatus similarly judges whether the attached file is a scenario or not, and when it is a scenario, the agent apparatus incorporates it into the agent system to make it usable.

Accordingly, besides conventional techniques, by using communication which uses existing communication infrastructures such as e-mails, networks and the like, or passing through the intermediary such as a semiconductor memory or the like, it becomes possible to add an original scenario created using a personal computer or the like.

Thus, the user can originally and easily create a scenario to make an agent function in accordance with his/her intention, thereby eliminating the resistance of the user to the autonomous operation of the agent apparatus.

Further, in the agent apparatus, there is provided a system capable of executing, periodically or when a particular state is satisfied, processing to judge whether or not a condition is satisfied to autonomously start (automatically present) an agent based on a scenario data created by the scenario data creating apparatus, and automatically presenting the agent when the condition is satisfied.

Thus, by having the scenario editor, the scenario creating apparatus enables creation and edit of a scenario data of an agent which automatically appears and responds when a specified condition is satisfied, regardless of whether having knowledge of programming or not.

For example, in conditions of a scenario such that an agent automatically appears to warn of an Orvis when the vehicle is running with a vehicle speed of 120 km/h or faster at a point which is 2 km before a position where the Orvis is provided (specified by coordinates of an east longitude and a north latitude) and a road type is expressway, the condition of vehicle speed may be changed to 140 km/h or faster, or a scenario which starts once on a specific day in each year (for example, the Christmas eve) can be created.

Further, in the scenario creating apparatus, there is provided a function to set whether or not to produce a sound (effective sound) and to set what kind of a sound when producing sound (which can be set to respective created scenes).

### (2) Details of the Embodiment

FIG. 1 is a view representing an overall system structure including an agent apparatus and a scenario creating apparatus.

This system is constituted by an agent apparatus 1 of this embodiment, a scenario creating apparatus 2 for a scenario data creator who is a user or a third person creating scenario data according to specified standards, and a communicating means such as the internet using a server 3 or the like.

By the scenario creating apparatus 2, original scenario data is created using a scenario editor. Then, the user who has created the original scenario data can store the scenario data in a storage medium 7 such as a DVD-ROM, a semiconductor storage device such as an IC card, or the like to transfer the scenario data to the agent apparatus 1. Then, in the agent apparatus 1 which receives the scenario data, the scenario data is read from the storage medium 7 by a storage medium drive device to incorporate it into an already stored scenario data, thereby enabling the agent apparatus 1 to operate according to the scenario data created using the scenario creating apparatus 2. Incidentally, the person who creates the scenario data by the scenario creating apparatus 2 may be the user himself/herself of the agent apparatus 1 or a third person.

Further, in the agent apparatus 1, the scenario data created by the user himself/herself or by a third person can be incorporated through a network such as the internet or the like, or the scenario data attached to an e-mail can be incorporated.

Further, the third person who desires to offer services or the like to the user of the agent apparatus 1 can create scenario data in a predetermined format, for example, using the scenario editor by the scenario creating apparatus 2, and place it on a homepage to be downloadable or send it to the agent apparatus 1 as an attached file on an e-mail. The agent apparatus 1 may receive the scenario data 5 attached on the e-mail, or the user may download a scenario data file 4 through the communicating means such as the server 3 or the like. Further, the agent apparatus 1 sends an answer of the user (an answering e-mail regarding the scenario data) obtained according to the execution of the received scenario data in a body or an attached file of an e-mail 6 to the scenario creating apparatus 2 of the scenario creator.

First, the configuration and operation of the agent apparatus 1 in which an agent autonomously functions in accordance with the scenario created by a developer or a user will be described.

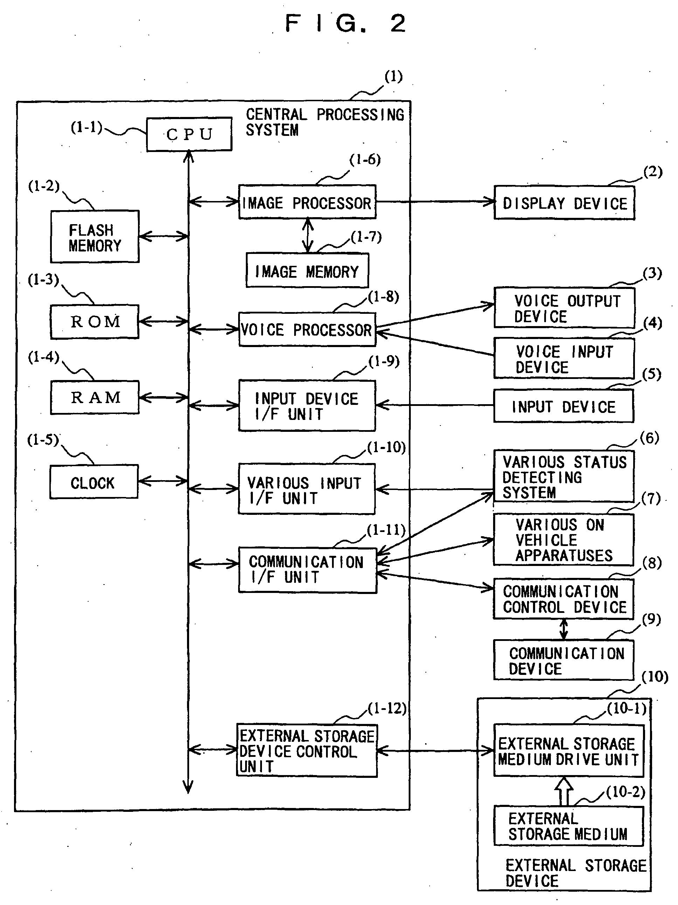

FIG. 2 is a block diagram representing the configuration of the agent apparatus 1 according to this embodiment.

The agent apparatus 1 according to this embodiment is mounted on a vehicle and has agent functions such as a function to communicate with the user in the vehicle, a vehicle control function to perform a predetermined processing for the vehicle; and the like and also has a navigation function to perform guidance of a driving route and the like to the user.

The agent apparatus 1 of this embodiment has, for realizing the agent function and the navigation function, a central processing system (1), a display device (2), a voice output device (3), a voice input device (4), an input device (5), a various status detecting system (6), various on-vehicle apparatuses (7), a communication control device (8), a communication device (9), and an external storage device (10).

The central processing system (1) has a CPU (1-1) which performs various calculation processing; a flash memory (1-2) which stores a program read from the external storage device (10); a ROM (1-3) which stores a program to perform a program check and an update processing (program reading means) of the flash memory (1-2); a RAM (1-4) in which the CPU (1-1) temporarily stores data during calculation processing as a working memory; a clock (1-5); an image memory (1-7) in which image data used for a screen display on the display device (2) is stored; an image processor (1-6) which takes out the image data stored in the image memory (1-7) based on a display output control signal from the CPU (1-1) to perform image processing on the image data and outputs it to the display device (2); a voice processor (1-8) which performs processing of converting a voice output control signal form the CPU (1-1) into an analog signal and outputting it to the voice output device (3), and processing of converting the inputted analog signal from the voice input device (4) into a digital voice input signal; an input device I/F unit (1-9) which receives input contents by the input device (5); a various input I/F unit (1-10) for receiving information from detectors for detecting various status; a communication I/F unit (1-11) which exchanges information with other devices; and an external storage device control unit (1-12) for controlling the external storage device (10) which reads data and programs from an external storage medium (10-2) such as a CD-ROM, an IC-cards, a hard disk or the like and writes data into them.

The central processing system (1) performs route search processing, display guidance processing necessary for a route guidance, other necessary processing for the entire system, and agent processing (various communication between the agent and the driver, operation on behalf of the user; and processing performed autonomously according to the results of performing status judgment) in this embodiment.

The program which performs an update processing (a program reading means) may be stored in the flash memory (1-2), besides the ROM (1-3).

Including the programs in this embodiment, all programs performed by the CPU (1-1) may be stored in a CR-ROM or the like that is an external storage medium (10-2), or a part or the whole of these programs may be stored in the ROM (1-3) or the flash memory (1-2) on the main body side.

Data and programs stored in the external storage medium (10-2) are inputted as external signals to the central 'processing system (1) to be calculated and processed, thereby realizing various agent functions and navigation functions.

Further, the central processing system (1) of this embodiment forms a screen element transition object executing means for executing a screen element transition object (scenario) when it is judged that a start condition (autonomous start condition) is satisfied.

The display device (2) is configured to display a road map for route guidance and various image information by processing of the central processing system (1), and to display a screen element transition object (scenario) constituted by various. actions (moving images) of a character and parts of screen configuration.

For this display device (2), various types of display devices such as a liquid crystal display device, CRT, and the like are used.

Incidentally, this display device (2) may also be one having a function as the input device (5) such as a touch panel or the like.

The voice output device (3) is configured to output, by processing of the central processing system (1), guidance voices when performing route guidance in voice, a conversation by the agent for regular communication with the driver, and voices and sounds of asking questions for obtaining driver information.

The voice output device (3) is configured to output a start sound indicating to the user that inputting by voice is possible when starting voice recognition in voice recognizing processing (when starting acquisition of input data by the voice input device (4)) (start sound outputting means). In this embodiment, it is configured to output a "beep" sound or the like as the start sound, but it may be a buzzer sound or a chime sound.

The voice output device (3) is constituted by plural speakers arranged in the vehicle. These speakers may also be used as audio speakers.

As the voice input device (4), a dedicated microphone having directivity may be used for accurately collecting a voice of the driver. A digital voice input signal converted from an analog signal inputted from the voice input device (4) is used by the CPU (1-1) to perform voice recognition processing.

Target voices of the voice recognition includes, for example, an input voice of a destination or the like during navigation processing, a conversation of the driver with the agent (including responses by the driver) and the like, and the voice input device functions as a voice inputting means for inputting these voices.

Incidentally, instructions for voice recognition regarding whether it is a scene requiring the voice recognition or not are set in respective scene data. In scene data of a scene in which the instruction for voice recognition is set, a dictionary for recognizing target voices of the voice recognition is specified. In this instruction for voice recognition, the start of the voice recognition is set to any one of "start automatically," "do not start automatically," and "judged by the agent apparatus (on-vehicle apparatus)." When the instruction for voice recognition is "judged by the agent apparatus," the agent apparatus judges load on the driver from the state of a currently running road (curve, intersection, straight, and so on), a driving operation state (rapid acceleration, rapid brake, steering operation, and so on), and the like, and it does not start the voice recognition when the load is high, and it enables the input of a voice when the load is low after outputting a start sound.

Incidentally, a hands-free unit may be formed by the voice output device (3) and the voice input device (4) to enable a call using the communication control device (8) and the communication device (9). Further, the voice input device (4), voice processor (1-8), and the voice recognition processing may be combined to function as a conversation detecting means for detecting whether the driver is having a conversation with a passenger or not, or a status detecting means for detecting status of the driver using the voice produced by the driver.

The input device (5) is used for inputting a destination by a telephone number or be coordinates on a map when setting the destination, and for demanding (requesting) a route search or route guidance to the destination. Further, the input device (5) is used when the driver inputs driver information, or used as a trigger when starting using the agent function. Further, the input device (5) is also configured to function as one responding means for the driver to respond to the question or the like from the agent in communication with the agent by a function of the agent.

As the input device (5), various devices such as a touch panel (which functions as switches), a keyboard, a mouse, a light pen, a joystick, and the like may be used.

Further, as the input device (5), a remote controller using an infrared ray or the like and a receiving unit which receives various signals sent from the remote controller may be provided.

On the remote controller, besides a joystick for performing moving operation or the like of a cursor displayed on the screen, various keys such as menu selection keys (buttons), ten keys, or the like are arranged.

Further, voice recognition using the above-described voice input device (4) may be used instead of the input device.

The central processing system (1) may have a function that the CPU (1-1) detects whether the driver is performing input operation or not by using contents received from the input device (5) via the input device I/F unit (1-9), and/or a function using the voice recognition result in combination to detect operation status of various types of equipment (equipment operation status detecting means).

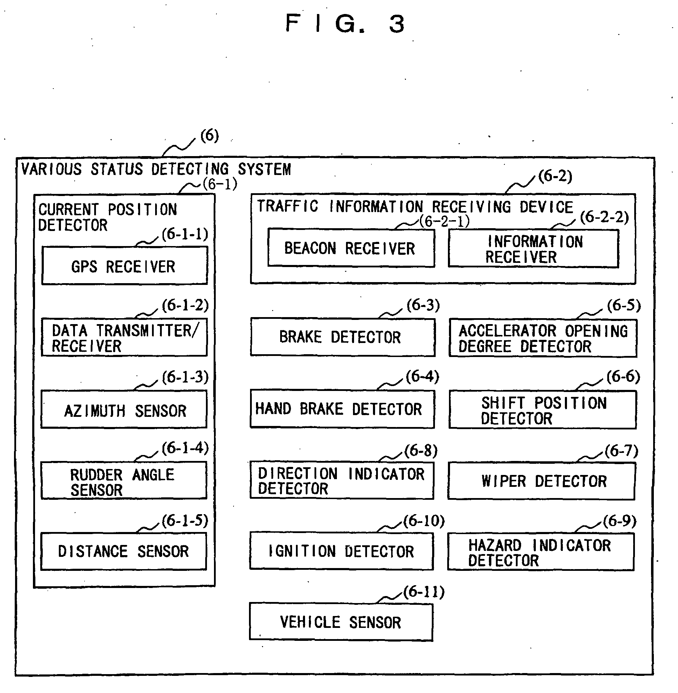

FIG. 3 is a block diagram representing a configuration of the various status detecting system (6).

The various status detecting system (6) has a current position detecting device (6-1), a traffic status information receiving device (6-2), a brake detector (6-3) for detecting status of driving operation or the like, a hand brake (parking brake) detector (6-4), an accelerator opening degree detector (6-5), an A/T shift position detector (6-6), a wiper detector (6-7), a direction indicator detector (6-8), a hazard indicator detector (6-9), and an ignition detector (6-10). A detecting means is formed by detecting various status and conditions by the above configuration.

Further, the various status detecting system (6) has a vehicle speed sensor (6-11) which detects the speed of a vehicle (vehicle information), and judges whether the vehicle is running or not by whether the vehicle speed detected by the vehicle speed sensor, is 0 (zero) or not, thereby forming a running judging means of the present invention.

The current position detecting device (6-1) is for detecting an absolute position (by longitude and latitude) of a vehicle by using a GPS (Global Positioning System) receiver (6-1-1) which measures a position of the vehicle using an artificial satellite, a data transmitter/receiver (6-1-2) which receives corrected signals of GPS, an azimuth sensor (6-1-3), a rudder angle sensor (6-1-4), a distance sensor (6-1-5), or the like.

The GPS receiver (6-1-1) is capable of independently measuring a position, but at a location where receiving by the GPS receiver (6-1-1) is not possible, the current position is detected by a dead reckoning using at least one of the azimuth sensor (6-1-3), the rudder angle sensor (6-1-4), and the distance sensor (6-1-5). Further, the data transmitter/receiver (6-1-2) may be used to receive corrected signals of GPS to increase the precision of detecting position by the GPS receiving device (6-1-1).

As the azimuth sensor (6-1-3), for example, a geomagnetism sensor which obtains the azimuth of a vehicle by detecting geomagnetism, a gyro such as a gas rate gyro which obtains the azimuth of a vehicle by detecting a rotating angular velocity of a vehicle and integrating the angular velocity, an optic fiber gyro or the like, and wheel sensors arranged respectively on the right and left sides of a vehicle to detect a rotation of a vehicle from the difference of output pulses (difference in moved distance) of the wheel sensors to thereby calculate an amount of displacement of the azimuth or the like are used.

The rudder sensor (6-1-4) detects an angle a of a steering using an optical rotation sensor attached on the rotation portion of the steering, a rotation resistance volume or the like.

As the distance sensor (6-1-5), for example, various types of methods are used such as detecting and counting the number of rotations of wheels, detecting acceleration degree and integrating it twice, or the like.

The distance sensor (6-1-5) and the rudder angle sensor (6-1-4) also function as a driving operation status detecting means.

The traffic status information receiving device (6-2) is for detecting congestion status or the like of a road.

For the traffic information receiving device (6-2), a beacon receiver (6-2-1) which receives information from beacons arranged on a road, a receiver (6-2-2) which receives information using an FM radio wave, or the like are used, and traffic congestion information, traffic restriction information, and the like are received using these devices from a traffic information center.

Further, the beacon receiver (6-2-1) may be used as a current position detecting means in combination with the current position detecting device (6-1).

The brake detector (6-3) detects whether the foot brake is in pressed state or not.

The hand brake (parking brake) detector (6-4) detects whether the driver is operating the hand brake or not, and detects a state of the hand brake (whether it is ON or OFF).

The accelerator opening degree detector (6-5) detects how much the driver presses the accelerator pedal.

The shift position detector (6-6) detects whether the driver is operating the A/T shift lever or not and a shift lever position.

The wiper detector (6-7) detects whether the driver is using the wiper or not.

The direction indicator detector (6-8) detects whether the driver is operating the directional indicator or not and whether the direction indicator is blinking or not.

The hazard indicator detector (6-9) detects whether the driver is in a state using the hazard indicator or not.

The ignition detector (6-10) detects whether the ignition switch is ON or not.

The distance sensor (6-1-5) may be used for detecting the vehicle speed.

The various status detecting system (6) has, as device operation status detecting means besides the above detectors, a light detecting sensor which detects operation status of lights such as head lights, a room light, and the like, a seat belt detecting sensor which detects attaching/detaching operation of a seat belt by the driver, and other sensors.

As shown in FIG. 2, the GPS receiver (6-1-1), the data transmitter/receiver (6-1-2), and the traffic information receiving device (6-2) are connected to the communication device I/F unit (1-11), and the others are connected to the various input I/F unit (1-10).

The communication device I/F unit (1-11) is also configured such that the communication control device (8) can be connected thereto. The communication control device (8) is configured such that the communication device (9) (a cellular phone or the like constituted by various radio communication devices) can be connected thereto.

Using these devices, it is possible to perform a phone call via a telephone line and communication, for example, with an information providing station which provides karaoke data used for an on-line karaoke in a vehicle.

It is possible to perform communication via the communication device (9) and the communication control device (8) with, besides the information providing station which provides karaoke data, an information base station which provides traffic information and an information providing station which provides scenario data used for agent processing.

In this embodiment, the central processing system (1) is configured to receive an e-mail to which a scenario is attached via the communication control device (8).

Further, in the central processing system (1), browser software for displaying homepages on the internet can be incorporated to be processed by the CPU (1-1), and data including scenarios can be downloaded from homepages via the communication control device (8).

Incidentally, as the communication control device (8), one integrated with the communication device (9) may be used.

Further, the central processing system (I) is configured to receive operation status of other on-vehicle apparatuses (7) by performing communication inside a vehicle through the communication I/F unit (1-11), and to perform various controls of on-vehicle apparatuses. For example, the central processing system (1) receives information whether or not the driver is operating various switches or the 'like of an air conditioner from the air conditioning device that is one of the various on-vehicle apparatuses (7), and controls the air conditioning device such as heightening/lowering a set temperature. Further, the central processing system (1) is configured to receive information from an audio device whether the driver is operating audio equipment such as radio, CD player, cassette player, or the like and whether the audio equipment is outputting a voice or not, and to perform control of the audio device such as increasing/decreasing the output volume.

The external storage device (10) has an external storage medium drive unit (10-1) and an external storage medium (10-2). The external storage device (10) is configured to perform, by an instruction from the CPU (1-1), reading of data and programs from the external storage medium (10-2) and writing data and programs to the external storage medium (10-2), under control of the external storage device control unit (1-12).

As the external storage medium (10-2), for example, various storage mediums are used such as a flexible disk, a hard disk, a CD-ROM, a DVD-ROM, an optical disk, a magnetic tape, an IC-card, an optical card or the like, and a corresponding external storage medium drive device (10-1) is used for each of the used mediums.

In the system, a plurality of the external storage devices (10) may be included. An example is conceivable such that driver information data (10-2-3-6), which is collected individual information, and learned item data and response data (10-2-3-7) are configured by an IC card or a flexible disk that is easy to carry, and other data is configured by DVD-ROM. Accordingly, when driving another vehicle, data is read from the IC card in which the above-described data are stored and used, so that it becomes possible to communicate with the agent that is in a state of having learned status of responses from the driver in the past. In other words, it becomes possible to present, not an agent specific to a vehicle, but an agent which has the learned contents specific to the driver in the vehicle.

Further, when it is configured that scenario data + image data (10-2-3-4) used in a scenario are retained in a DVD-ROM for example, it is also possible to add a scenario using an IC card. Accordingly, addition of an original scenario specific to each user is possible.

Thus, by storing the screen element transition objects (scenario) and the start conditions of the screen element transition objects externally, a screen element transition storing means according to the present invention is formed, and by storing the screen configuration including character images and control contents executed with images of characters, a character storing means according to the present invention is formed.

The CPU (1-1) may be configured to store (install) programs (10-2-1), which realizes various agent functions and a navigation function, and agent data (10-2-3) and navigation data (10-2-2), which are used for calculation processing, from the DVD-ROM, the IC-card, or the like described in the above configuration examples into a different external storage device (for example, a hard disk device or the like) in order to read (load) a necessary program from the storage device into the flash memory (1-2) to be executed, or may be configured to read (load) necessary data for calculation processing from the storage device into the RAM (1-4) to be executed.

Next, configurations of programs executed by the CPU (1-1) including programs according to the present invention will be described.

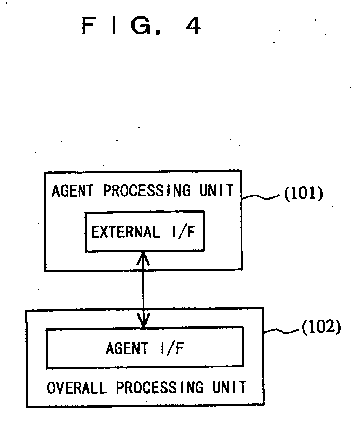

FIG. 4 is a diagram representing a relationship between an agent processing unit (101) and an overall processing unit (102), which are realized by executing programs on the CPU (1-1).

This embodiment has a configuration to realize a navigation device with agent functions by adding the agent processing unit (101) which realizes the agent functions to the overall processing unit (102) which realizes various navigation functions.

Each of the agent processing unit (101) and the overall processing unit (102) has an I/F unit for exchanging each other's processing data, and is configured to obtain each other's processing data.

For example, when the agent processing unit (101) obtains destination data, which the user desires to set, as a result of performing communication with the driver in accordance with the scenario data, the agent processing unit (101) supplies the data to the overall processing unit (102).

The overall processing unit (102) performs a route search according to the obtained destination data, and performs a route guidance based on created driving route data. In this route guidance processing, when performing guidance of changing course direction or the like by an image or a voice, it is possible to supply necessary data for the guidance from the overall processing unit (102) to the agent processing unit (101) so that the agent performs the guidance in accordance with scenario data that is a scenario of performing driving route guidance converted into data.

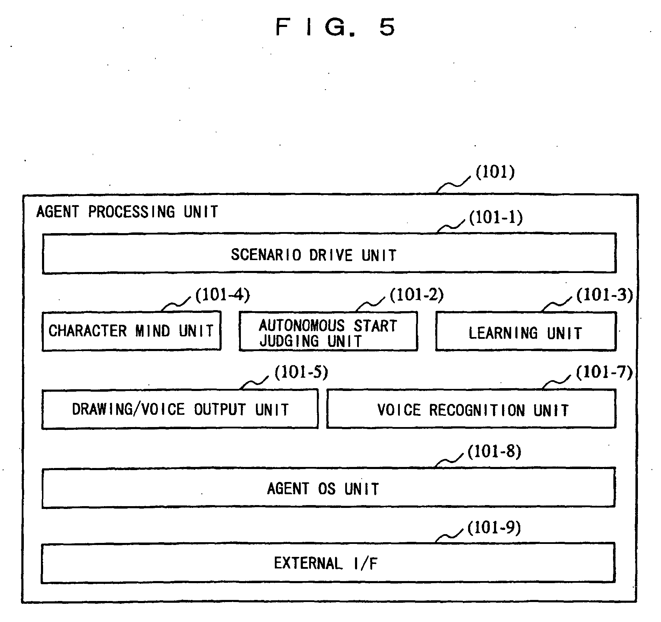

FIG. 5 is a diagram representing a configuration of the agent processing unit (101).

The agent processing unit (101) has a scenario drive unit (101-1), an autonomous start judging unit (101-2), a learning unit (101-3), a character mind unit (101-4), a drawing/voice output unit (101-5), a voice recognizing unit (101-7); an agent OS unit (101-8), and an external I/F unit (101-9).

The scenario drive unit (101-1) reads a scenario data (10-2-3-4) and gives instructions to each processing unit based on the scenario data using message communication or the like (to use functions provided by each processing unit). The scenario drive unit (101-1) performs main processing of the agent processing unit such as managing execution of scenarios and providing various agent functions to the driver.

The autonomous start judging unit (101-2) retains autonomous start condition data for respective scenarios included in the scenario data (10-2-3-4), and performs comparison and judgment of various conditions and various status such as a time, a location, a state, and so on by an autonomous start judging instruction which is issued periodically from the agent OS unit (101-8).

When the conditions match, the autonomous start judging unit (101-2) issues an instruction of requesting execution of a scenario to which the condition matches to the scenario drive unit (101-1).

Various status to be compared with the autonomous start conditions are obtained from the agent OS unit (101-8) and the learning unit (101-3).

Further, besides the periodical autonomous start judging instruction, when the change in status is large, the agent OS unit (101-8) issues an autonomous start judging instruction so that the autonomous start judging unit (101-2) performs the autonomous start judging processing. The cases when the change in status is large include, for example, a case that the driver performs destination setting, a case that the vehicle deviates from a driving guidance route provided by the navigation function, a case that the scenario data is added, a case that the scenario data is deleted, and the like.

In FIG. 5, the learning unit (101-3) stores items obtained from selection and response by the driver during communication with the agent (an execution result and an execution history) as driver information data (10-2-3-6) and as learned item data and response data (10-2-3-7). The learning unit (101-3) also obtains an end ID indicating how to end a scene when a scenario ends on a different scene and stores it as the response data (10-3-4-7). These obtained items are stored in the RAM (1-4), but they can be outputted to an IC-card or the like that is the external storage medium (10-2).

Further, the learning unit (101-3) obtains a change in status from the agent OS unit (101-8) to record information regarding driving operation. For example, it stores date and time of power-ON (ignition ON) for ten times in the past to judge various status such as boarding time zone, boarding frequency, or the like of the driver. The stored information is provided, for example, to the scenario drive unit (101-1) to be used for providing changes in a development of a scenario or used for comparison in the autonomous start judgment.

Further, the learning unit (101-3) in this 'embodiment also performs retention and reference of driver information, but that may be independent as a driver information unit.

The character mind unit (101-4) obtains the current status which is managed by the agent OS unit (101-8) and autonomously changes five parameters representing the mental state of a character based on mental model change condition data.

The mental state of the character is represented by respective parameters of vitality, friendliness, faith, confidence, and moral, and each parameter is represented by a value of, for example, 0 (zero) to 100. Regarding each of the parameters, vehicle status (status of a vehicle including status of the vehicle itself, a response or reply of the driver, whether a passenger exists or not, an opposite vehicle, and the like) are judged and learned, and the value of each of the stored parameters is changed according to the vehicle status at each moment. Each of the parameters changes in steps in such a manner that, for example, the value of the parameter of friendliness increases by one point when words of thanks from the driver are recognized.

Further, the five parameters representing the mental state of the character are also changed by an instruction from the scenario drive unit.

Moreover, the character mind unit (101-4) judges the mental state of the character by using the five parameters. The judged mental state is, for example, provided to the scenario drive unit (101-1) to be used for providing changes in a development of a scenario, or provided to the drawing/voice output unit (101-5) to provide changes in various actions (behaviors) of the character.

By an instruction from the scenario drive unit (101-1), the drawing/voice output unit (101-5) creates a control signal for displaying a screen constituted by parts such as selection buttons, a title, and so on. Further, by an instruction from the scenario drive unit (101-1), it also creates control signals for displaying various actions (behaviors) of the character, which correspond to the display state in scene data.

In this embodiment, these control signals are transmitted to the agent OS unit (101-8) and transmitted from the external I/F unit (101-9) to the overall processing unit (102), and then transmitted through a processing unit, which is located in the overall processing unit (102) and gives instructions to the image processor, to the image processor (1-6) to be image-processed and displayed on the displayed device (2). However, without passing these signals through the overall processing unit (102), a processing unit for giving instructions to the image processor may be provided in the agent OS unit (101-8).

The drawing/voice output unit (101-5) also creates a control signal by an instruction from the scenario drive unit (101-1) for outputting words when the agent communicates with the driver. Further, it also creates a control signal by an instruction from the scenario drive unit (101-1) for outputting various effective sounds.

In this embodiment, these signals are transmitted to the agent O/S unit (101-8) and transmitted from the external I/F unit (101-9) to the overall processing unit (102), and then transmitted through a processing unit, which is located in the overall processing unit (102) and gives instructions to the voice processor, to the voice processor (1-8) where these voice output control signals are converted into analog signals and outputted to the voice output device (3). However, without passing these signals through the overall processing unit (102), a processing unit for giving instructions to the voice processor may be provided in the agent OS unit (101-8).

Incidentally, the drawing/voice output unit (101-5) in this embodiment has an action drawing function and a voice output function of the character in each scene, but a drawing unit (drawing function unit) and a voice output unit (voice output function unit) may be configured separately.

By an instruction from the scenario drive unit (101-1), the voice recognizing unit (101-7) issues a control signal for instructing a voice recognition processing unit in the overall processing unit (102) to create a voice recognition dictionary. Further, by an instruction from the scenario drive unit (101-1), the voice recognizing unit (101-7) also issues a control signal for starting/stopping the voice recognition processing.

In this embodiment, these control signals are transmitted to the agent OS unit (101-8) and transmitted from the external I/F unit (101-9) to the voice recognition processing unit in the overall processing unit (102).

This voice recognition processing unit transmits instructions for starting and stopping the voice recognition processing to the voice processor (1-8), and the voice processor (1-8) performs processing of converting an analog signal inputted from the voice input device (4) into a digital voice input signal.

When the voice input signal is inputted, the voice recognition processing unit obtains the digital voice input signal, performs recognition processing based on this signal, and transmits a result thereof to the voice recognizing unit (101-7) in reverse flow of the aforementioned path. The voice recognizing unit (101-7) notifies the voice recognition result to the scenario drive unit (101-1).

By the foregoing configuration, a voice recognizing means for recognizing a voice is formed.

The agent OS unit (101-8) obtains changes in status such as a time, a location, various inputs, and so on (including addition of scenario) to manage the current status and notifies the changes in status as necessary to each processing unit by message communication. The changes in status are supplied from the overall processing unit (102) through the external I/F unit (101-9) or obtained by making an inquiry.

The obtained information thereof are detection results and the like by the various status detecting system (6) taken in by the various input I/F unit (1-10) and the communication I/F unit (1-11) and written in the RAM (1-4). Also, the contents inputted using the input device (5) are supplied from the overall processing unit (102) through the external I/F unit (101-9) and notified to each processing unit as necessary by message communication.

Further, the agent OS unit (101-8) also has other various libraries to perform providing the message communication for exchanging data between each processing unit, providing the current time, managing memory to provide necessary memory for each processing unit when performing processing, providing reading and writing functions of data from the external storage medium, and so on.

Further, the agent OS unit (101-8) performs processing regarding time to function as a timer to notify the passage of a particular time. Specifically, the agent OS unit (101-8) functions as a time counting means for counting a timer setting time that is set in each scene of a scenario. The start of counting time and the timer setting time to be counted are notified from the scenario drive unit (101-1), and when the timer setting time passes, the agent OS unit (101-8) notifies the passing of the setting time to the scenario drive unit (101-1).

The agent OS unit (101-8) is configured to periodically issue an autonomous start judging instruction to the autonomous start judging unit (101-2). This periodical autonomous start judging instruction is issued at every predetermined time. The predetermined time is preferred to be as short as possible within a range that the autonomous start judging processing, which is periodically processed by the periodically issued autonomous start judging instruction; does not affect other processing of the entire central processing system (1), which is set to a five-second period in this embodiment. This predetermined time may be arbitrarily changeable by the user by operation using the input device (5).

Further, the agent OS unit (101-8) is also configured to periodically issue the autonomous start judging instruction to the autonomous start judging unit (101-2) when the change in status is judged to be large. The cases when the change in status is large include, for example, a case that the driver performs destination setting, a case that the vehicle deviates from a guidance route, a case that the scenario data is added, a case that the scenario data is deleted, and so on, and applicable items thereof are defined in advance and stored in the RAM (1-4) or the like.

Further, the agent OS unit (101-8) periodically (by a five-second period for example) confirms, by a status judgment function using the vehicle speed. sensor (6-11), whether the vehicle is in a running state (vehicle speed v ≠ 0) or in a stopped state (vehicle speed v = 0), and when the vehicle is changed from the stopped state to the running state (when a previous judgment is 0 (zero) km/h and a present judgment is not 0 (zero) km/h), the agent OS unit (101-8) notifies the start of running to the scenario drive unit (101-1) by a message.

The external I/F unit (101-9) is an' interface between the agent processing unit (101) and the overall processing unit (102) (in the overall processing unit, there exists an agent I/F unit that corresponds to the external I/F unit). The external I/F unit (101-9) obtains various information such as navigation information used in an agent processing, and controls navigation by transmitting control signals from the agent processing unit to the overall processing unit.

A processing unit to give instructions to other processors and I/F units may be provided in the agent processing unit in order to give instructions and obtain information directly, such as a drawing instruction to the image processor (1-6), a voice output instruction to the voice processor (1-8), an acquisition of input information from the input device I/F unit (1-9) and so on, which are normally performed by notifying the overall processing unit (102) trough the external I/F unit (101-9).

The overall processing unit (102) in FIG. 4 is constituted by, although not shown, a map drawing unit, a route search unit, a route guidance unit, a current position calculation unit, an application unit including a destination setting operation control unit and the like and performing output signal processing of navigation, and an OS unit having programs and the like for performing display output control necessary, for displaying a map and guiding a route and voice output control necessary for voice guidance and the like.

Further, in this overall processing unit (102), there also exists a voice recognition processing unit which performs voice recognition and a processing unit which converts text data into voice data. When adding a browser function or an e-mail function, a relevant processing unit is added to this overall processing unit (102).

Alternatively, the agent processing unit (101) may be configured to have a browser function and an e-mail function.

Further, in this embodiment, an enhanced function for executing an agent processing is added to the overall processing unit (102). As this enhanced function, for example, there exists a means to detect the type of a currently running road (an expressway, national highway, or the like) from the current position and road data included in navigation data, a means to detect the curve status of a currently running road (before a curve, end of a curve), and so on.

Next, the data structure (including programs) stored in the external storage medium (10-2) will be described.

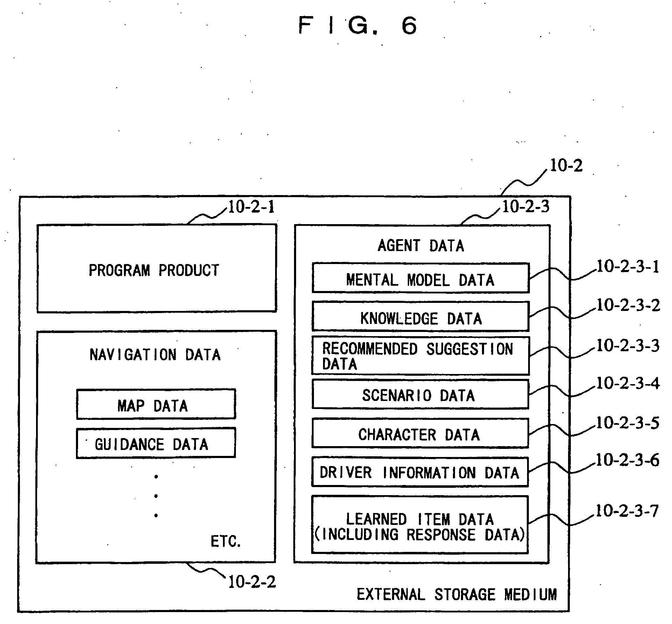

FIG. 6 is a diagram schematically representing information recorded in an external storage medium (10-2).

In the external storage medium (10-2), there are stored a program (10-2-1) which realizes various agent functions and navigation functions in this embodiment, and agent data (10-2-3) and navigation data (10-2-2) as various necessary data thereof.

The navigation data (10-2-2) is constituted by various data necessary for map depiction, route search, route guidance, operation of setting destination, and so on. For example, it is constituted by files of data such as map data (a road map, a residence map, a building shape map, and the like), intersection data, node data, road data, picture data, registered point data, destination point data, guidance road data, detailed destination data, destination reading data, telephone number data, address data, and other data necessary for route guidance, and all data necessary for the navigation device are stored. Further, communication area data and the like are also stored as necessary.

Drawing map data is drawing map data to be drawn on the display device (2). In this drawing map data, map data is stored as a story map in which, for example, from the top most story, Japan, Kanto area, Tokyo, Kanda, and so on are stored in respective stories. Respective map codes are attached on map data in respective stories.

The intersection data is constituted by intersection numbers identifying each intersection, intersection names, coordinates of intersections (longitude and latitudes), numbers of roads for which the intersections are the start point and/or the end point, existence of traffic signals, and so on.

The node data is constituted by information of latitudes and longitudes specifying coordinates of respective points on each road, and so on. Specifically, this data is related to one point on a road, and a point which connects between nodes is called an arc, and a road is represented by connecting respective spaces between plural rows of nodes by arcs. The road data is constituted by road numbers to identify each road, intersections numbers which are start points or end points, numbers of roads having the same start point or end point, widths of roads, prohibition information such as "do not enter" and so on, picture numbers of picture data which is described below, and so on.

In the picture data, pictures of characteristic scenes and the like, which can be seen from each intersection or when running straight, exist in a form of digital, analog, or negative film corresponding to the picture numbers therein.

In the communication area data, there exists communication area data for displaying on the display device (2) a communicative area in which a cellular phone, which is the communication device (9) used in a vehicle by being connected to the communication control device (8) or by wireless, can communicate from inside of the vehicle and for using the communicative area when searching a route. The communication area data exists for each type of cellular phone.

The agent data (10-2-3) is constituted by mental model data (10-2-3-1), recommended suggestion data (10-2-3-3), knowledge data (10-2-3-2), scenario data (10-2-3-4), character data (10-2-3-5), driver information data (10-2-3-6), and learned item data and response data (10-2-3-7).

The mental model data (10-2-3-1) is constituted by five parameters which represents the mental state of a character (friendliness, faith, confidence, moral, and vitality) and mental model changing condition data. In the mental model changing condition data, conditions of increasing/decreasing indexes of the aforementioned respective parameters, parameters to be changed, and degrees of changes are described. According to this table, each of the parameters increases/decreases to represent the mental state of a character.

The recommended suggestion data (10-2-3-3) is used for suggesting a restaurant or the like as recommended information to the driver. This recommended suggestion data (10-2-3-3) is constituted by restaurant names, reading data, genre data of restaurants, atmosphere data, price data, point data, and so on, and a recommended restaurant is searched based on the driver information data (10-2-3-6) and the knowledge data (10-2-3-2) to be suggested to the driver. Besides restaurants, there exist tourist attractions, rest facilities, and so on.

The knowledge data (10-2-3-2) is converted data of tendencies of preference according to age and sex based on statistic data, selection tendencies according to a situation and existence of a passenger, selection tendencies including special products specific to locations, and selection tendencies according to a season and a time. In the knowledge data, there exist various selection tendencies such as a selection tendency of restaurant, selection tendency of tourist attraction, selection tendency of rest facility, and the like.

In the scenario data (10-2-3-4), actions and question contents of the agent according to status when the agent communicates with the driver, conditions describing in what kind of status should the agent autonomously provide information, execution conditions while running defining how to handle execution of scenarios in relation to a running state of a vehicle, and the like are defined.

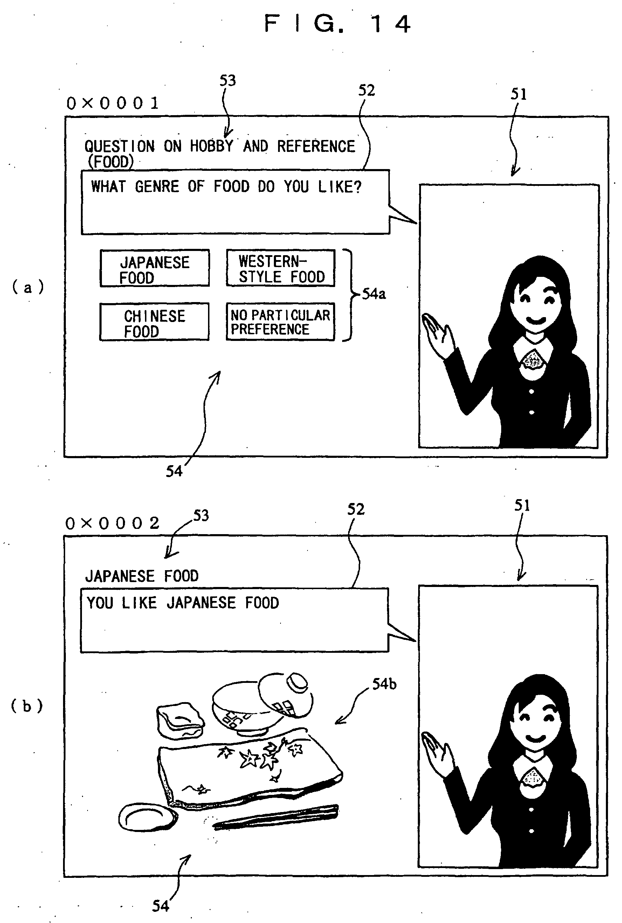

In the scenario data (10-2-3-4), image data displayed separately from the character (image data to be shown on a scene display screen 54 (refer to FIG. 14) which will be described later) is also stored.

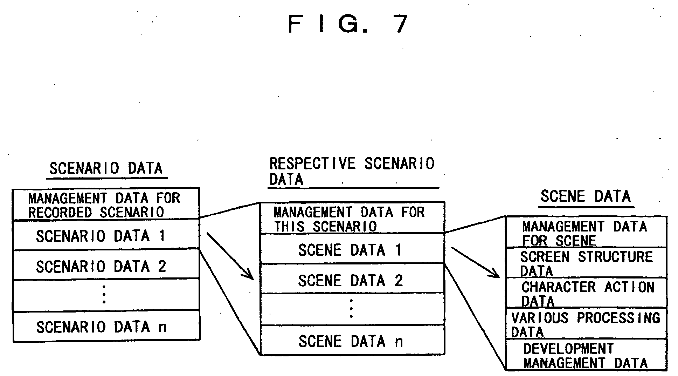

FIG. 7 is a view representing the structure of actual device format scenario data.

The scenario data (10-2-3-4) is constituted by plural scenarios, data for managing the scenarios, and data indicating contents of respective scenarios.

In the management data of recorded scenario, there are described information such as an expiration date, a created date, a creator and the like of the scenario data, data for overall management of respective scenarios recorded in the scenario data (scenario number, scenario name, order of precedence (priority)), autonomous start condition data for scenarios recorded in scenario files, and scenario list data of scenarios, which can be started manually by the driver using the input device (5) or the like, among the scenarios recorded in the scenario files.

The data indicating contents of respective scenarios is constituted by management data for managing respective scenarios and scene data indicating contents of respective scenes which constitutes the scenarios.

In the data for managing respective scenarios, there are described information regarding a scenario, text information for creating a voice recognition dictionary used in this scenario, and data for overall management of respective scene data constituting the scenario.

Further, in the data for managing respective scenarios, the execution conditions while running (use permission setting) are defined. Each of the execution conditions while running is defined to be either one of inexecutable while running or restrictively executable while running.

The scenario which is set to be inexecutable while running can be executed only when the vehicle is stopped, and is not executed while the vehicle is running. Therefore, when the vehicle starts running in the middle of communication executed by this scenario (while the vehicle is stopped), the executed scenario is interrupted.

On the other hand, the scenario which is set to be restrictively executable while running starts execution even while the vehicle is running. Also, when the vehicle starts running in the middle of the scenario, this scenario continues without being interrupted. However, while the vehicle is running, among respective items of a scene which. is displayed while the vehicle is stopped, any item (item which constitutes a part of the scene) set as restricted item of restrictive execution while running is restricted from being displayed on the screen (not displayed).

As the restricted item which is restricted from being displayed on the scene screen while the vehicle is running, there are an item permanently hidden while running which is always hidden while running and an item selectively hidden while running. The item permanently hidden while running is an item for which the user cannot select to display or not to display, and the item selectively hidden while running is an item that may be selected as an item permitted to be displayed but is selected by the user to be hidden. However, both of them are not distinguished as restricted item in the scenario data.

As the item permanently hidden while running, a detail operation item, which needs to be operated in detail on the screen by the driver such as a list box with buttons, slider bar, or the like is applicable for example. Further, as the item selectively hidden while running, a screen confirmation item, which needed to be confirmed on the screen by the driver such as a title, a selection button, a word balloon of character words and the like, and a simple operation item on which the driver performs simple operation on the screen and the like are applicable.

Incidentally, all items which needs operation on the screen (simple operation items and detail operation items) may be set as the item permanently hidden. Thus, when the vehicle is judged to be running, at least a part of screen elements is restricted from execution (not displayed) as compared to the screen elements when the vehicle is not running (stopped), thereby forming an execution restricting means according to the present invention.

The scene data is constituted by data for managing scenes, screen structure data, character action data, various processing data, and development management data.

In the data for managing scenes, information related to the scenes and data for managing respective data sections belonging to the scene' data is described.

In the screen structure data, data of respective parts (sizes, display positions, and the like) of the screen structure to be displayed on the display device (2) in this scene is described.

In the character action data, instruction data for actions performed by a character in this scene and instruction data related to the contents of conversation are described. In the instruction data for actions, instruction data is described for either one of two types of instructing directly by an expression means for each character by scenario data and instructing by a state that is desired to be expressed by the character.

In the various processing data, information for controlling external equipment (to perform processing) in the scene, information for controlling navigation, instruction for executing other scenarios, timer setting information, information for changing a parameter of a mental model which expresses a character mind, and so on are described.

The timer setting information includes a timer setting time and a timer setting condition as information for setting time of a scene. The timer setting condition is a condition which defines whether the timer should be set or not according to the state of a vehicle, and in this embodiment, there exist respective cases of (a) always set while both running and stopped, (b) set only while running, (c) set only while stopped, and (d) do not set the timer at any time (the timer setting time is not defined in this case).

The external equipment is each equipment or the like connected to the communication I/F unit (1-11) such as a communication control device. The contents of control include making a call to a specific telephone number, cutting off a call, and the like.

As control contents of navigation, there exist, for example, setting a point as the destination and the like.

As the instruction for changing a parameter of a mental model, there exist decreasing the friendliness by one point, and the like.

In the development management data, there is described information such as whether the scenario should end or not, what is the next scene to be developed, whether no development is made alternatively, and so on, when some kind of event occurs in this scene.

The event described here represents some kind of defined action for developing the scene to the next. For example, there exist ending of words of a character, passing of a set time, selecting some kind of answer by the driver regarding contents of questions asked in this scene (for example, answering "yes" to a "yes" or "no" question), and the like.

In addition to this event, the development may be changed according to a result of learning. For example, such an event that the driver selects "yes" to a question and the total number of times of use is less than ten times may be used.

Besides the learned result, a date and time, a mind state of the character using a mental model, the driver information, and the like may be used to change the development.

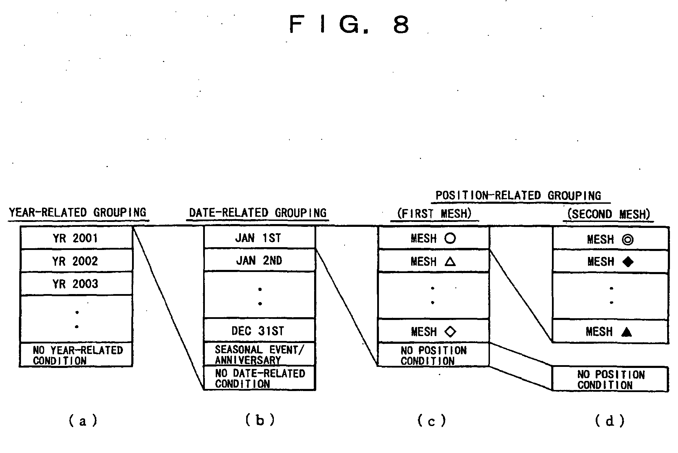

FIG. 8 is a view schematically representing the structure of autonomous start condition data stored in management data of a recorded scenario.

As shown in FIG. 8, the autonomous start conditions are grouped by predetermined individual conditions of year, date (month and date), and position.

In this embodiment, as the top most grouping, year-related conditions are grouped into the top most group.

As shown in FIG. 8(a), as the year-related group, the autonomous start conditions are grouped (categorized) into the autonomous start condition restricted to each year (executed only in the year) and the autonomous start condition having no year-related condition (can be executed with no relation to year).

Then, among each of the groups according to year-related conditions, in a date (month and date) related group as a second group shown in FIG. 8(b), the autonomous start conditions are grouped (categorized) into the autonomous start condition restricted to each date (executed only in the date) and the autonomous start condition having no date-related condition (can be executed with no relation to date). In the date-related group, similarly to the year, the autonomous start condition having no date-related condition is grouped without having a date condition. When an autonomous start condition has no year condition and has a date condition, it is grouped by the relevant date into the group havingno year condition. An autonomous start condition having none of year, month and date condition is grouped into the group having no date condition in the group having no year condition.

In the group having no date condition, there exists a group that is not a direct date designation such as a seasonal event/anniversary. This is a date related condition which may be an anniversary registered by the driver, so that, on the agent apparatus side, this condition is handled equally to the case having no condition and registered to be judged with no relation to the date.

Then, in the groups of the date condition in the year condition, further, there are position-related groups.

Specifically, in position (first mesh) related groups as third groups in the date related groups as shown in FIG. 8(a), the autonomous start conditions are grouped into autonomous start conditions having no position-related condition (a group having no position condition and can be executed anywhere with no relation to position) and autonomous start conditions restricted to respective first meshes (executed only in the relevant mesh).

Then, in the position-related first mesh groups, the autonomous start conditions having a position-related condition (conditions belonging to any one of the first meshes) are divided into second mesh groups whose areas are more finely divided.

Specifically, among the first mesh groups, as shown in FIG. 8(d), in position (second mesh) related groups as the lowest (fourth) groups, the autonomous start conditions are grouped into autonomous start conditions restricted to respective second meshes (executed only in the relevant mesh).

The autonomous start conditions having no position-related condition are grouped into one group as they are in the fourth groups since there is no further grouping beyond the group having no position-condition in the first mesh.

The thus grouped autonomous start conditions are indexed (given identification codes) so that the autonomous start condition judging unit (101-2) can quickly obtain them, and stored in a scenario data having an actual device format (the format handled in the agent apparatus (NAV format)).

Specifically, each of the autonomous start conditions has an index (identification code) which represents a relevant group.

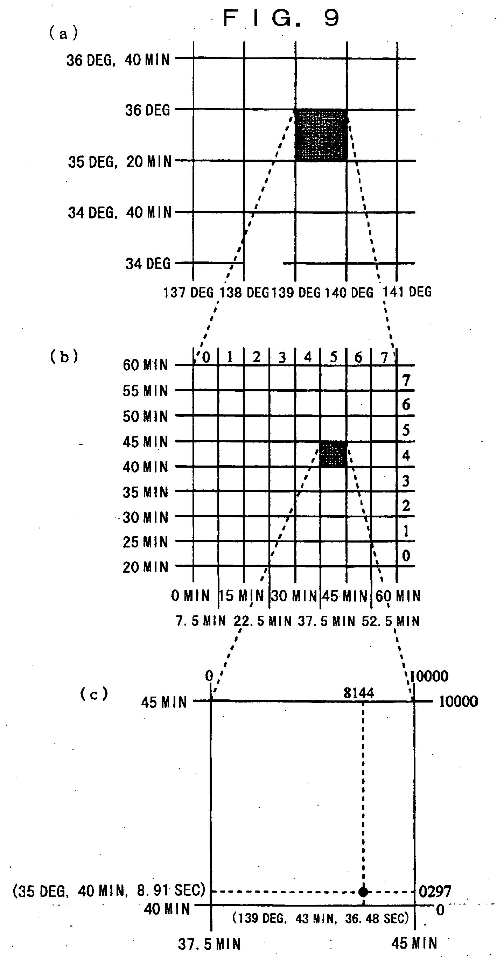

FIG. 9 is a view representing normalization of position coordinates by the first mesh and the second mesh.

Here, for example, how the position of coordinates X = (35 degrees, 40 minutes, and 8.91 seconds north latitude and 139 degrees, 43 minutes, and 36.48 seconds east longitude) is represented on coordinates that are normalized by the second mesh will be described.

First, a first mesh code is calculated by obtaining that on which mesh among the first meshes shown in FIG. 9(a) the coordinate X positions.

Now, it is obtained that the point of the coordinate X of 35 degrees, 40 minutes, and 8.91 seconds north latitude and 139 degrees, 43 minutes, and 36.48 seconds east longitude is included in a first mesh whose lower left point is (latitude, longitude) = (35 degrees 20 minutes, 139 degrees).

The first mesh code in the latitude direction is obtained by multiplying the lower left value by 3/2. Therefore, the first mesh code in the latitude direction = 35 degrees 20 minutes x (3/2) = (35 + 1/3) x (3/2) = 53.

Further, the first mesh code in the longitude direction is obtained by subtracting 100 from the lower left value.

Therefore, the first mesh code in the longitude direction = 139 - 100 = 39. From these first mesh 'codes in the latitude and longitude directions, the first mesh code of the coordinate X becomes 5339.

Subsequently, the second mesh code is calculated. As shown in FIG. 9(b), the respective first mesh codes are divided into 64 second meshes of 8 in the latitude direction and 8 in the longitude direction, and the both latitude and longitude directions are assigned values of 0 to 7 from the least value.

Therefore, the point of the position X is included in the second mesh of latitude direction: 4, longitude direction: 5, so that the second mesh code becomes 45.

From the above calculation, the position of the coordinate X = (35 degrees, 40 minutes, and 8.91 seconds north latitude and 139 degrees, 43 minutes, and 36.48 seconds east longitude) is obtained by combining the first mesh code and the second mesh code, which is 5339-45.

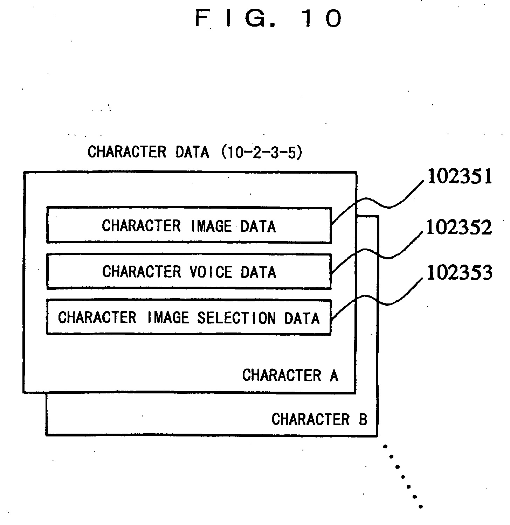

FIG. 10 is a view schematically representing contents of character data.

In the character data (10-2-3-5), data of plural characters are stored, which can be selected on the input device (5) or the like according to the preference of the user.

The character data (10-2-3-5) has character image data 102351, character voice data 102352, and character image selection data 102353 for each of characters A, B, and so on.

In the character image data 102351, still images expressing states of characters, moving images (animations) expressing actions, and the like to be displayed in each scene designated by scenarios are stored. For example, a moving image of bowing, a moving image of nodding, a moving image of raising the right hand and the like of characters are stored.

Image codes are assigned on these respective still images and moving images.

The character image data 102351 functions as an image storing means.

Characters used as the character image data 102351 (appearances of the agent) are not necessarily have an appearance in human (male, female) forms. For example, the characters may have an appearance of an animal itself such as an octopus, a chick, a dog, a cat, a frog, a mouse and so on as a non-human type agent, an appearance of an animal designed (illustrated) in a humanly form, and further an appearance of a robot, an appearance of a floor lamp or a tree, an appearances of a specific character, and so on.

Further, the age of an agent is not necessarily fixed. As a learning function of an agent, the agent may first have an appearance of a child and may grow to change its appearance over time (changes to an appearance of adult and further to an appearance of elderly person).

In the character voice data 102352, there is stored voice data for an agent to perform conversation or the like with the driver according to a scene of a selected scenario. In the voice data of conversation by an agent, there is also stored voice data for the agent to ask questions for collecting driver information. For example, "hello," "nice to meet you," "see you" and the like are stored.

Voice codes are assigned on these respective voices.

The character image selection data 102353 is a conversion table on which image data expressing the expressing method (action) of each character for each of display states is assigned.

The scenario data (10-2-3-4) defines the contents of each scene by commonized display states which do not depend on the type of a character.

Accordingly, the character image selection data 102353 is a conversion table for converting the display states of commonly expressed scenes into image data for displaying action contents for the character selected by the user, and functions as a part of the image selecting means.

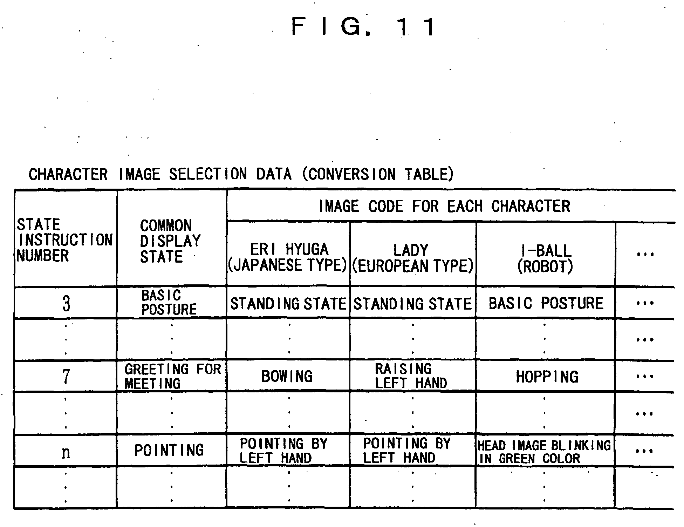

FIG. 11 is a view schematically representing contents of the character image selection data 102353.

In FIG. 11, state instruction numbers defined in each' scene data, corresponding standard display states, and action contents for each character are shown, but in the actual character image selection data 102353, the state instruction numbers and image codes for displaying the action contents corresponding to the state instruction numbers are stored for each character. The image codes assigned on respective still images and moving images in the character image data 102351 are associated with the state instruction numbers.

By using the conversion table shown in FIG. 11, common action instructions (specification of display states) becomes possible even when an action for the same state desired to be expressed is different on each character.

As shown in FIG. 11, for example, in the case of a Japanese character, Eri Hyuga, an instruction of "greeting for meeting" is defined as "bowing," and an instruction of "listening" is defined as "positioning the right hand behind the right ear."

On the other hand, in the case of a western lady, the instruction of "greeting for meeting" is defined as "raising the right hand to the side of the face," and in the case of a robot, i-ball, the instruction of "greeting for meeting" is defined as "moving a laser scan up and down on the main screen on the head."

Thus, in the agent apparatus, it is possible to make the character perform a different action corresponding to the selected character for the same scenario by changing the selection of the character.

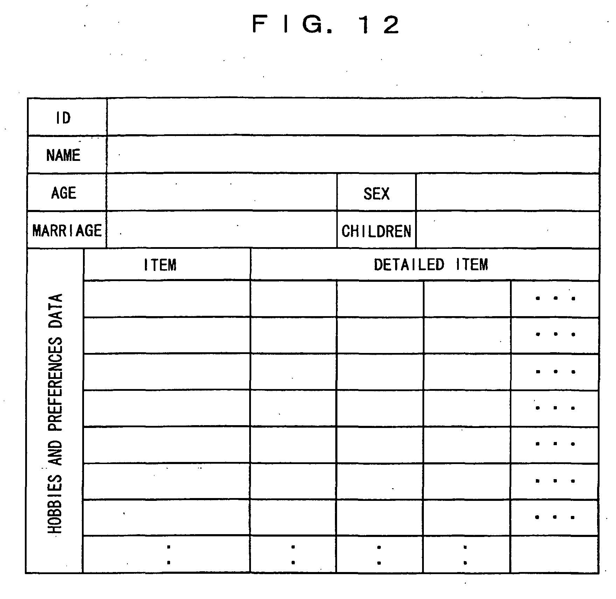

FIG. 12 is a view schematically representing driver information data.

The driver information data (10-2-3-6) is information regarding the driver and used for adjusting the communication of the agent to the user's desire, hobby, and preference.

In the driver information data (10-2-3-6), driver basic data such as ID (identification information) of the driver for storing information separately for each driver, name, age, sex, marriage (married or unmarried), whether having a child/children, the number of children, age(s) of the child/children, and so on as well as hobby and preference data are stored.

The hobby and preference data is constituted by major items such as sports, food and drink, traveling and so on, and detailed items included in these concepts of the major items. For example, in a major item, sports, there are stored data such as whether to like baseball or not, whether to like soccer or not, whether to like golf or not, and so on.

In this embodiment, each of the driver information is given a priority, and the agent is configured to ask a question to the driver in order of the highness of the priority among driver information that is not stored yet. The driver basic data has the higher priority than the hobby and preference data.

When there are plural drivers who drive the vehicle, the driver information data (10-2-3-6) is created for each driver. Then, the driver is identified in order to use the relevant driver information.

Identification of the driver is performed, for example, when the power is turned on, a common agent for all drivers appears and makes an inquiry of the driver, and the driver is identified from the answer thereof. The inquiry of the driver is carried out by displaying selection buttons of inputted driver name and the like on the display device and outputting a prompt sound for making the selection. When "other" is selected, a new user registration screen is displayed.

Incidentally, at lease one of driver specific data such as a body weight, a fixed position (forward/backward positions, angle of the back rest) of a driver seat (seat), an angle of a rearview mirror, a height of a sight line, digitalized data of a facial portrait, a characteristic parameter of a voice, an ID card, and the like may be stored in the driver information data (10-2-3-6), and the user may be identified using these data.

The learned item data and response data (10-2-3-7) in FIG. 6 is for storing results of learning of the agent from the selection and response of the driver in communication with the agent.

Therefore, the learned item data and response data (10-2-3-7) are configured to be stored and updated (from learning) for each driver.

For example, previous selection results, date and time of previous use, the total number of times of use, and the like are stored as use status of the scenario.

According to the learning contents, in a scenario in which a greeting is performed every time the navigation power is turned on for example, the agent responds to the driver, "we have met just a few minutes ago" when it is within five minutes from the previous usage. In reverse, when it has been more than one month, the agent responds to the driver "long time no see."

Further, there is also stored, for example, an answer (including a response as "no answer") as a result of asking that which baseball team is the user a fan of According to the result of the question, a response may differ such as asking again that which baseball team is the user a fan of or having conversation about the baseball team when a specific baseball team is already stored.

As a method for judging the response as no answer, in this embodiment, it is judged that there is no answer when a timer notification is performed (a set time passes) without receiving a response within a timer set time.

The timer set time is defined in the timer setting information as scene data of scenario data.

Next, a scenario execution operation by the agent apparatus which is configured as above will be described.

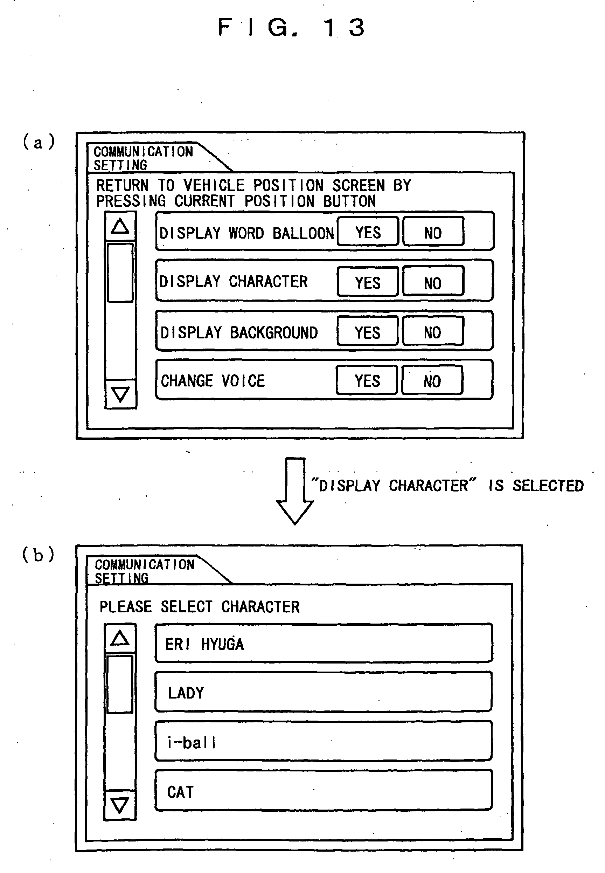

FIG. 13 is a view representing a selection screen for selecting a character of an agent to be presented in the vehicle room by the agent apparatus.

The agent apparatus 1 is configured such that a character can be selected from a communication setting screen (FIG. 13(a)) displayed on the display device (2).

In FIG. 13(a), when "yes" button for displaying characters is selected by the user, names of respective characters stored in the character data (10-2-3-5) are selectably displayed in a list (character selection means) as shown in FIG. 13(b). The user selects a preferable character from the displayed list. The selection is done by selecting a field of an applicable character name or inputting the applicable character name by voice.

When a character is selected, data which specifies the character selected by the user is transmitted from the overall processing unit (102) through the external I/F (101-9) to the agent apparatus 1 and managed by the agent OS unit (101-8).

Incidentally, when data of the character selected by the user does not exist, any one of the characters is set as a default value, which is "Eri Hyuga" in this embodiment, and a default character is managed by the agent OS unit (101-8) (setting means).

FIG. 14 is a view representing an example of scene screens displayed on the display device (2) based on scene data of a scenario.

The scene screen shown in FIG. 14 is a scene screen (scene number 0x0001) of a question scenario for asking a question to the driver to obtain a hobby and a preference (food), which is driver information data that is not inputted yet.

The scene screen is, as shown in FIG. 14, constituted by an agent display screen 51 for displaying an image of an agent (still images and moving images), a word balloon screen 52 for displaying characters corresponding to voices of the agent, a title screen 53, and a scene display screen 54 for displaying image data (an image of actual image data, response selection buttons, and the like) specific to respective scenes.

The agent displayed in the agent display screen 51 is a character selected by the user, or a default character.

When a question scenario of hobby and preference (food) is started, the scenario drive unit (101-1) in the agent processing unit (101) reads screen structure data of the scene, which is specified first by a scene header, from the scenario data + image (10-2-3-4) to display the scene screen on the display device (2), and outputs a question voice corresponding to a question sentence through the voice output device (3).

In the scene screen of the question scenario in FIG. 14(a), the word balloon screen 52 displays a message "What genre of food do you like?" Incidentally, a voice corresponding to the display of the word balloon screen 52 is outputted from the voice output device (3).

Further, the scene display screen 54 in the scene screen in FIG. 14(a) displays four answer selection buttons 54a, "Japanese Food," "Western-style Food," "Chinese Food," and "No Particular Preference."

After this question scene to the driver, plural scenes continue in branches according to the answer of the driver. Branching of each scene and specifying a subsequent scene are determined according to the answer of the driver according to development management data of each scene.

Specifically, when the driver selects the answer selection button "Japanese Food" on the scene screen (scene number 0x0001) in FIG. 14(a), the scenario drive unit (101-1) branches the scene according to the answer and displays a scene screen (b). In this scene screen (b), the selected "Japanese Food" is displayed on the title screen 53, and a message "You like Japanese food" is displayed in the message balloon. Incidentally, on the scene screen of Japanese food after branching, an actual image 54b of the Japanese food read from the scenario data is displayed on the scene display screen 54. By the scenario drive unit (101-1), the answer from the driver, "Japanese food" for example, is stored as driver information in the hobby and preference data of the driver information 307.

Thus, by continuously displaying and outputting respective scene images and voices defined by a scenario in sequence until the last scene, actions of an agent in one scenario are completed.

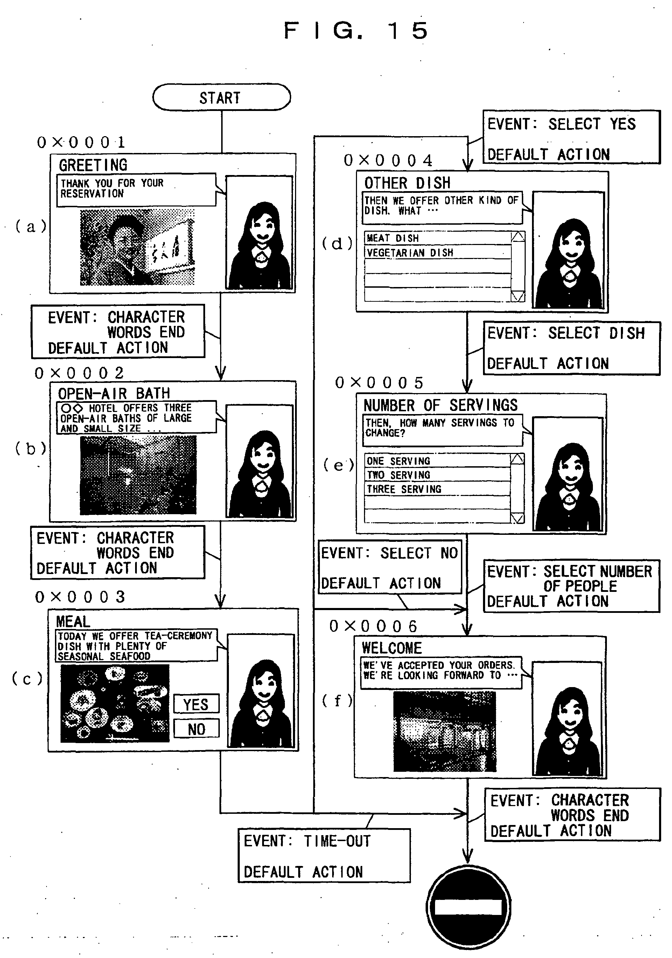

FIG. 15 is a view representing transition of scene screens in a guidance scenario transmitted by a hotel to an expected guest by respective scenes.

In the guidance scenario, scene screens (a) to (f) among plural scene screens are displayed, and depending on a selection result of the user on the scene screen (c), a next scene screen branches to 0x0004 and 0x0006. Further, although it is not branched in the example of FIG. 15, the scene screen (d) may be branched so as to display the dish according to the type of selected dish on the display screen 54.

Hereinafter, each action of the agent in a reservation scenario will be described according to FIG. 15.

All actions of the agent and screen displays described corresponding to respective scene screens below are displayed according to data, images and instructions stored in scenario data of an external scenario. Further, they are described as actions of the agent, but actual processing is performed by the scenario drive unit (101-1) of the agent processing unit (101).

When the reservation scenario is started,' a scene screen of number 0x0001 is displayed first on the display device (2). In this scene, the agent of the character managed in the agent OS unit (101-8) appears on the agent display device 51, and then bows and greets in a voice. Contents of the greeting in a voice are the same as the text displayed on the word balloon screen 52.

The greeting in a voice is performed by the agent on behalf of the hotel. However, a picture image of the landlady of the hotel is displayed on the scene display screen 54 to express that it is greeting from the hotel. The picture of the landlady is an image received and added as a part of the external scenario and stored as actual picture data in the scenario data (10-2-3-4).

The instructions for actions of the agent are in accordance with instructions stored in the character action instruction data.

When the greeting by the agent finishes, the scenario proceeds to the next scene 0x002.

In the next scene 0x0002, an image of an open-air bath is displayed on the scene display screen 54. The agent then points to the picture of the open-air bath and explains that the open-air bath is the specialty (sales point) of the hotel in a voice and by display on the word balloon screen 52.

When speech of the agent finishes, the scenario proceeds to the next scene 0x0003, and an image of a today's menu (an image of a tea ceremony dish) is displayed on the scene display screen 54. The agent then explains the dish and asks whether to choose the menu or not.

Here, it is assumed that a timer setting time and a timer setting condition "only set while running" are set in the scene data of the scene 0x0003. In this case, on the condition that the vehicle is running, counting time by the timer starts when the scene starts. Whether the vehicle is running or not is judged with the vehicle speed sensor (6-11) or the distance sensor (6-1-5) in such a manner that the vehicle is stopped when the vehicle speed v = 0 is detected, and the vehicle is running when the vehicle speed v ≠ 0 is detected.

Then, when the user selects "yes" as the answer for the question whether to choose the displayed dish or not, the scenario branches to the scene 0x0004, and when the user selects "no," the scenario branches to the scene 0x0006.

On the other hand, if the timer notification is performed (the setting time passes) without the user answering in a voice or responding by selecting the selection buttons displayed on the screen, the scenario is ended according to the transition condition for the time of timer notification defined in the scene data of the scene 0x0003.

Thus, by judging that selection of no answer is made when there is no answer from the user, the scenario proceeds to the next scene (an end in the example of FIG. 15) having the transition condition of no answer, so that the communication with the personified character can be made closer to the communication between humans.

In the scene 0x0004, the selectable list of dishes other than the tea ceremony dish is displayed on the scene display screen 54. The agent points to the list on the scene display screen 54 and asks which menu to choose.

When the user selects any one of the menus, the scenario proceeds to the scene 0x0005.

In the scene 0x0005, a list of changing the number of persons for the tea ceremony dish is displayed on the scene display screen 54, and the agent points to the list and asks a question on the number of persons.

When the user selects any one from the list, the scenario proceeds to the scene 0x0006.

In the scene 0x0006, an exterior appearance picture image of the hotel is displayed on the scene display screen 54, and the agent bows and greets.

Then, the agent sends the results of the selection by the user, which are the results of answers regarding the meal in the case of the guidance scenario in FIG. 15, via the communication control unit 24 to the third person (the hotel) who is the sender of the external scenario that is being executed.

Thus, when it is desired to obtain information regarding the user, a creator of an external scenario sets up scenes of questioning to obtain the desired information in a scenario, and creates the scenario to be configured to send answers by an e-mail. Incidentally, when sending answers is necessary, an e-mail address of the creator is included in the scenario data.

When speech of the agent finishes in a last scene (the scene 0x0006 in FIG. 15), the scenario is ended.

As described above, the scenario drive unit (101-1) sequentially displays and outputs respective scene images and voices defined in a scenario until a last scene.

When the started scenario ends, the scenario drive unit (101-1) performs judgment of start conditions regarding execution of other scenarios.

Next, a judgment processing whether to autonomously start such various scenarios executed by the scenario drive unit (101-1) will be described.

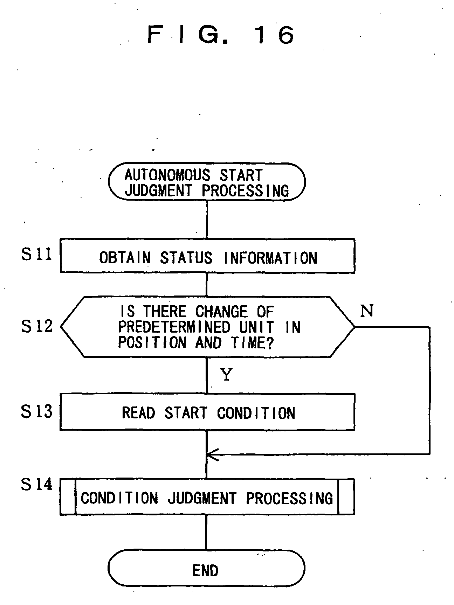

FIG. 16 is a flow chart representing an autonomous start judgment processing of a scenario by an autonomous start judgment unit.

In this autonomous start judgment processing, for reducing the load of the device, the autonomous start judgment unit (101-2) performs processing of receiving information regarding a position and a date, reading (extracting means) a start condition that is approximate to the received position and date from the external storage device (10) retaining the scenario data, and temporarily storing the start condition in the RAM (1-4).

Specifically, the autonomous start judgment unit (101-2) obtains status information such as a current position, time, and the like from the agent OS unit (101-8) through the agent I/F, in order to obtain the current status information (Step 11).

Then, the autonomous start judgment unit (101-2) judges whether or not there is a change of a predetermined unit in the obtained status information such as the current position, time, and the like (Step 12).

As a result of judgment, when it is judged that there is a change of a predetermined unit (Step 12; Y), the autonomous start judgment unit (101-2) reads an autonomous start condition having a condition that is approximate to the condition such as the position, time, and the like from the external storage device (10) and temporarily stores it in the RAM (1-4) (Step 13). Here, the approximate condition means that, in the case of the position, the position information is included in a block in which the position defined in the autonomous start condition exists and in seven blocks adjoining the block thereof, with the whole range of map data being divided into square blocks having a predetermined unit, and as the approximate condition in the case of a date, the current day and the next day are applicable. The change of a predetermined unit in the case of the position is when the vehicle moves to another block, and as the change of a predetermined unit in the case of the date, a change of a date is applicable.

The autonomous start judgment unit (101-2) performs condition judgment processing of whether or not the read autonomous start condition is satisfied by the status information (Step 14).

Incidentally, when it is judged that there is no change of the predetermined unit (; N) by the judgment in Step 12, it is not necessary to change the start condition that is read in advance, so that the processing proceeds to Step 14.

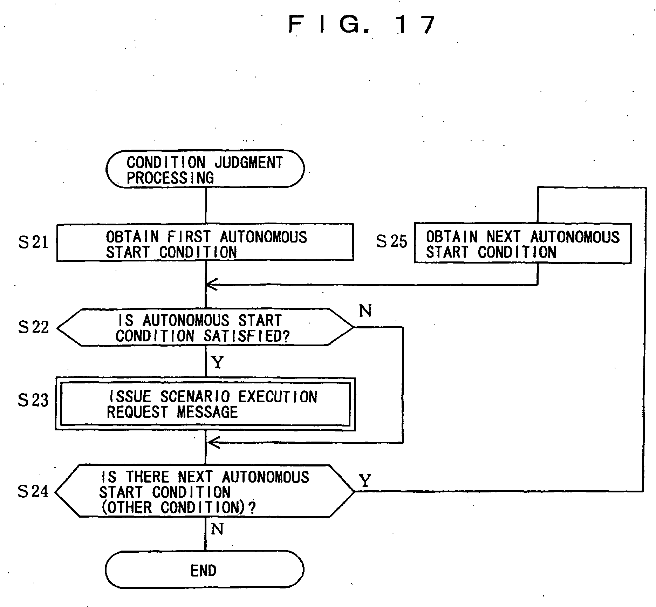

FIG. 17 is a flow chart representing processing contents of the condition judgment processing (Step 14).

The autonomous start judgment unit (101-2) obtains a first autonomous start condition from the RAM (1-4) (Step 21), and judges whether or not the states of various status information obtained in Step 12 satisfy the obtained autonomous start condition (Step 22).

When the autonomous start condition is satisfied (Step 22; Y), the autonomous start judgment unit (101-2) issues an execution request message of a scenario corresponding to the autonomous start condition to the scenario drive unit (101-1) (Step 23).

Next, the autonomous start judgment unit (101-2) judges whether a next autonomous start condition exists in the scenario data (10-2-3-4) (Step 24). When the next autonomous start condition does exist (; Y), the autonomous start judgment unit (101-2) obtains it (Step 25) and thereafter repeats each processing in Steps 22 to 25 until judgment on all the autonomous start conditions are completed.

In Step 24, when the next autonomous start condition does not exist (; N), the autonomous start judgment unit (101-2) ends the autonomous start judgment processing.

Next, scenario execution processing performed when the scenario drive unit (101-1) receives a scenario execution request from the autonomous start judgment unit (101-2) will be described. Incidentally, processing of the autonomous start judgment unit described below forms a condition judging means according to the present invention.

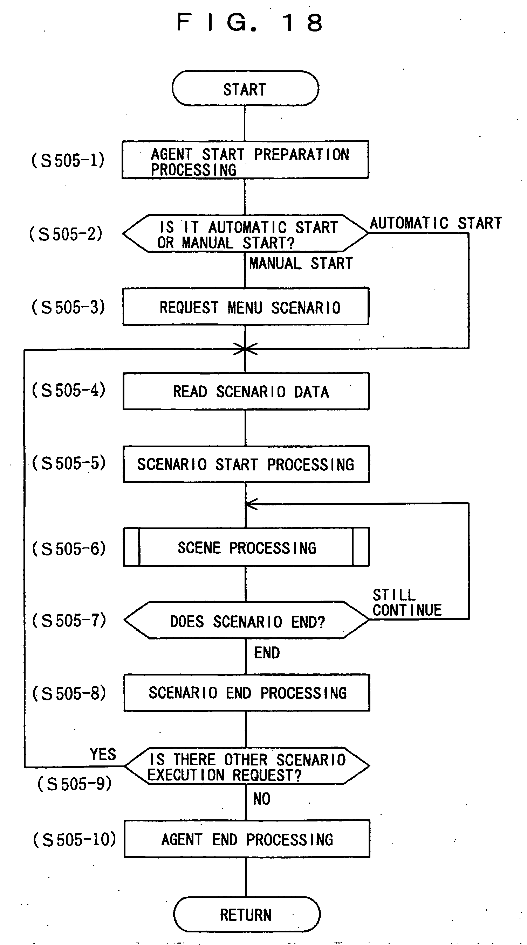

FIG. 18 is a flow chart representing a flow of the scenario execution processing. Incidentally, FIG. 18 represents a series of representative actions performed by each unit of the agent processing unit (101) and by the overall processing unit (102) when a scenario is executed, and each unit is configured to perform independent processing. In other words, the independent processing in each unit performed continuously forms the representative flow shown in FIG. 18.

Specifically, upon reception of a message, respective units of the agent processing unit (101) and the overall processing unit (102) perform processing on the message, and when the processing is completed, they wait for the next message.

Upon reception of a scenario execution request from the autonomous start judgment unit (101-2), the scenario drive unit (101-1) secures a work memory and performs agent start preparation processing by initialization (Step 505-1).

The scenario drive unit (101-1) then confirms whether the 'scenario execution request is a manual start or an autonomous start (Step 505-2). The manual start is a case that the user selects the start of a scenario from a menu on the display device (2), and the autonomous start is a case that the autonomous start condition of a scenario is satisfied.

When the execution request of the scenario is the manual start, request processing of a menu scenario is carried out (Step 505-3). Thereafter, the processing proceeds to the scenario data reading processing (Step 505-4).

On the other hand, when the execution request of the scenario is the autonomous start, there exists a scenario that is requested to be executed by satisfaction of an autonomous start condition, so that the processing proceeds straight to the scenario data reading processing (Step 505-4).

Next, the scenario drive unit (101-1) reads scenario data to be executed into the RAM (1-4) (Step 505-4). If plural scenarios as targets of execution exist when reading the scenario data (when the case that plural autonomous start conditions are satisfied, when a manual start request and an autonomous start overlap each other, or the like), the scenario drive unit (101-1) judges priorities defined in respective scenarios and reads the scenario data having the highest priority. When there are same priorities, the scenario drive unit (101-1) determines the priority according to the order of reception of the execution requests from the autonomous start judgment unit (101-2). The priority of a scenario is confirmed from management data of recorded scenarios in the scenario data (10-2-3-4).

When the reading of the scenario data is completed, the scenario drive unit (101-1) then performs scenario start processing (Step 505-5).

In the scenario start processing, the scenario drive unit (101-1) performs, first, initialization processing for starting the scenario.

Further, the scenario drive unit (101-1) performs scenario execution judgment processing.

Specifically, the scenario drive unit (101-1) obtains, first, the running state of the vehicle by making inquiry to the agent OS unit (101-8).

Upon reception of the inquiry, the agent OS unit (101-8) confirms by the vehicle speed sensor (6-11) whether the vehicle is running or stopped, and notifies the result to the scenario drive unit 101-1. The vehicle sensor (6-11) transmits detected vehicle speed information to the agent OS (101-8). The agent OS unit (101-8) judges that the vehicle is stopped when the vehicle speed v = 0 and judges that the vehicle is running when the vehicle speed v ≠ 0 based on the received vehicle speed information, and notifies the judgment result thereof to the scenario drive unit (101-1).

When the running state of the vehicle notified from the agent OS unit (101-8) is running, the scenario drive unit (101-1) confirms whether or not the execution condition while running is set to be inexecutable while running from management data of the scenario read in Step 505-4.

While the vehicle is running and the scenario is set to be inexecutable while running, the scenario drive unit (101-1) proceeds to scenario end processing (Step 505-8) without starting the scenario.

On the other hand, when the vehicle is stopped, and when the vehicle is running with the execution condition while running being set to be restrictively executable while running, the scenario drive unit (101-1) instructs the learning unit (101-3) to perform processing such as recording of starting time of the scenario, adding the number of times of use, and the like. Accordingly, the learning unit (101-3) performs recording and addition to the learning item data (10-2-3-7).

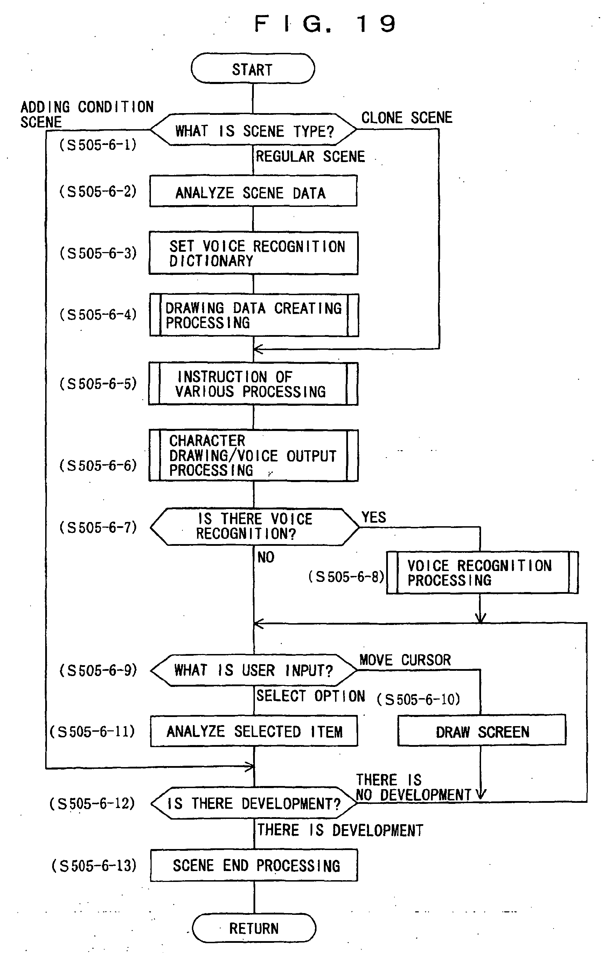

After the start learning instruction processing to the learning unit (101-3), the scenario drive unit (101-1) carries out scene processing of drawing and producing voices of the character according to the contents of scenes constituting the scenario (Step 505-6). Details of the scene processing will be described later with FIG. 19.

When the scene processing is completed, the scenario drive unit (101-1) confirms whether the scenario ends or not (Step 505-7).

When the scenario ends, the scenario drive unit (101-1) performs scenario end processing (505-8). In this scenario end processing, the learning unit (101-3) obtains the end ID indicating a manner of ending the scenario and stores it to the response data (10-2-3-7).

When the scenario does not end (the scenario still continues), the scenario drive unit (101-1) returns to Step (505-6) and repeats the scene processing of the next scenario, and of the next scenario, and so on until a scenario end point.

After the scenario end processing, the scenario drive unit (101-1) confirms whether or not there is another execution request of a scenario (Step 505-9), and when another execution request of a scenario exists, the scenario drive unit (101-1) returns to the scenario data reading processing (Step 505-4) to perform processing similarly.

On the other hand, when there is no other scenarios to execute, the scenario drive unit (101-1) executes the agent end processing (505-10). Specifically, the scenario drive unit (101-1) notifies the agent OS unit (101-8) that the processing of requesting execution of scenario is ended.

Thereafter, the screen displayed on the display device (2) returns to a regular navigation screen, but the subsequent processing is transferred to the overall processing unit (102) via the agent I/F.

Incidentally, as described above, each unit is processed independently, so that, although not being shown on the flow chart in FIG. 18, it is configured to accept, while executing a scenario, a scenario execution request for executing another scenario from one scenario.

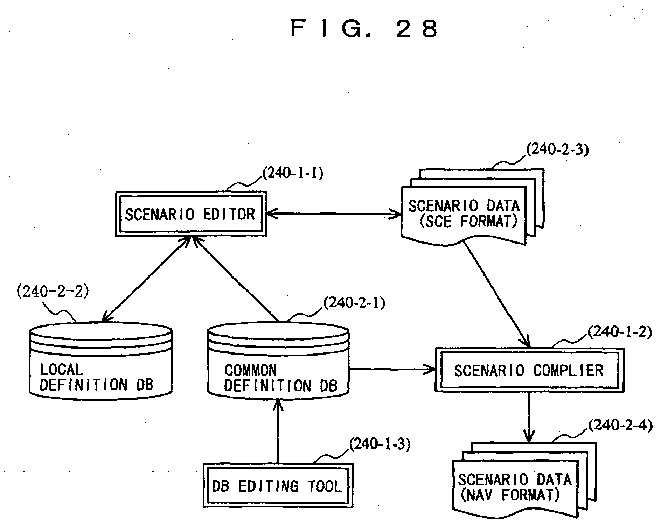

For example, as will be described later in FIG. 28, when a vehicle state changes from stopped state to running state during execution of a scenario in which the inexecutable while running is set as the execution condition while running, the scenario being executed is forcibly interrupted after end processing.

FIG. 19 is a flow chart representing a flow of the scene processing (Step 505-6).

In the scene processing, the scenario drive unit (101-1) confirms the type of a scene to be started (Step 505-6-1), and proceeds to scene data analysis processing (Step 505-6-2) when it is a regular scene, proceeds to processing of requesting various processing (Step 505-6-5) when it is a clone scene, and proceeds to development judgment processing (Step 505-6-12) when it is an adding condition scene.

Here, the clone scene is a case to display, according to the manner of ending of a scene n, the same screen as that of the original scene (the previously ended scene) n. An example is a scene of a case to output a voice to prompt input, with the same screen being kept, when there is no input within a setting time.

Further, the adding condition scene is a scene provided for proceeding a scenario to a specific scene to start and is set up before the relevant scene, and to perform condition judgment for screen transition (branching) with no screen display performed.

When the starting scene is a regular scene, the scenario drive unit (101-1) refers to the RAM (1-4) in which the scenario data read in Step 504 is stored and analyzes the screen structure to be displayed, operation instructions of a character, and the like of the data of a scene to be started (Step 505-6-2).

As a result of the analysis, when there exists a voice recognition dictionary, the scenario drive unit (101-1) notifies a request for setting (initialization) the voice recognition dictionary defined in the scene data to the voice recognition unit (101-7) (Step 505-6-3).

Next, as processing for requesting screen drawing to the drawing/voice output unit (101-5), the scenario drive unit (101-1) performs image data creating processing of a screen structure that determines respective parts of a screen to be drawn (505-6-4).

The screen data creating processing of a screen structure is for determining, according to the execution condition while running, whether or not to display respective parts of a screen structure on relevant positions, the respective parts excluding items related to a character such as the agent display screen 51, the word balloon screen 52 on which words of a character are displayed, and the like among scene screens shown in FIG. 14 for example.

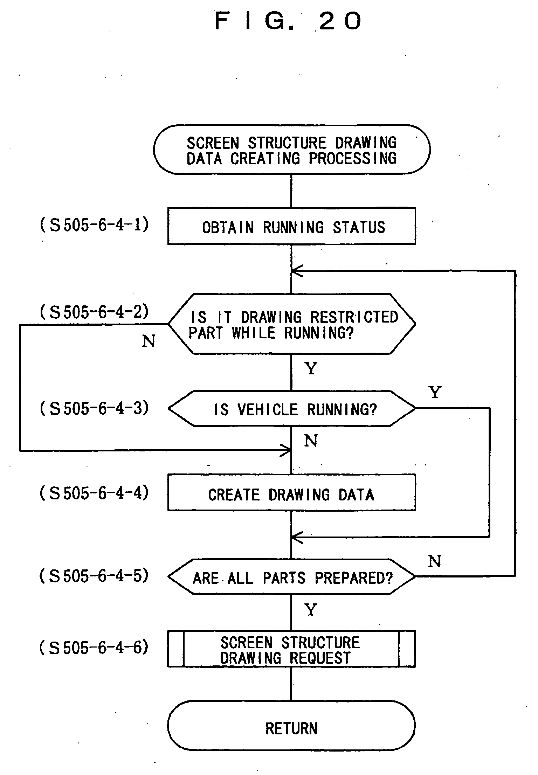

FIG. 20 is a flow chart representing processing operation of the image data creating processing of a screen structure.

The scenario drive unit (101-1) obtains a running status from the agent OS unit (101-8) (Step 505-6-4-1). Specifically, the scenario drive unit (101-1) makes inquiry of the running state to the agent OS unit (101-8). Upon. reception of the inquiry, the agent OS unit (101-8) confirms whether the vehicle is running (vehicle speed v ≠ 0) or stopped (vehicle speed v = 0) based on the vehicle speed information from the vehicle speed sensor (6-11) and notifies the result to the scenario drive unit 101-1.

Next, from the management data of the scenario read in Step 505-4, the scenario drive unit (101-1) creates drawing data of the screen structure, which is constituted by parts that can be displayed while the vehicle is running, regarding respective parts of the screen structure (parts excluding items related to a character) among respective parts (items) constituting the scene that is currently being processed (Step 505-6-4-2 to Step 505-6-4-4).

In other words, regarding the parts (items) of respective screen structures constituting the scene screen, the scenario drive unit (101-1) judges whether the parts are the items selectively hidden while running from the management data of the scenario data (Step 505-6-4-2).

When the parts of the screen structure are the items selectively hidden while running (which are not permitted to be displayed while running) (Step 505-6-4-2; Y), the scenario drive unit (101-1) judges whether the vehicle is running or not from the obtained running status (Step 505-6-4-3).

When the vehicle is running, the scenario drive unit (101-1) does not create drawing data regarding the parts of the screen structure which are the items selectively hidden while running, and judges whether any other part of the screen structure which is not being judged yet exists or not (Step 505-6-4-5).

On the other hand, when the parts of the screen structure are not the items selectively hidden while running, and when the parts of the screen structure are the items selectively hidden while running but the vehicle is stopped, the scenario drive unit (101-1) creates drawing data with the parts of this screen structure (Step 505-6-4-4) and judges whether other parts of the screen structure not being judged yet exist or not (Step 505-6-4-5).

The preparation of all the parts of the screen structure is not completed when any other part of the screen structure not being judged exists (Step 505-6-4-5; N), so that the scenario drive unit (101-1) returns to the Step 505-6-4-2 to perform judgment regarding the next part of the image screen.

On the other hand, the preparation of all the parts of the screen structure is completed (Step 505-6-4-5; Y) when any other part of the screen structure does not exist, so that the scenario drive unit (101-1) notifies the created drawing data of the screen structure of the scene to the drawing/voice processing unit (101-5) and requests drawing (Step 505-6-4-6), and returns to the scene processing in FIG. 19.

After reception of the drawing request of the screen structure from the scenario drive unit, the drawing/voice output processing unit performs drawing processing of the screen structure, and when the drawing processing of the screen structure is completed, it notifies the completion to the scenario drive unit (101-1).

Next, the scenario drive unit (101-1) performs processing of requesting various processing (processing for navigation, externally connected equipment and the like, processing of requesting time measurement (time counting) when a timer setting information is defined in scene data for a scene requiring an answer from the user, and the like), and requesting of creating and outputting image data other than the screen structure related to the character (FIG. 19, Step 505-6-5).

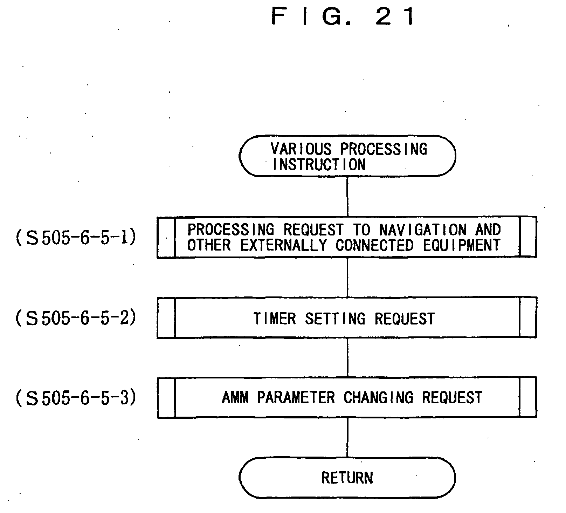

FIG. 21 is a flow chart exemplifying processing performed by the instruction of various processing (Step 505-6-5).

As shown in FIG. 21, in the instruction of various processing (Step 505-6-5), three processing are performed in order, which are a processing request to the navigation function (navi-function) and externally connected equipment (Step 505-6-5-1), a timer setting request processing (Step 505-6-5-2), and a changing request of an AMM parameter (Step 505-6-5-31).

The above-mentioned three items of various processing are carried out upon reception of a message of execution request notification of various processing. The message of execution request notification of various processing is issued, for example, when drawing of the screen is completed, or when a clone scene is executed (in the case of this embodiment).

As the processing request to the navigation (505-6-5-1) and external equipment, there exists a request of navigation processing to the overall processing unit (102) such as setting a specified point as a destination, a request of processing to externally connected equipment such as a request of increasing/decreasing the volume of audio equipment, and so on.

The timer setting request (Step 505-6-5-2) is for requesting timer setting to the agent OS unit (101-8), which will be described in detail later.

Finally, the AMM parameter changing request (Step 505-6-5-3) is a request to change the AMM parameter, and there exists a request such as increasing the friendliness by one point, which is one of the parameters, and so on.

Incidentally, in the explanation of FIG. 21, the case of processing the above-mentioned three items in sequence is described, but the respective items may be divided and made as triggers for each of them to perform processing (upon reception of a separate message).

Specifically, as described above, respective units of the agent processing unit (101) and the overall processing unit (102) are configured to perform independent processing respectively when a scenario is executed. Therefore, each processing of the three items may be performed separately and independently from each other.

For example, the change of AMM parameter may be performed upon reception of a notification indicating an end of a scene. Further, timer setting may be performed when the scenario drive unit (101-1) receives a voice output completion notification (in the case that completions of both image drawing and voice outputting are notified, notifications indicating the both) from the drawing/voice output unit (101-5).

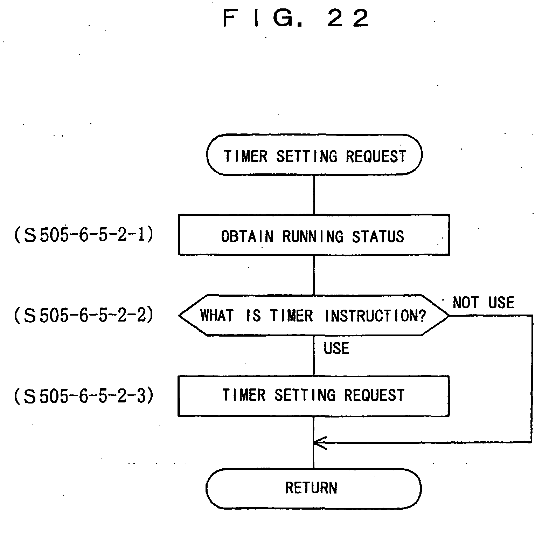

FIG. 22 is an example of a flow chart representing operation of timer setting request processing.

First, the scenario drive unit (101-1) makes inquiry to the agent OS unit (101-8) to obtain the running state of a vehicle (Step 505-6-5-2-1).

Upon reception of the inquiry, the agent OS unit (101-8) confirms by the vehicle speed sensor (6-11) whether the vehicle is running or stopped, and notifies the result to the scenario drive unit (101-1). The vehicle sensor (6-11) detects the vehicle speed, and the agent OS judges that, based on the received vehicle speed information, the vehicle is stopped when the vehicle speed v = 0, and judges that the vehicle is running when the vehicle speed v ≠ 0.

Next, the scenario drive unit (101-1) obtains a timer setting condition from the scene data, which is being executed, in the scenario read into the RAM (1-4) in Step 505-4, and judges whether the timer setting is necessary or not from the timer setting condition and the running state of the vehicle (Step 505-6-5-2-2).

The scenario drive unit (101-1) judges whether or not to perform the timer setting by the timer setting condition set in the scene data and by the running state (running or stopped). The timer setting condition is any one of (a) always set while both running and stopped, (b) set only while running, (c) set only while stopped, and (d) do not set a timer at any time.

Specifically, the scenario drive unit (101-1) judges not to use the timer setting and performs a return when the timer setting condition is (b) and the vehicle is stopped, when the timer setting condition is (c) and the vehicle is running, and when the timer setting condition is (d).

On the other hand, the scenario drive unit (101-1) judges to use the timer setting when the timer setting condition is (a), when the timer setting condition is (b) and the vehicle is running, and when the timer setting condition is (c) and the vehicle is stopped.

In this case, the scenario drive unit (101-1) performs the timer setting request by notifying the timer setting time to the agent OS unit (101-8) and performs a return (Step 505-6-5-2-3).

Upon reception of the timer setting request from the scenario drive unit (101-1), the agent OS unit (101-8) starts measuring the timer setting time to be notified.

When the timer setting time passes before the scenario drive unit (101-1) requests stopping, the agent OS unit (101-8) notifies the passing of the timer setting time to the scenario drive unit (101-1).

On the other hand, when the scenario drive unit (101-1) requests stopping before the timer notification (passing of the setting time), the agent OS unit (101-8) ends the time measurement.

Incidentally, in this embodiment, the case is described that the measurement of the timer setting time is started upon reception of the timer setting request from the scenario drive unit (101-1), but the agent OS unit (101-8) may be configured to perform only the setting preparation of the timer of the timer setting time and start the timer upon reception of the time counting start notification from the scenario drive unit (101-1).

In this case, the scenario drive unit (101-1) notifies the time counting start notification to the agent OS unit (101-8) when it receives the notification of character drawing/voice output processing completion (or a voice output completion notification which will be described later as a modification) from the drawing/voice output unit (1.01-5).

Thus, by starting counting of the timer after the voice output of a question is completed, the response time of the user is prevented from being shortened when the output of a question voice is long.

Further, the scenario drive unit (101-1) may be configured to perform the timer setting processing described in this embodiment after the character drawing/voice output processing (Step 505-6-6) and before Step 505-6-7.

In the instruction of various processing (FIG: 19, Step 505-6-5), the scenario drive unit (101-1) further creates drawing data related to the character (character drawing data) besides the drawing data of the screen configuration.

The creation of the character drawing data by the scenario drive unit (101-1) is performed similarly to the drawing data creating processing of a screen structure shown in FIG. 10 except a difference that whether the parts of a creating scenario are the parts of a screen structure or the parts related to a character. Further, when the character drawing data is created, voice data regarding voices of the character corresponding to words displayed on the word balloon screen 52 and effective sounds are also specified in the drawing data creation (corresponding to Step 505-6-6-4).

After the creation of the character drawing data, the scenario drive unit (101-1) requests drawing of the character by the created character drawing data to the drawing/voice output unit (101-5).

The drawing/voice output unit (101-5) performs the character drawing/voice output processing based on the scene data (Step 505-6-6; FIG. 19).

By the character drawing/voice output processing, scenes of the character bowing, pointing to a direction of right or left, and speaking to the user are developed. In these scenes, when the vehicle is stopped, all the items constituting the scene screen are displayed as exemplified in FIG. 14, and when the vehicle is running, the items constituting the structure of the scene screen are displayed with a part thereof being restricted according to the request contents of both the drawing request of the screen structure (Step 505-5-4-6) and the character drawing request (Step 505-6-5) from the scenario drive unit (101-1).

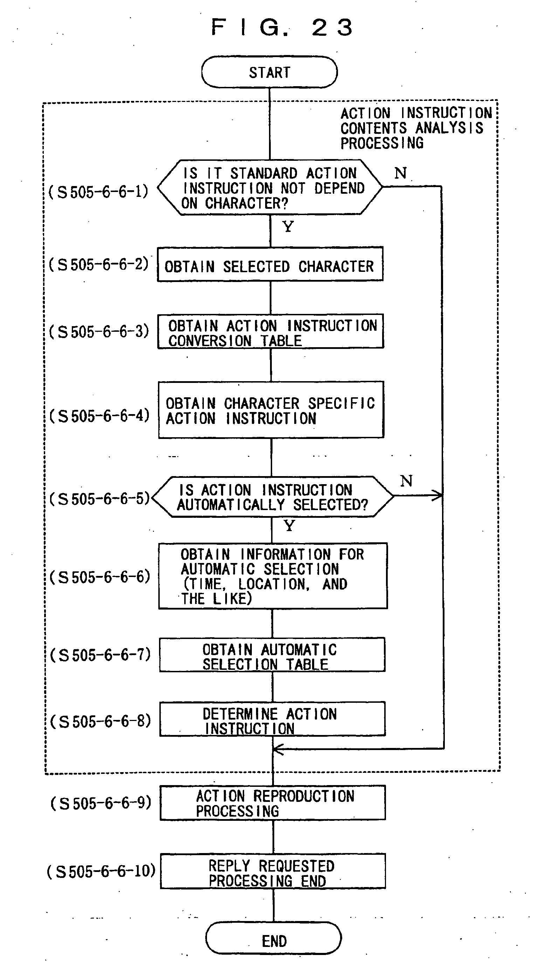

FIG. 23 is a flow chart representing the character drawing/voice output processing by the drawing/voice output unit (101-5).

Upon reception of a request of an action instruction of the character and the drawing data from the scenario drive unit (101-1), the drawing/voice output unit (101-5) performs processing in order of action instruction contents analysis processing (Step 505-6-6-1 to 505-6-6-8), action reproduction processing (Step 505-6-6-9), and a request completion reply (Step 505-6-6-10).

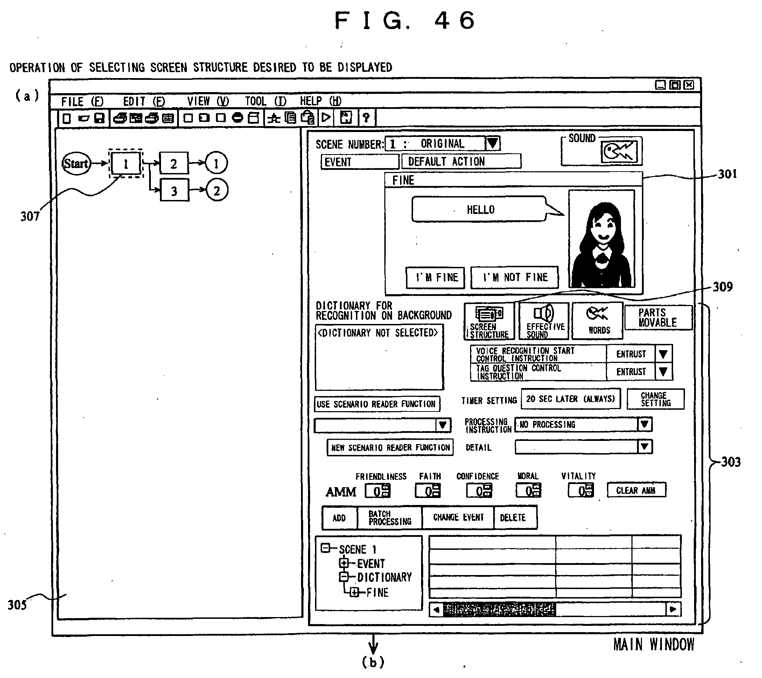

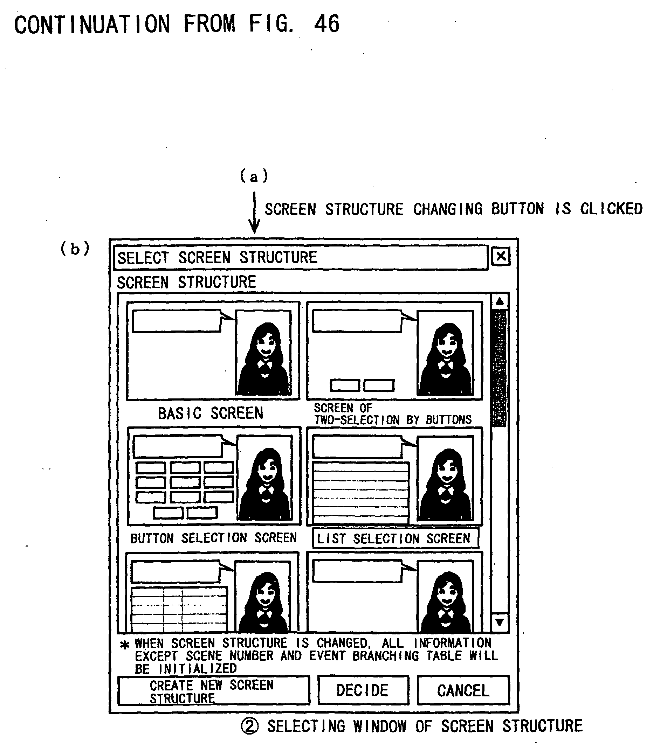

In the action instruction contents analysis processing, first, the drawing/voice output unit (101-5) judges whether or not the action instruction is a standard (common) action instruction that does not depend on the type of the character of the received drawing instruction contents (Step 505-6-6-1), and when the drawing instruction is instructed by an expression' manner specified to each character (direct instruction: refer to FIG. 46(b)), the drawing/voice output unit (101-5) proceeds to the action reproduction processing (Step 505-6-6-9).

When the drawing instruction has the standard display mode that does not depend of the character, the drawing/voice output unit (101-5) performs conversion of the instruction contents.

In the conversion, first, the type of the currently set character is obtained from the agent OS unit (101-8) (Step 505-6-6-2).

Next, the drawing/voice output unit (101-5) obtains the conversion table (the character image selection data) 102353 (refer to FIG. 11), in which a corresponding table of the standard action instruction (display state number) and the action instruction contents (image code) of each character is written, from the character data (10-2-3-5) in the external storage device (10).

Then, the drawing/voice output unit (101-5) obtains, based on the conversion table, the action instruction contents of the character performing the action, in other words, the image code of the character corresponding to the display state number of the scene data (Step 505-6-6-4).

When the obtained action instruction information is set to allow the system to automatically select the action instruction of the character (Step 505-6-6-5; Y), the drawing/voice output unit (101-5) further performs the following processing.

Specifically, the drawing/voice output unit (101-5) first obtains automatic action selection condition information such as a time, a location, driver information, an agent mental model, and the like from the agent OS unit (101-8) (Step 505-6-6-6).

Next, the drawing/voice output unit (101-5) obtains selection condition information of standard action instructions of time and the like and an automatic selection table in which the standard action instructions of characters are described from the agent data (10-2-3) in the external storage medium (10-2) (Step 505-6-6-7).

Then, the drawing/voice output unit (101-5) obtains the standard action instructions based on the selection condition information of standard action instructions of time and the like and the automatic action selection table. Based on the standard action instructions, reference is made to the conversion table 102353 obtained in Step 505-6-6-3 to obtain the action instruction content (image code), to thereby determine the action instruction (Step 505-6-6-8).

Next, the drawing/voice output unit (101-5) performs the action reproduction processing (Step 505-6-6-9).

Specifically, the drawing/voice output unit (101-5) obtains, based on the action instruction content (image code) of the character, image data from the character image data 102351 (refer to FIG. 10) of the selected character in the character data (10-2-3-5).

Further, when the action instruction request of the relevant character has a content to output the action of the character in synchronization with the voices of words of the character, voice data is obtained from the character voice data 102352 in the character data (10-2-3-5).

The image data obtained in the drawing/voice output unit (101-5) is transmitted to the agent OS unit (101-8) and transmitted from the external I/F unit (101-9) to the overall processing unit (102), and then transmitted through the processing unit, which is located in the overall processing unit (102) and gives instructions to the drawing processor (1-6), to the drawing processor (1-6) to be image-processed and displayed on the displayed device (2).

Further, the obtained voice data is transmitted to the agent O/S wnit (101-8) and transmitted from the external I/F unit (101-9) to the overall processing unit (102), and then transmitted through the processing unit, which is located in the overall processing unit (102) and gives instructions to the voice processor (1-8), to the voice processor (1-8) where this voice output control signals are converted into analog signals and outputted to the voice output device (3).

Next, after performing all the action processing of the character requested from the scenario drive unit (101-1), the drawing/voice output unit (101-5) notifies the completion of the character drawing/voice output processing of the requested scene to the scenario drive unit (101-1) (Step 505-6-6-10) and ends the processing.

Further, when the request contents are to output the voices of words of the character in synchronization, a completion of the character voice output processing is notified to the scenario drive unit (101-1) at the time when the output of all the voices is completed.

Incidentally, the drawing/voice output unit (101-5) may be configured to notify a drawing completion notification for notifying the completion of drawing of the character action and a voice output completion notification for notifying the completion of the voice output separately at the time when each processing is completed.

After the completion of the character drawing/voice output processing of a scene is notified from the drawing/voice output unit (101-5), the scenario drive unit (101-1) confirms whether the instruction regarding the voice recognition in the processed scene data is given or not (Step 505-6-7: FIG. 19). When the instruction is given, the scenario drive unit (101-1) proceeds to Step 505-6-9, and when the instruction is not given, the scenario drive unit (101-1) performs the voice recognition processing (Step 505-6-8).

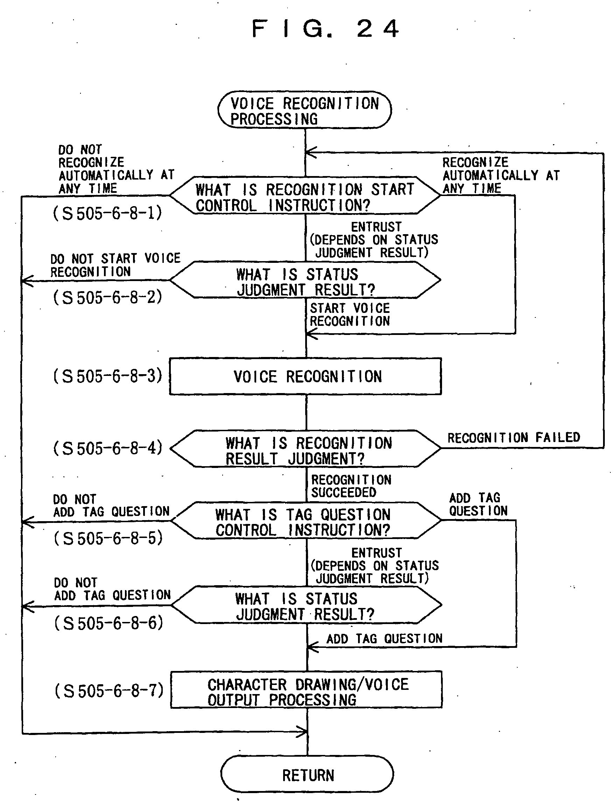

FIG. 24 is a flow chart representing processing operation of the voice recognition processing (Step 505-6-8).

After the character finishes speech (when the voice output completion of the character is notified from the drawing/voice output unit (101-5) to the scenario drive unit (101-1)), the scenario drive unit (101-1) confirms a recognition start control instruction (instruction of voice recognition) set in the scenario data (Step 505-6-8-1).

When the instruction of voice recognition is "do not start recognition automatically at any time" (do not start automatically), the scenario processing unit (101-1) performs a return (proceeds to Step 505-6-9 in FIG. 19) without performing the voice recognition processing.

When the instruction of voice recognition is "recognize automatically at any time," (start automatically) the scenario processing unit (101-1) proceeds to Step (505-6-8-3) and perfonns the voice recognition (described later).

On the other hand, when the instruction of voice recognition is "entrust" which depends on a status judgment result (the start is judged by the on-vehicle apparatus), the scenario drive unit (101-1) performs status judgment processing (Step 505-6-8-2).

Specifically, the scenario drive unit (101-1) receives detected data of the various status detecting system (6) from the overall processing unit (102) and judges driving load of the driver from the status of the road on which the vehicle is running, vehicle speed, change in the vehicle speed, steering angle, pressing amount of the accelerator, pressing amount of the brake, and the like (driving load judging means).

The status of the road on which the vehicle is running is judged by the navigation function of the overall processing unit (102) from the detected current position of the vehicle, width of the road on which the vehicle is running, running status (intersection or not, straight road, curve, meandering road, steep slope road, and the like) and the like, and notified to the scenario drive unit (101-1).

In this embodiment, the driving load is judged to be high when running on a curve or through an intersection, when the change in vehicle speed is large, and when the pressing amount of the brake is large. In other cases, the vehicle load is judged to be low.

Incidentally, each of the curvature of a curve, vehicle speed, change in the vehicle speed, road with, intersection, and so on, may be assigned a point for determining the driving load, and the driving load may be judged from whether the total point thereof exceeds a predetermined value' or not. Specifically, the driving load may be judged to be high when the total point exceeds a predetermined value, and the driving load may be judged to be low when the total point is equal to or less than the predetermined value.

Incidentally, besides the example of the driving load of the driver, the scenario drive unit may be configured to judge not to start the recognition automatically in a case that the noise detected in the vehicle room is judged to be high, and the like.

When the load of the driver is high, the scenario drive unit (101-1) performs a return without starting the voice recognition, and when the load of the driver is low, it proceeds to Step 505-6-8-3 to instruct the start of the voice recognition to the voice recognition unit (101-7).

Incidentally, the scenario drive unit (101-1) is configured to perform, as processing independent from the voice recognition processing shown in FIG 24, processing for which the timer notification (passing of a set time) is performed.

Specifically, when the tuner notification, which means the timer setting time has passed, is performed by the agent OS unit (101-8), the scenario drive unit (101-1) executes development judgment processing (505-6-12).

When a start of the voice recognition is instructed by the scenario drive unit (101-1), the voice recognition unit 107 perfonns the voice recognition described below (Step 505-6-8-3).

Specifically, when the start of the voice recognition is instructed, the voice recognition unit (101-7) outputs a start sound such as "beep" or the like from the voice output device (3), in order to indicate to the user that reception of voice input is started (start sound outputting means).

Incidentally, in this embodiment, the start sound is configured to be outputted before the voice recognition is started, but the start sound may be configured not to be outputted. Further, with the output of the start sound, the display device (2) may be configured to indicate that the voice recognition is in progress such as displaying "voice recognition is in progress" or the like or an icon indicating that the voice recognition is in progress.

Thereafter, the voice recognition unit (101-7) instructs the start of the voice recognition via the agent OS unit (101-8) from the output I/F unit (101-9) to the voice recognition processing unit in the overall processing unit (102). The voice recognition 'processing unit in the overall processing unit (102) transmits the start 'instruction to the voice processor (1-8), and the voice processor (1-8) converts an analog signal inputted from the voice input device (4) into a digital voice input signal. When the converted voice input signal is inputted, the voice recognition processing unit in the overall processing unit (102) obtains the digital voice input signal and performs recognition of the obtained voice input signal using the voice recognition dictionary set in Step 505-6-3 (FIG. 19) (Step 505-6-8-3).

When the recognition is completed, the voice recognition processing unit in the overall processing unit (102) notifies the result of the voice recognition via the output I/F unit (101-9) and the agent OS unit (101-8) to the voice recognition unit (101-7). The voice recognition unit (101-7) notifies the voice recognition result to the scenario drive unit (101-1).

Incidentally, in this embodiment, the actual processing of voice recognition is performed by the voice recognition processing unit in the overall processing unit (102), but the voice recognition may be performed by the voice recognition unit (101-7). In this case, the voice recognition unit (101-7) functions as a voice recognition means. Further, when the voice recognition is performed by the voice recognition unit (101-7), the voice recognition will be performed in two places, another one being the voice recognition in the navigation processing by the overall processing unit (102), so that the both may be performed commonly in the voice recognition unit (101-7).

Next, the scenario processing unit (101-1) judges the result of the voice recognition in the overall processing unit (102) (Step 505-6-8-4).

When the voice recognition fails, the scenario drive unit (101-1) returns to Step 505-6-8-1, and when the voice recognition succeeds, the scenario drive unit (101-1) performs the following tag question processing.

Specifically, the scenario drive unit (101-1) confirms the contents of a tag question control instruction (instruction of whether to add a tag question or not) that is set in the scenario data (Step 505-6-8-5).

When the instruction of the tag question control is "do not add tag question," the scenario drive unit (101-1) performs a return without adding a tag question, and when the instruction of the tag question control is "add tag question," the scenario drive unit (101-1) performs character drawing/voice output processing for the tag question (Step 505-6-8-7).

On the other hand, when the instruction of the tag question control is "entrust" (the agent apparatus judges whether or not to add a tag question), the scenario drive unit (101-1) performs status judgment processing (505-6-8-6).

Specifically, in the case of this embodiment, the scenario drive unit (101-1) judges the status according to the following criteria and determines whether to add a tag question to the recognition result or not.

When the following conditions (a) and (b) are both satisfied, the scenario drive unit (101-1) adds a tag question to the recognition result.
(a) when the vehicle is running (vehicle speed v ≠ 0 km/h).
(b) when more than two types of words exist in the voice recognition dictionary except synonyms (for example, when recognizing an answer, "strong," "weak," or "good," for a question of sense of control).
   On the other hand, when at least one of the following conditions (c) and (d) is satisfied, the scenario drive unit (101-1) does not add a tag question to the recognition result.
(c) when the vehicle is stopped (vehicle speed v = 0 km/h).
(d) when only two types of words exist in the voice recognition dictionary except synonyms (for example, when recognizing an answer of "yes" or "no").

Incidentally, the above-described criteria are for this embodiment, and other criteria may be adopted. For example, there may be a criterion such as to add a tag question when reliability (sureness) of the recognition result is low, or when the load of the driver is judged to be low using the above-mentioned driving load judging means.

When the instruction of the tag question control is "to add tag question," and when it is "entrust" and then judged to add a tag question according to the status, the scenario drive unit (101-1) performs the character drawing/voice output processing (Step 505-6-8-7) and performs a return.

In the character drawing/voice output processing (Step 505-6-8-7), the current action of the character (the action at the time of voice recognition starting) is kept as it is, and instructions of words for each recognition result described in the voice recognition dictionary of the scenario data are used. Specifically, when the recognition result is "good," as a voice for the tag question for example, a voice "is it?" for the tag question is outputted subsequent to the voice of the "recognition result," such as "good, is it?"

Thus, by confirming (adding a tag question) the recognition result of the voice recognition, a recognition result confirmation means according to the present invention is formed.

Incidentally, similarly to the action selection by the type of the character in the character drawing/voice output processing in Step 505-6-6 (FIG. 19), the voices for tag questions may be defined for each of the characters to be selected.

Further, the conversation will be unnatural when the same tag question voice is always added, so that, even for the same character, plural tag question voices may be prepared and then outputted in order or changed depending on the time or the number of tag questions.

When there is no instruction of voice recognition, and after the voice recognition processing (Step 505-6-8) is completed, the scenario drive unit (101-1) confirms a content of input when a notification of the user input from the agent OS unit (101-8) is received, (FIG. 19, Step 505-6-9), and performs processing corresponding to the input.

Incidentally, as described above, each of the processing is performed independently, so that when the input is notified from the agent OS unit (101-8) from the agent OS unit (101-8) even during the voice recognition processing (Step 505-6-8), the processing corresponding to the input is executed in parallel. Therefore, during the voice recognition processing, when the user selects the selection button of the voice recognition and this selection is notified from the agent OS unit (101-8), the next processing (Step 505-6-9) is executed, regardless of processing stages of the voice recognition processing.

When receiving, for example, an input regarding movement of a cursor from the agent OS unit (101-8), the scenario drive unit (101-1) moves the cursor and performs processing of a drawing request of the screen (request of scrolling the screen) (Step 505-6-10).

Further, when the user selects any one of the answer selection buttons 54a displayed on the scene display screen 54 (refer to FIG. 14), the scenario drive unit (101-1) judges which item is selected (Step 505-6-11), and judges whether development of the scene exists or not as a result thereof (Step 505-6-12).

Incidentally, as described above, the processing in FIG. 18 to FIG. 23 show one example of the scenario processing, and in practice, each of the units independently performs individual processing. Therefore, although not being shown in FIG. 19, there exist other processing after the confirmation of the user input (Step 505-6-9) is performed, such as requesting a start or stop of the voice recognition processing to the voice recognition unit when the start or stop of the voice recognition is inputted, and the like. Further, even before the drawing/voice output unit (101-5) notifies completion of the character drawing/voice output processing of a scene, in other words, before an instructed action of the character finishes, the confirmation of the input of the user (Step 505-6-9) can be performed.

Next, in the development judgment processing (Step 505-6-12), the scenario drive unit (101-1) judges the next development with reference to the development management data in the scenario data (refer to FIG. 7). When the next development does not exist, the scenario drive unit (101-1) returns to the user input judgment without processing anything, and when the next development exists, the scenario drive unit (101-1) proceeds to scene end processing (Step 505-6-13) for proceeding to the next development.

In the scene end processing (505-6-13), when the scenario drive unit (101-1) is requesting processing to any other processing unit, it requests to stop the processing (for example, when the scenario drive unit (101-8) is requesting voice recognition processing, it requests to stop the recognition processing) and performs a return. By this return, the scenario drive unit (101-1) proceeds to the scenario end judgment (Step 505-7) in FIG. 18.

Next, scenario interruption processing in the case that a scenario being executed while the vehicle is stopped is interrupted due to the start of running of the vehicle will be described.

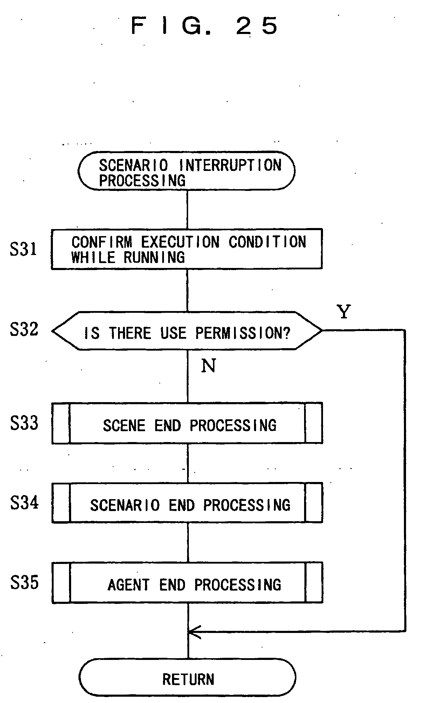

FIG. 25 is a flow chart representing contents of the scenario interruption processing.

This scenario interruption processing is executed when a running start notification is notified from the agent OS unit (101-8) to the scenario drive unit (101-1) according to the change from a stopped state to a running state.

First, upon reception of the running start notification from the agent OS unit (101-8) while executing a scenario under the stopped state, the scenario drive unit (101-1) confirms the execution condition while running in the management data of the scenario being executed, which is read into the RAM in Step 505-4 in FIG. 18 (Step 31), and judges whether the use is permitted or not (Step 32).

When the use is pennitted, in order words, the execution condition while running is set to be restrictively executable while running (Step 32; Y), the scenario drive unit (101-1) performs a return.

In this case, due to the change from the stopped state to the running state, the drawing data creating processing is performed as described above to display only the parts permitted to be used.

On the other hand, when the use is not permitted, in order words, the execution condition while running is set to be inexecutable while running (Step 32; N), the scenario drive unit (101-1) performs the following scenario interruption processing (Step 33 to Step 35).

Specifically, the scenario drive unit (101-1) performs, as the scenario interruption processing, respective end processing of scene end processing (Step 33), scenario end processing (Step 34), and agent end processing (Step 35), and then performs a return.

Here, the scene end processing (Step 33) is the same processing as the scene end processing in Step 505-6-13 in FIG. 19, the scenario end processing (Step 34) is the same processing as the scenario end processing (Step 505-8) in FIG. 18, and the agent end processing (Step 35) is the same processing as the agent end processing (Step 505-10) in FIG: 18.

Respective scenarios are executed as has been described above. Next, how the screen display actually changes between a stopped state and a running state when a scenario is performed will be described.

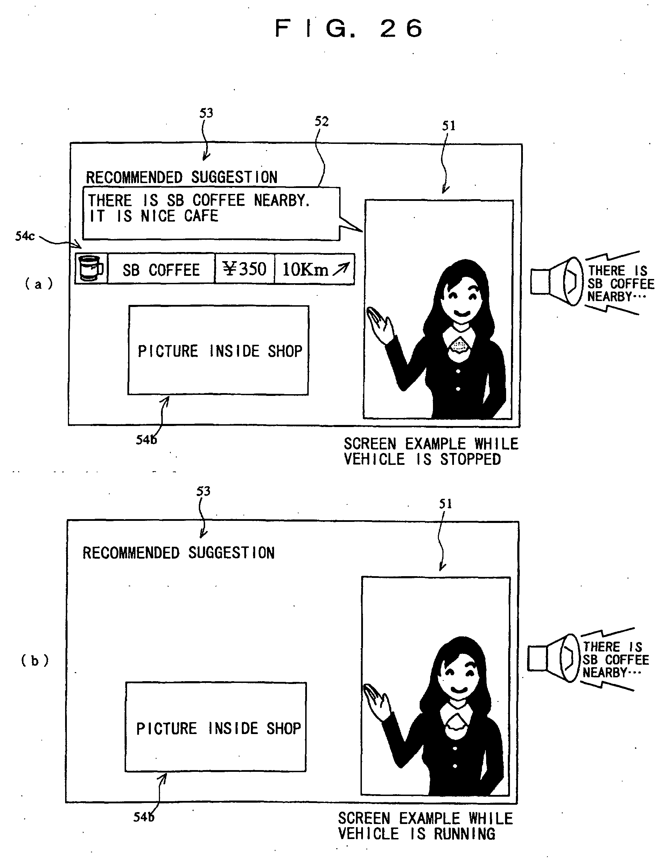

FIG. 26 is a view showing a comparison of examples of scene screens during a stopped state and a running state.

FIG. 26(a) is a view exemplifying one scene screen in a scenario, as the scene screen 54 during a stopped state, for introducing a nearby cafe as a recommendation.

In this scene screen displayed during the stopped state, displayed are the agent display screen 51 for displaying a character, the word balloon screen 52 for displaying text of words corresponding to the voice of an agent, the title screen 53, actual image data 54b for displaying a picture inside the shop, and all display items (parts) of an information suggestion box 54c on which details of recommendation information are displayed.

Incidentally, the actual image data 54b and the information suggestion box 54c displayed in the scene display screen 54 exemplified in FIG. 26(a) are set as parts for this scene data, and when other items (parts) are set in another scene, all of them will be displayed.

Incidentally, besides the scene screen 54, voices of the words displayed on the word balloon screen 52 are outputted from the voice output device (3).

On the other hand, FIG. 26(b) is a view exemplifying the scene screen 54 for the same scenario data as that of (a) when the vehicle is running. Incidentally, the items (parts) restricted from being displayed are set as the items selectively hidden while running, so that they conform the setting of the execution condition while running in the management data of the scenario.

As shown in FIG. 26(b), the word balloon screen 52 and the information box 54c regarding the recommendation information set as the items selectively restricted while running in this scene are restricted from being displayed, and other parts are displayed.

Incidentally, even while the vehicle is running, voices of the words on the word balloon screen 52 which is not displayed are outputted from the voice output device (3).

As has been described above, according to the agent apparatus of this embodiment, the agent apparatus is configured to interrupt a scenario and to continue communication (execution of scenario) by automatically restricting display of restricted items such as a word balloon, selection buttons, and so on when a vehicle starts running during communication (during execution of the scenario) according to the execution condition while running that is set in the scenario.

Therefore, according to the contents of a scenario, excessive communication can be prevented while the vehicle is running, thereby alleviating annoyance to the user. Thus, the communication with the personified character can be made closer to the communication between humans.

Further, according to the agent apparatus of this embodiment, it is judged whether timer information is set in each scene of the scenario data, and when it is set, the scene continues according to a timer setting condition until there is an answer, or the scene is executed only during a timer setting time (measurement of the timer setting time is started upon a start of the scene, and the scene is ended when a timer notification (passing of setting time) is performed).

When the timer notification is performed, the scenario proceeds to the next scene with the timer notification as a proceeding condition. Thus, one scenario is not executed for excessively long time regardless of whether the user provides answer or not, so that increase of scenarios in a state waiting for execution by newly satisfying an autonomous start condition due to a status change caused by movement of the vehicle is prevented.

Further, when there is no answer for a given length of time, it is judged that there is no answer for the question according to the status and the scenario proceeds to the next scene, so that the communication with the personified character can be made closer to the communication between humans.

Further, the annoyance to the user to always answer a question can be avoided.

Further, according to the agent apparatus of this embodiment, there is provided a function to add/not to add a tag question to the recognition result according to the tag question control instruction of the voice recognition result described in the scenario data created by the scenario editor, when a result of voice recognition is produced.

Accordingly; the personified character does not always repeat the recognition result, so that the user will not be annoyed.

Further, whether or not to add a tag question is controlled according to the status, so that, due to the tag question voice, the driver can safely have a conversation without looking to the screen while driving. In reverse, when the vehicle is stopped or further in a scene that an answer of two choices is required, the tag question is not added to realize smooth conversation.

Moreover, by adding or not adding a tag question, the conversation with the personified character can be made close to the conversation between humans.

Further, according to the agent apparatus of the described embodiment, there is provided a function to start voice recognition according to an instruction whether or not to automatically start the voice recognition which is described in the scenario data created by the scenario editor.

Accordingly, the driver who is the user of the agent apparatus can omit a step of equipment operation of pushing a voice recognition start button when answering a question during conversation with the personified character.

Since the voice recognition start button that does not exist in the conversation between humans is not necessary, the conversation with the personified character can be made closer to the conversation between humans than before as a result of the present invention.

Further, according to the agent apparatus of the described embodiment, by standardizing display states for instructing actions of a character in each scene of a scenario without depending on the type of the character, and by referring to the conversion table of the character selected by the user, image data of each character corresponding to the display state specified in each scene of the scenario is selected and each scene is developed by reproducing the image data to thereby execute the scenario, so that one scenario can respond to plural different characters. Therefore, it is not necessary to store a scenario for every character, thereby reducing the data amount.

Further, according to the described embodiment, execution of a scenario can be started with an autonomous start condition incorporated in an original scenario created by a user (creating user) of the scenario creating apparatus as a start condition.

Therefore, to the user of the scenario creating apparatus, an opportunity is provided for freely creating a scenario in which various scenarios including appearance of an agent can be started by timing according to the one's preference.

Further, in this embodiment, the autonomous start judgment processing is executed periodically with a five-second interval, so that a scenario that satisfies a condition can be started in substantially real time with respect to the changes of various status.

Furthermore, the autonomous start judgment processing is also executed for status that has a high possibility to be selected in advance as the start condition of a scenario (when the change in status is large), so that the autonomous start judgment processing is executed before the periodical judgment processing starts, and there are many scenarios which are relevant to this case (to satisfy the condition). Therefore, the scenarios can be executed in a state closer to real time.

Further, according to the described embodiment, actions of an agent are defined in scenario data, and this scenario data is standardized according to a scenario constituted by plural continuous scenes, so that a user of the agent apparatus and a third person can create the scenario by themselves and incorporate the scenario therein.

Thus, a scenario can be added to the default scenario that is stored in the device in advance, so that a user can use the agent apparatus more comfortably by finding and downloading an additional scenario that is preferable for him/her from the internet, or by creating a scenario by himself/herself.

Next, the structure and operation of the scenario creating apparatus 2 by which a user or a third person can create original scenarios will be described.

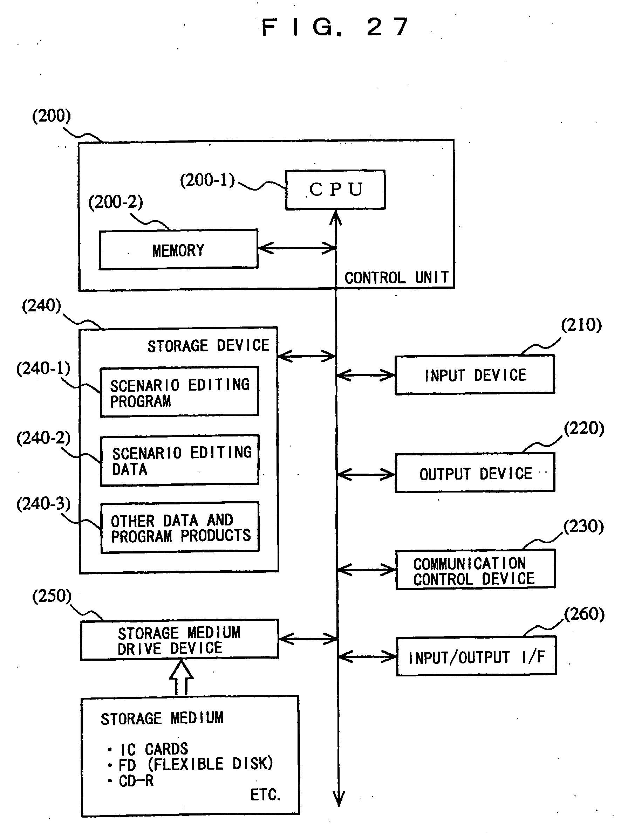

FIG. 27 is a diagram representing the configuration of the scenario creating apparatus.

The scenario creating apparatus has a control unit (200), an input device (210), an output device (250), a communication control device (230), a storage device (240), a storage medium drive device (250), and an input/output I/F (260). Each of these devices is connected by bus lines such as data bus, control bus, or the like.

The control unit (200) controls the entire scenario creating apparatus.

The scenario creating apparatus is capable of executing not only a scenario editing program, but also other programs (for example, a word processor, a spreadsheet, and so on). The control unit (200) is constituted by a CPU (200-1), a memory (200-2), and so on.

The CPU (200-1) is a processor that executes various calculation processing.

The memory (200-2) is used as a working memory when the CPU (200-1) executes various calculation processing.

The CPU (200-1) is capable of writing and erasing a program and data to the memory (200-2).

In the memory (200-2) in this embodiment, the CPU (200-1) can secure areas for creating, editing, and storing a scenario data according to a scenario editor (scenario editing program).

The input device (210) is a device for inputting characters, numbers, and other information to the scenario creating apparatus, and constituted by a keyboard, a mouse, and the like for example.

The keyboard is an input device for inputting mainly kana and alphabets.

The keyboard is used, for example, when a user inputs a login ID and a password for logging in to the scenario creating apparatus, and when the user inputs a text as a target for voice synthesizing and voice recognition.

The mouse is a pointing device. The mouse is an input device used, when the scenario creating apparatus is operated using GUI (Graphical User Interface) or the like, to perform inputting predetermined information and the like by clicking a button and an icon displayed on a display device.

The output device (220) is, for example, a display device, a printing device, and the like. As the display device, for example, a CRT display, a liquid crystal display, a plasma display, or the like is used.

On the display device, various screens are displayed such as a main screen for creating a scenario, a screen for selecting a screen structure in each scene, and the like. Further; selected information and inputted information in each screen are displayed on the displayed device.

As the printing device, for example, various printing devices such as an ink-jet printer, a laser printer, a thermal printer, a dot printer, and the like are used. Materials to be printed by the printing device includes, for example, a diagram representing a flow of the entire created scenario in a chart format, and a material showing setting status of respective scenes.

The communication control device (230) is a device for transmitting/receiving various data and programs with the outside, and a device such as a modem, a terminal adaptor, or the like is used.

The communication control device (230) is configured to be connectable to the internet and a LAN (Local Area Network) for example. By exchanging signals and data through communication with other terminal devices and server devices connected to these networks, the communication control device (230) transmits scenario data created by the device, receives (downloads) scenario data created by a third person, and further obtains data necessary for creating scenario data.

The communication control device (230) is controlled by the CPU (200-1), and performs transmission/reception of signals and data with these terminal devices and server devices according to a predetermined protocol such as TCP/IP and the like for example.

The storage device (240) is constituted by a readable/writable storage medium and a drive device for reading/writing programs and data from/to the storage medium. As the storage medium, a hard disk is mainly used, but it can be constituted by other readable/writable storage mediums such as a magneto-optical disk, a magnetic disk, a semiconductor memory, and the like.

In the storage device (240), the scenario editing program (240-1), the scenario editing data (240-2), and other programs/data (240-3) are stored. As the other programs, for example, a communication program which controls the communication control device (230) and maintains communication with the terminal devices and the server devices connected to the scenario creating apparatus via a network, an OS (Operating System) that is basic software for operating the scenario creating apparatus to manage memory, manage input/output, and so on are stored in the storage device (240).

The storage medium drive device (250) is a drive device for driving a removable storage medium to read/write data. Examples of the removable storage medium include a magneto-optical disk, a magnetic disk, a magnetic tape, IC cards, a paper tape on which data is punched, a CD-ROM, and the like.

In this embodiment, the scenario data (in a mode used by the agent apparatus) created/edited by the scenario creating apparatus is mainly written into the IC cards.

By driving the storage medium by the storage medium drive device (250), the scenario creating apparatus obtains a scenario from a storage medium in which the scenario data is stored, or store created scenario data from the storage medium drive device to the storage device.

The input/output I/F (260) is constituted by, for example, a serial interface or an interface of other standard.

By connecting external equipment corresponding to the relevant interface to the input/output I/F (260), the function of the scenario creating apparatus can be expanded. Such external equipment includes, for example, a storage medium such as a hard disk or the like, a communication control device, a speaker, a microphone, and so on.

Next, the structures of the scenario editing program (240-1) and a scenario editing data (240-2) will be described.

FIG. 28 is a view schematically representing the structures of the scenario editing program and the data.

In the scenario editing program (240-1), there exist a scenario editor (240-1), a scenario compiler (240-1-2), and a DB editing tool (240-1-3).

In the scenario editing data (240-2), there exist a common definition DB (240-2-1), a local definition DB (240-2-2), SCE fonnat scenario data (240-2-3) created by the scenario editor, and an actual device fonnat (NAV format) scenario data (240-2-4) converted by the scenario compiler.

The scenario editor (240-1-1) is an application program for creating scenario data.

The scenario compiler (240-1-2) is an application program for converting the SCE format scenario data (240-2-3) created by the scenario editor (240-1-1) into the actual format scenario data (240-2-4) which is usable by the agent apparatus, and functions as a converting means.

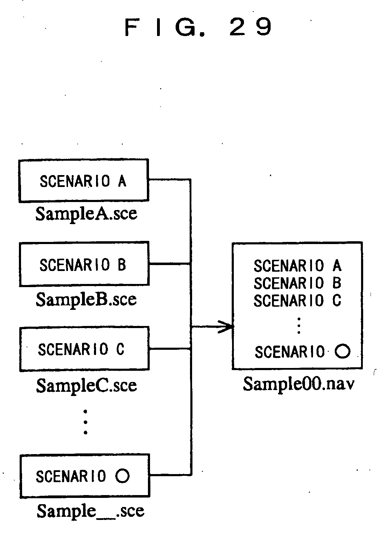

FIG. 29 is a view schematically representing conversion of data format.

As shown in FIG. 29, the scenario compiler (240-1-2) converts one or more SCE format scenario data (240-2-3) into one actual device format (NAV format) scenario data (240-2-4).

The DB editing tool (240-1-3) is an application program for editing/updating data stored in the common definition DB (240-2-1).

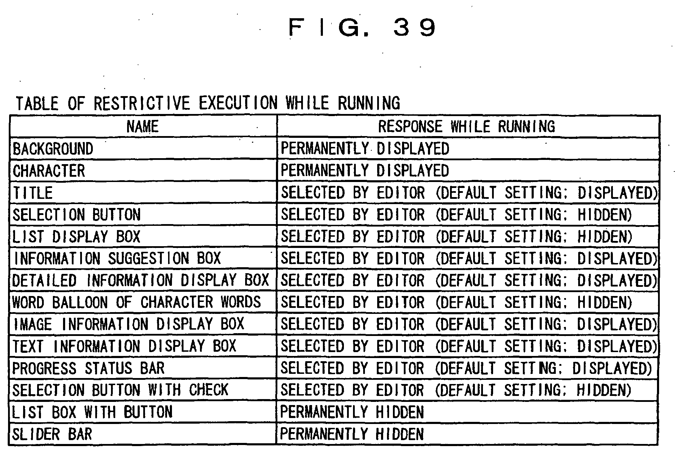

In the common definition DB (240-2-1), definition data for creating scenario data is stored. In the common definition DB (240-2-1), autonomous start judgment data, action items and additional judgment items for developing scenes, a table of display state instruction for characters, a table of restrictive execution while running (FIG. 39) and the like, which will be described later, are stored. This common definition DB (240-2-1) may exist not on the storage device in the scenario creating apparatus but on a server connected by a local area network (LAN). Accordingly, each of the scenario creating apparatuses connected by the local area network (LAN) can use the common definition DB (240-2-1), which is common for the scenario creating apparatuses to create scenario data.

In the local definition DB (240-2-2), screen structures defined by the scenario creator while creating the scenario data are stored.

The SCE format scenario data (240-2-3) is the data created by the scenario editor (240-1-1).

The actual device format (NAV format) scenario data (240-2-4) is the data converted by the scenario complier (240-1-3) from the SCE format scenario data (240-2-3) into a data format to be used in the agent apparatus.

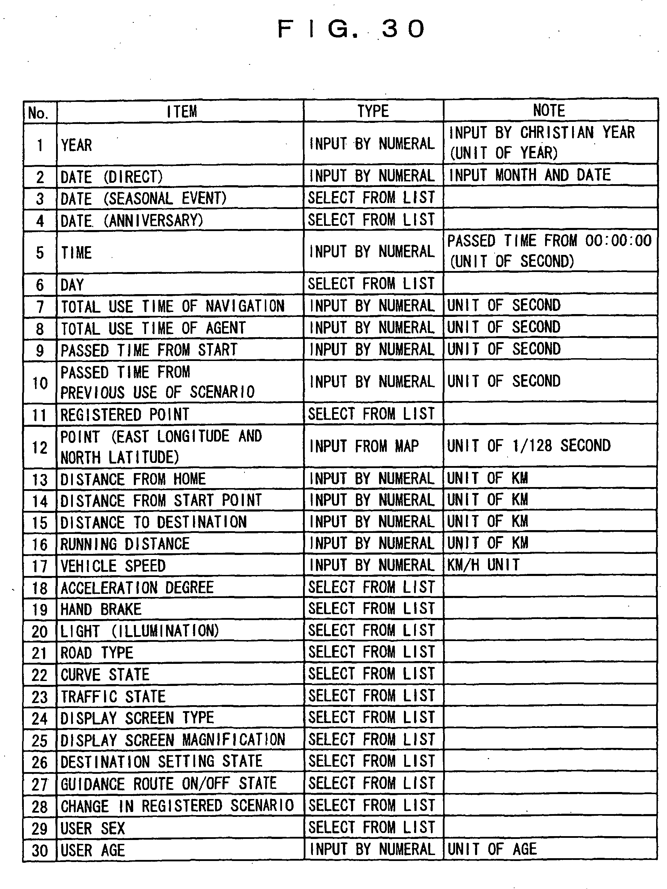

FIG. 30 is a view exemplifying items which can be set as automatic start items.

In these automatic start items, samples of types of respective items which can be detected, recognized, and confirmed by the agent apparatus are schematically displayed in a list.

These automatic start items are described in the common definition DB (240-2-1), and when a scenario is created by the scenario editor (240-1-1), the automatic start items are read from the common definition DB (240-2-1) and displayed in a list (offering means) for setting the autonomous start condition. The creator selects the automatic start items from the displayed list (displayed in a list) (selecting means).

According to the contents described in the type of each of the selected items, a window for inputting numeric values is displayed and/or a window for selecting from a list is displayed, and then judgment conditions of the automatic start items are inputted. This operation is performed once or plural times to thereby create data of the autonomous start condition which is a judgment condition for autonomously starting a scenario.

Thus, by setting the start condition of the screen element transition object (scenario), a start condition setting means according to the present invention is formed.

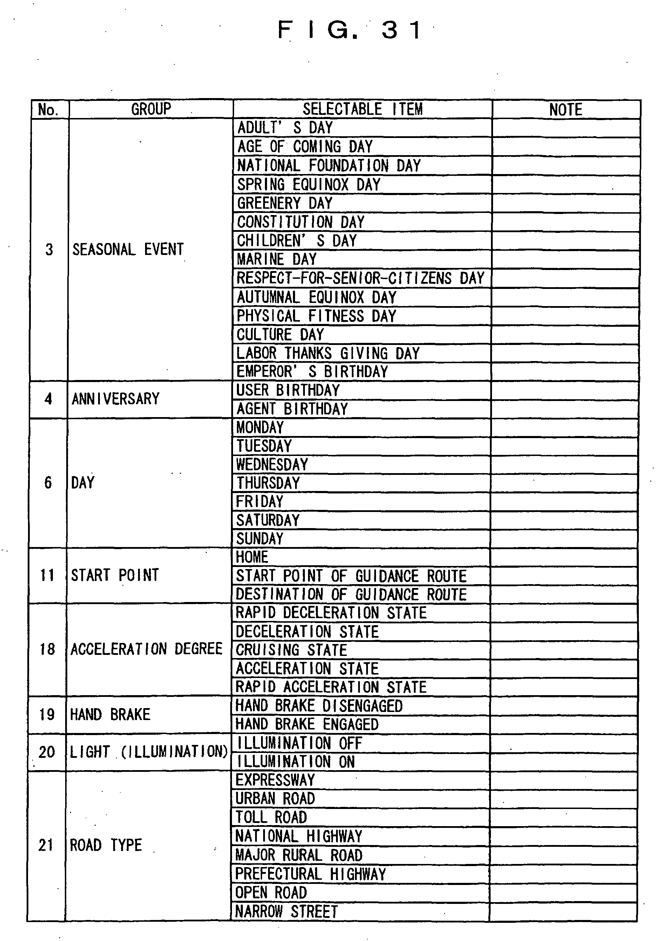

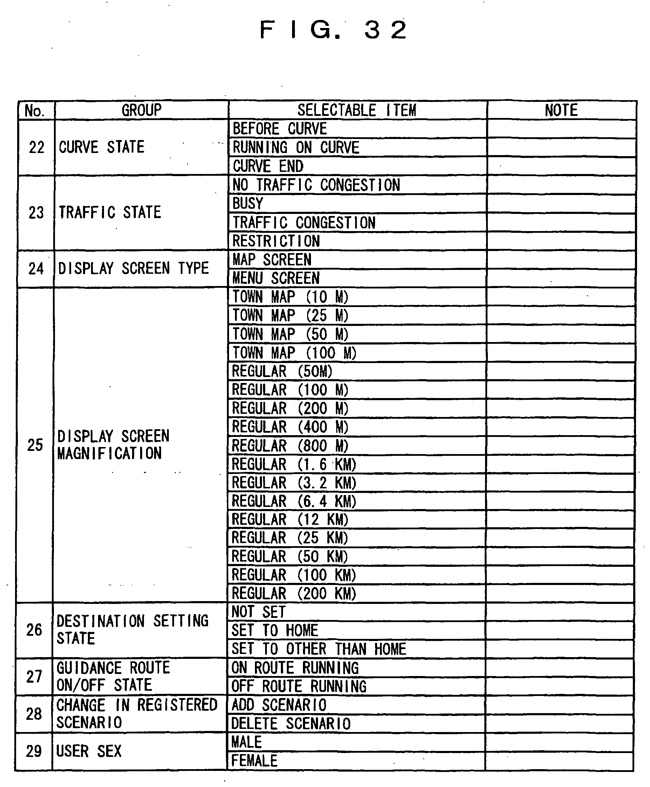

FIG. 31 and FIG. 32 are views exemplifying selectable items which can be selected as the autonomous start condition for the automatic start items.

The selectable items are also described in the common definition DB (240-2-1). In the table showing the automatic start conditions which is exemplified in FIG. 30, for the items which are described as "selected from a list" in the field of the type, items which can be selected as a further subordinate concept thereof are defined as selectable items in FIG. 31 and FIG. 32. Groups defmed as the selectable item and the items of the automatic start items are related by the leftmost item, "No."

Although not shown, similar to the above tables, there exist other definition tables and the like regarding inputting numeric values, which allow creating windows for different inputs, such as an input window of time, an input window of driving distance, and the like.

Combinations of selected automatic start items and selected selectable items with inputted numeric values, times, distances and the like become the autonomous start conditions for respective scenarios. For example, when selections by the user are automatic start condition "acceleration degree," and selectable item "rapid deceleration state," the autonomous start condition becomes "acceleration degree-rapid deceleration."

Incidentally, these samples are merely samples, and the definitions thereof may be changed.

For example, the vehicle speed input may be set as "selected from a list" to be selected from items which are segmented by 10 km/h.

Further, when an item which can be sensed by the agent apparatus is newly increased, this item can be added to the selectable items. For example, it is conceivable that, when a seat belt detecting sensor is incorporated, a definition which allows selecting items such as "not wearing seat belt" and "wearing seat belt" for an item "seat belt state" by an inputting means of "selected from a list" are incorporated.

These change and addition are performed using the above-described DB editing tool (240-1-3).

Further, a mental state of a character may be obtained from the agent mind unit and added to the autonomous start judgment.

Also in this case, the DB editing tool (240-1-3) is used to add a definition data. For example, it is conceivable to incorporate a definition which allows selecting items of the character's mental state such as blue (depressed), good mood, and the like as an automatic start item by an inputting means of "selected from a list."

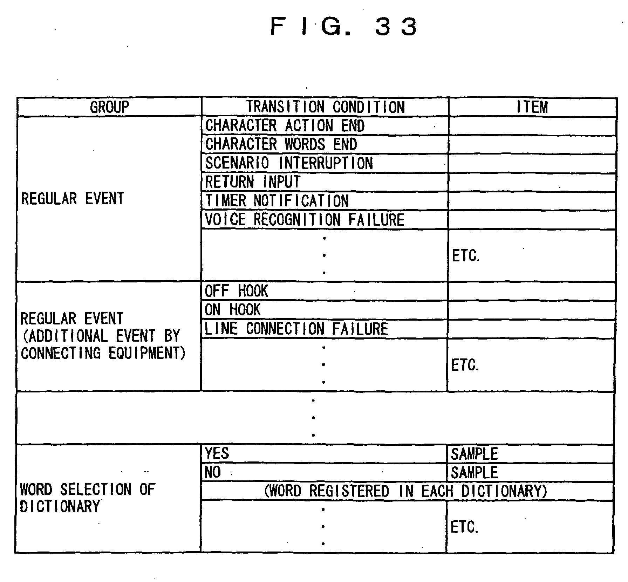

FIG. 33 is a scene branching item table in which stored are branching items (transition condition) for branching (scene development) from a scene to the next scene. The scene branching item table is stored in the common definition DB (240-2-1).

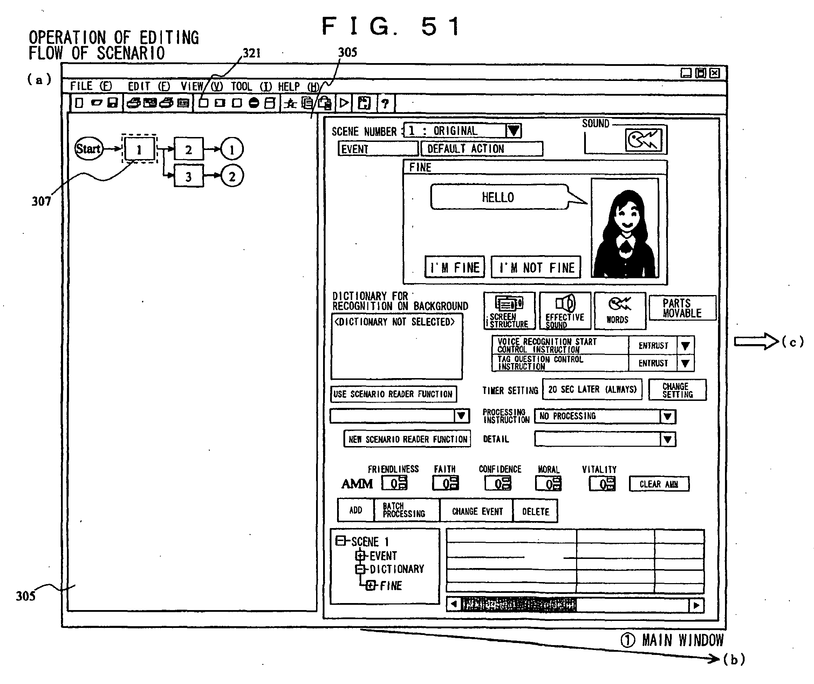

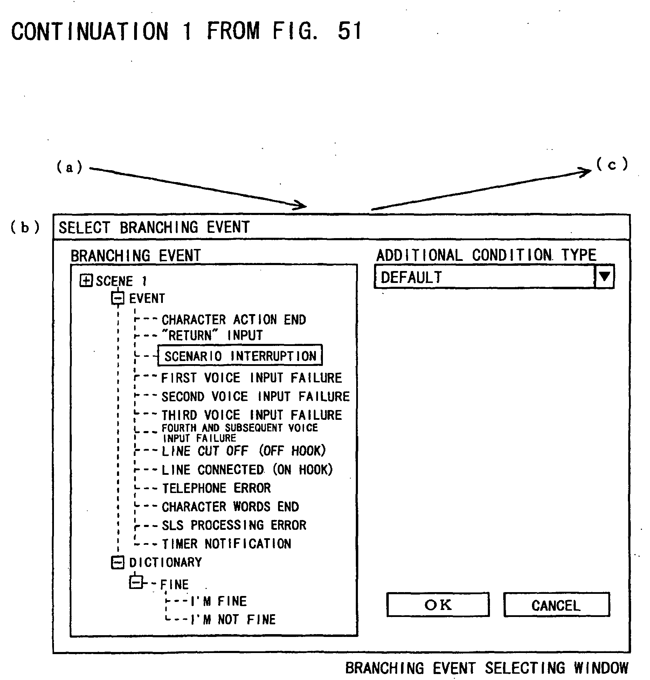

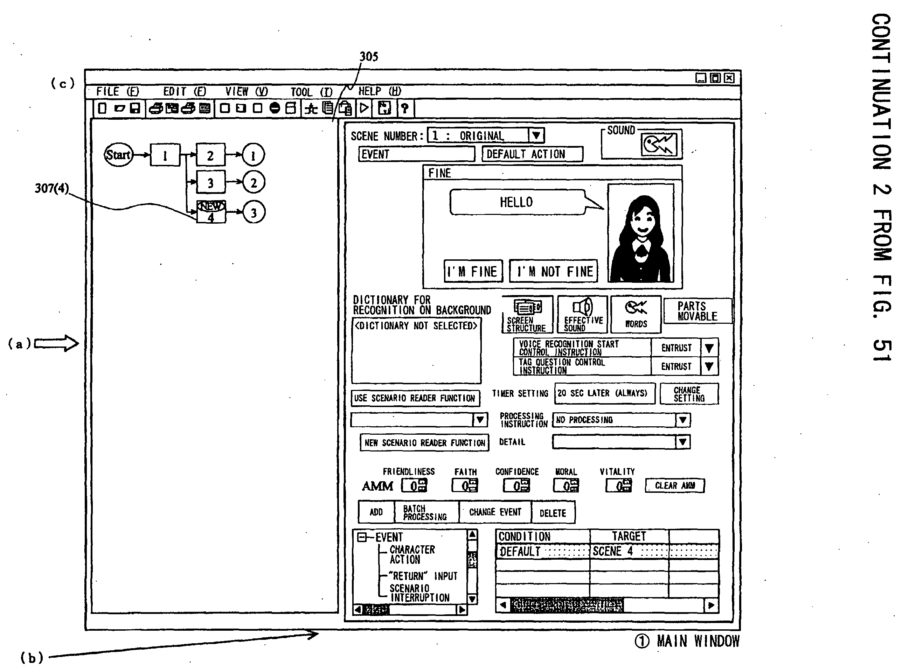

Each item of the scene branching items is read when a development structure of each scene is created and displayed on a list on the selecting window of a branching event (FIG. 51(b)).

The branching condition items are selected from this displayed list, and when they are not stored in the table, definition data of other branching conditions are added using the DB editing tool (240-1-3), thereby creating the scene development structure. By repeating selection of the branching condition items, a scene having plural transition destinations (which are branched multiply) can be created.

In this embodiment, a timer setting time as a time for waiting an answer from a user for a question asked by a character to the user and a timer setting condition are set. Then, when there is no answer from the user within the timer setting time, it is judged as no answer by the timer notification (passing of the setting time).

As shown in FIG. 33, in the scene branching item table' in this embodiment, a timer notification is defined as a transition condition.

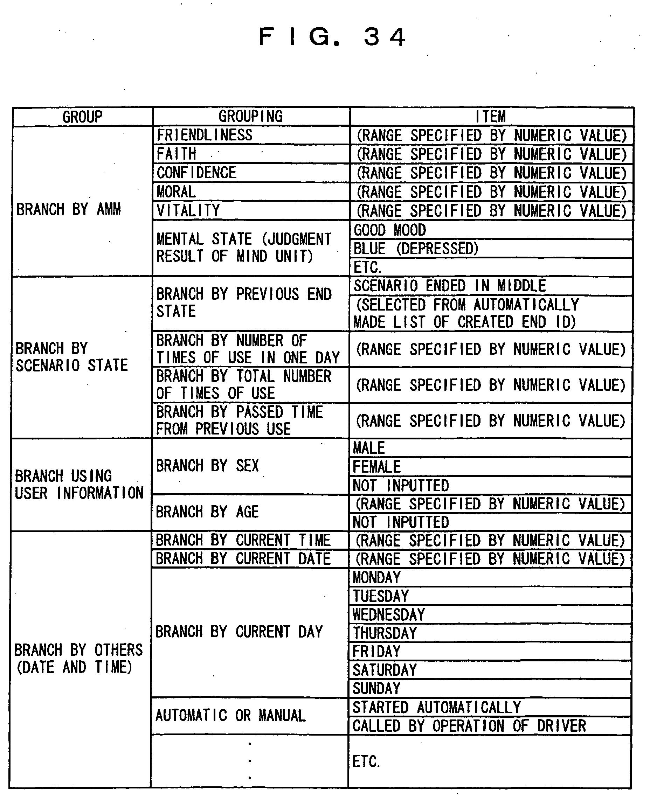

FIG. 34 is a view representing an additional condition table for setting the branching condition in more detail. The additional condition table is also stored in the common definition DB (240-2-1).

The additional condition items are items used for making an action (branching condition item) for developing a scene as described above have further plural developments. For such a case, a scene for branching is created. After the scene for branching is created, an additional judgment item is read when a development structure from the scene for branching is to be created. For one scene to be branched, only one group can be selected, and the items of the selected group are displayed in a list to be selected or specified in a range by inputting a numeric value. When it is desired to multiply plural groups by logical multiplication, it is easily created by overlapping scenes for branching.

Moreover, in the agent apparatus, when a scenario branches into multiple scenes and ends in each of different scenes, the learning unit (101-3: refer to FIG. 5) records the manner of ending thereof as an end ID. Further, the learning unit (101-3) is capable of recording responses of the user, the total number of times of use, and the like during the scenario as learned data.

On an additional condition table shown in FIG. 34, there are defined grouping items of these recorded scenario ending states (end ID), the total number of times of use of a scenario, user information (driver information), mental model, date and time, and so on, and a creating method of an item list that is selectable in each grouping item. These can be selected as an additional branching condition to make an action of developing one scene to have multiple development.

Similarly to the autonomous start judgment data, the definition data regarding the action items for developing scenes and the additional judgment items can be changed and added using the DB editing tool (240-1-3).

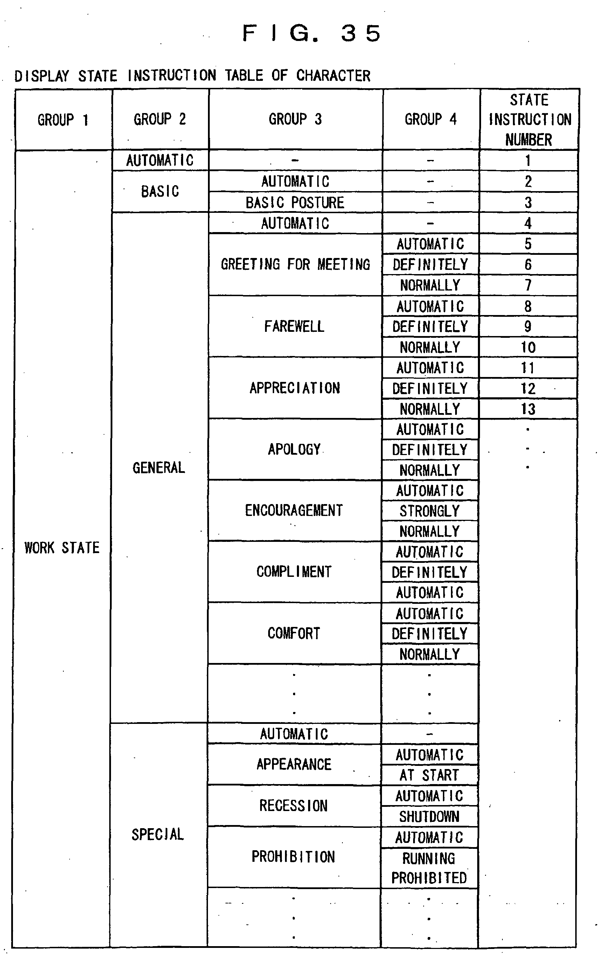

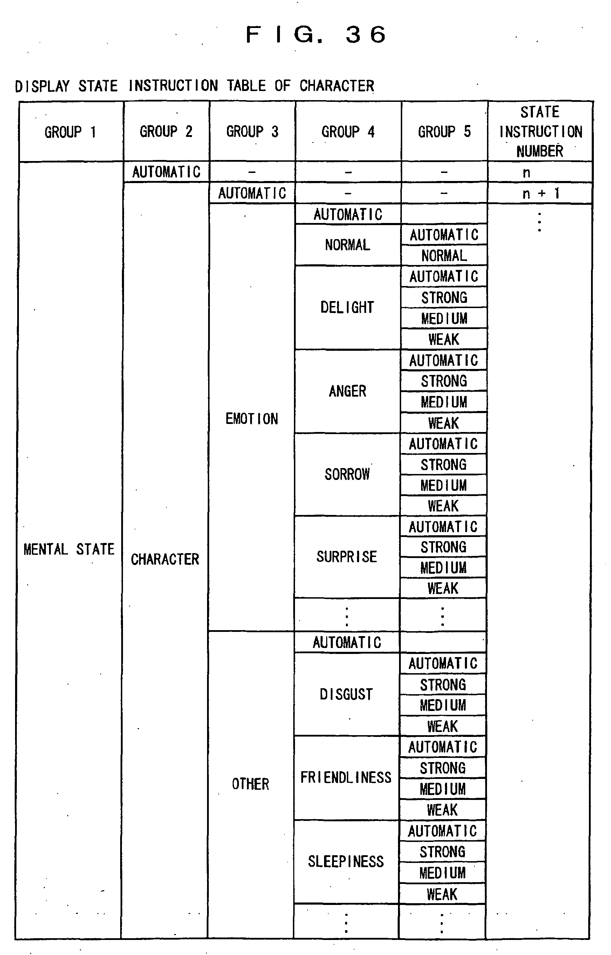

FIG. 35 and FIG. 36 are views schematically representing a part of the contents of the standard action instruction table, which does not depend on the character, stored in the common definition DB (240-2-1). Hereinafter, by description of FIG. 35 and FIG. 36, a character setting means is formed.

In this table, display states of common actions which do not depend on the type of the character are defined and grouped by respective contents to be expressed by the character.

There exist plural standard action instruction tables which do not depend on the character. In this embodiment, there exist respective display state instruction tables of work state (FIG. 35), mental state (FIG. 36), TPO state, growth state, and scale state.

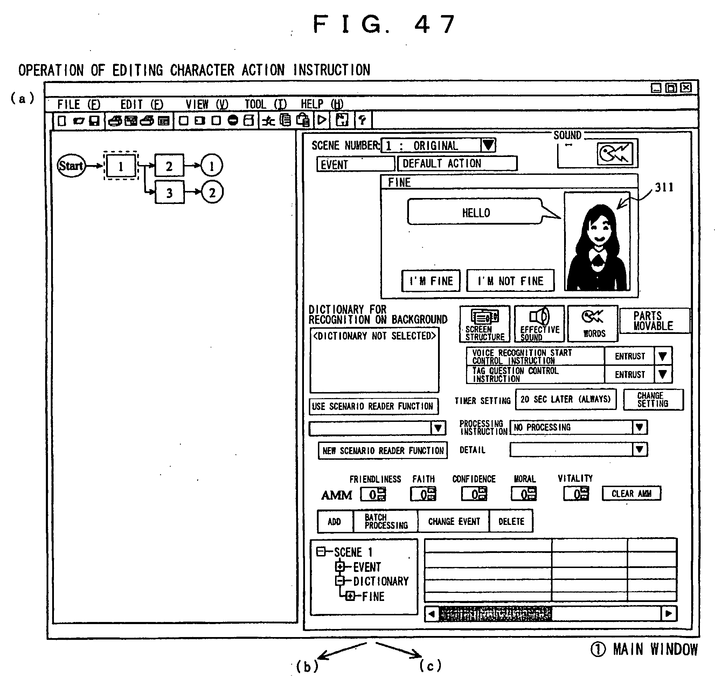

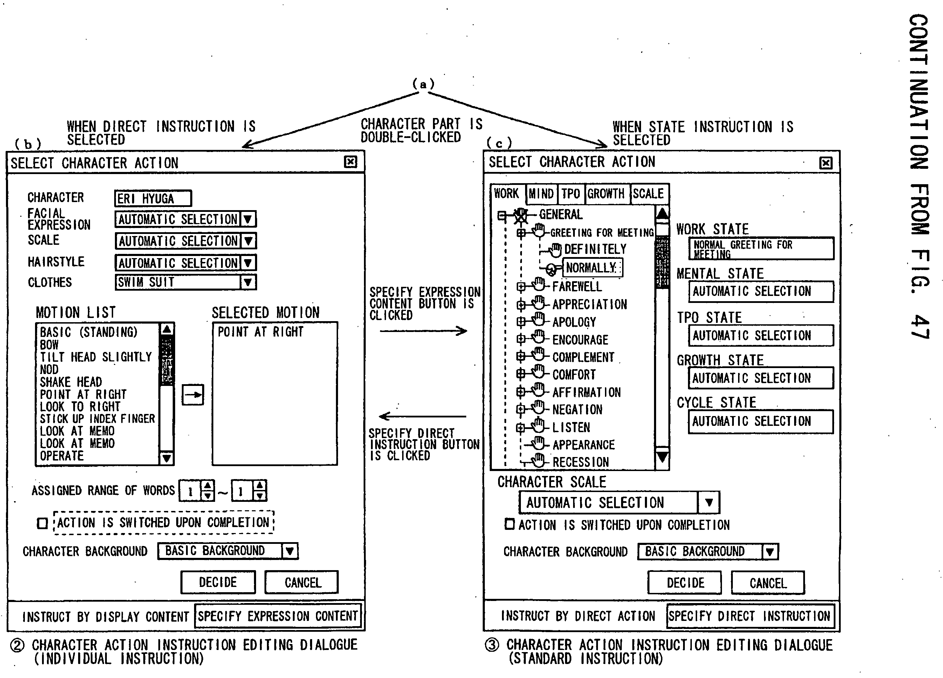

As shown in FIG. 35 and FIG. 36, each of the display state instruction tables has plural tree structures, where a form and group name of each tree structure are displayed on an editing window (FIG. 47(c)) of state instruction of character action, which is described later.

As shown in FIG. 35 and FIG. 36, each item at the ends of trees of the display state instruction table has a state instruction number. This state instruction number corresponds to the state instruction number (refer to FIG. 11) of the character image selection data (conversion table) 102353 of the agent apparatus 1.

Here, the work state table is, as shown in FIG. 35, grouped into four groups at the maximum in which display states such as basic posture, greeting for meeting, farewell, appreciation, apology, encouragement, complement, comfort, appearance, recession, prohibition, and the like are defined.

Thus, contents desired for the agent to perform are used for the names of respective groups, so that the scenario creator can easily select display states corresponding to contents of a scenario and a scene which are imaged by the scenario creator.

The mental state table is, as shown in FIG. 36, grouped into five hierarchies. As expressions of emotions, there are normally defined a delight, anger, sorrow, surprise, and so on. Besides them, disgust, friendship, sleepiness, and the like are defined.

In the TPO state table, although not being shown, there are defined groups of spring, summer, autumn, and winter and a group of month for each of a regular state, a fashion state, and the like, and public holidays (seasonal events, new year's day, children's day, Christmas day, and so on) and user specific anniversaries (anniversary of starting to use the agent apparatus, wedding anniversary, birthday, and the like) are defined for event states.

The growth state table is grouped into long term growth states 1, 2, 3, and so on, and short term growth states 1 and 2 are defined for each of them.

In the scale state table, sizes of the character to be displayed on the screen are defined, and grouping by angle of view is defined.

In these tables, as shown in FIG. 35 and FIG. 36, there is provided an item "automatic" to allow the system (agent apparatus) to automatically select levels (perform politely, perform normally, strong, middle, weak, and so on), which are defined at the lower level of hierarchy beyond the display states.

For a scene to which the "automatic" is selected, the agent apparatus judges which level of display states of a character to use by the character's mental state, date and time, and so on, and selects one of the display states to perform.

Besides these data, in the common definition DB (240-2-1), there are also stored voice recognition data used for voice recognition, data used for instructing actions of a character (instruction data of words exists separately), character image data for confirming instructions being set in each scene by previews, character word data, a conversion table for converting standard instructions which do not depend on characters into expression manners of each character, respective parts data to be displayed on the display device (2) and screen structure data in which how to arrange these parts is described, various processing contents items data of items selectable as processing contents in a scene, for example, actions which can be processed by the agent such as on/off of audio equipment, channel selection, on/off and temperature setting of an air conditioner, setting of destinations to be supplied to the overall processing unit (102), and the like.

Similarly to each of the definition data, all of the definition data can be changed and added by the DB editing tool (240-1-3).

In the character image data for confirming instructions set in each scene by previews, image data of various characters stored in the agent apparatus is stored.

Further, as the conversion table for converting standard instructions which do not depend on characters into expression manners of each character, the same conversion table as that of the character image selection data 102353 (refer to FIG. 10) in the character data (10-2-3-5) of the agent apparatus 1 is stored.

Incidentally, the user stores the character image data regarding other characters and the conversion table via an IC card 7 or a server 3 from the agent device into the common definition DB in the scenario creating apparatus 2.

Next, each operation of scenario creation using the scenario creating apparatus configured as above will be described according to transition of the screen.

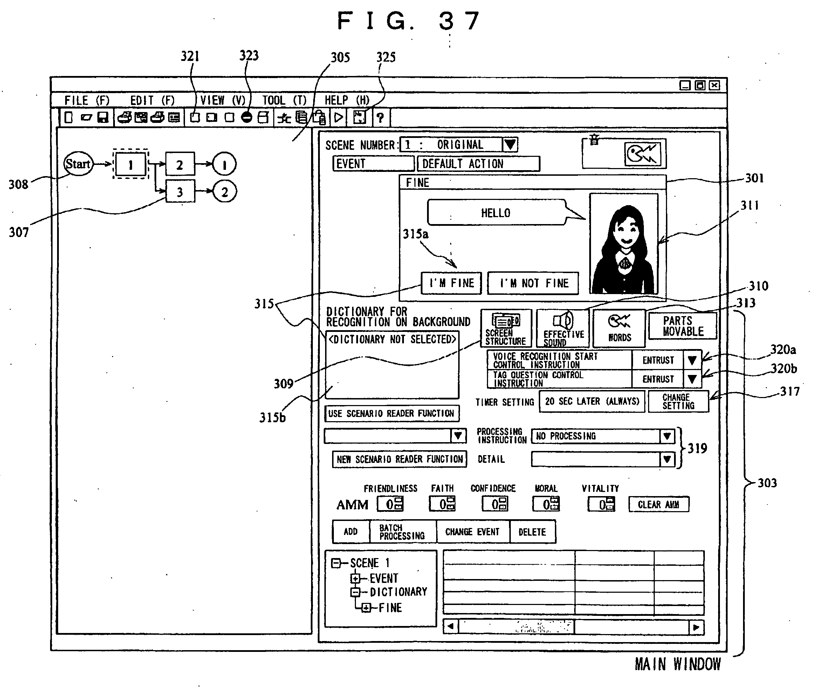

FIG. 37 is a view representing a structure of a main window displayed on the display device when the scenario editor (240-1-1) is started.

As shown in FIG. 37, the main window is constituted by a scene screen 301 which displays a scene screen being created (a scene screen (refer to FIG. 14) to be displayed on the display device (2) of the agent apparatus (1)), a setting screen 303 which displays setting items for performing various settings, and a scene development screen 305 on which development structures of scenes (branching state) are displayed by tree structures of scene icons 307 representing respective scenes.

When the scenario editor (240-1-1) is started, a start point 308 is displayed on the scene development screen 305 of the main window. By selecting this start point 308, a scenario property can be edited. The selection is performed, for example, by moving the pointing position of the mouse cursor onto the start point 308 and double-clicking the mouse.

By clicking a screen structure changing button 309, a screen structure desired to be displayed can be selected.

When an effective sound setting button 110 is clicked, as will be described later, a screen for setting effective sounds on each scene of the scenario is displayed.

When an agent display screen 311 is double-clicked by the mouse, an editing screen of actions of an agent (character) is displayed.

By clicking a word editing button 313, an instruction of words of a character can be edited.

When button parts/background voice recognition dictionary settings 315 are double-clicked, a voice recognition dictionary to be used can be edited. When the one displayed by a mark of an answer selection button 315a (54a) on the scene screen 301 is selected, the name of a word to be recognized is displayed on the scene screen, and when the other one 315b to be recognized on the background is selected, it becomes a target of the voice recognition but the name of a word to be recognized is not displayed.

A timer setting button 317 is a button for setting and changing the timer setting information as described later.

In a control instruction editing 319 of external equipment or the like, control instructions of external equipment or the like (including a navigator) are set.

In a voice recognition start control instruction 320a, an instruction of voice recognition is set to define how to start the voice recognition when the voice recognition is to be performed in a scene being created. As the instruction of voice recognition, start of voice recognition can be selected from any one of "start automatically," "do not start automatically," and "judged by the agent apparatus (on-vehicle apparatus) (entrust)."

In a tag question control instruction 320b, an instruction regarding whether or not to add a tag question for confirming a result of the voice recognition is set. As the instruction of the tag question, any one of "add tag question," "do not add tag question," and "judged by the agent apparatus (entrust)," which allows the agent apparatus to perform status judgment to determine whether or not to add a tag question, can be selected.

When a next scene creating button 321 is clicked, the flow of the scenario can be edited (a next scene is created). When a scene creating button 321 is clicked, it becomes possible to create a next scene to develop from the currently selected scene.

By branching the flow of a scenario by the scene creating button 321, a development structure of each scene is created. For example, when the next scene creating button 321 is clicked in a state that the icon 1 of a scene is selected (actively displayed state), an icon of a scene subsequent to the scene 1 is displayed on the lower hierarchy side, and by clicking it for plural number of times, scenes 2, 3, and so on, which will be developed subsequently from the scene 1 are created by branching.

Specifically, by clicking the scene creating button 321 in a state that a scene m is selected, a next scene m1 subsequent to the scene m is created. Then, by clicking the scene creating button 321 in a state that the scene m is selected again, a next scene m2 subsequent to the scene m is created branching in parallel from the scene ml. Similarly, by clicking the scene selection button 321 in a state that the scene m is selected again, a scene m3 is created.

When a scene subsequent to the scene m1 is desired to be further developed, a next scene m1-1 subsequent to the scene m1 is created by clicking the scene creating button in a state that the scene m1 is selected.

When the scene creating button 321 is clicked in a state that the scene m1-1 is created (a state that the scene m1-1 is selected), a scene m1-1-1 subsequent to the scene m1-1 is created. When creating another scene branching from the scene m1, a scene m1-2 subsequent to the scene m1 is created by clicking the scene creating button 321 in a state that the scene m1 is selected again.

By clicking a scenario end point creating button 323, a scenario end point can be created. Each created scenario end point is assigned an end number as an end ID.

By clicking a scenario compile button 325, the created scenario can be compiled into an actual device format (NAV format) to be used for navigation.

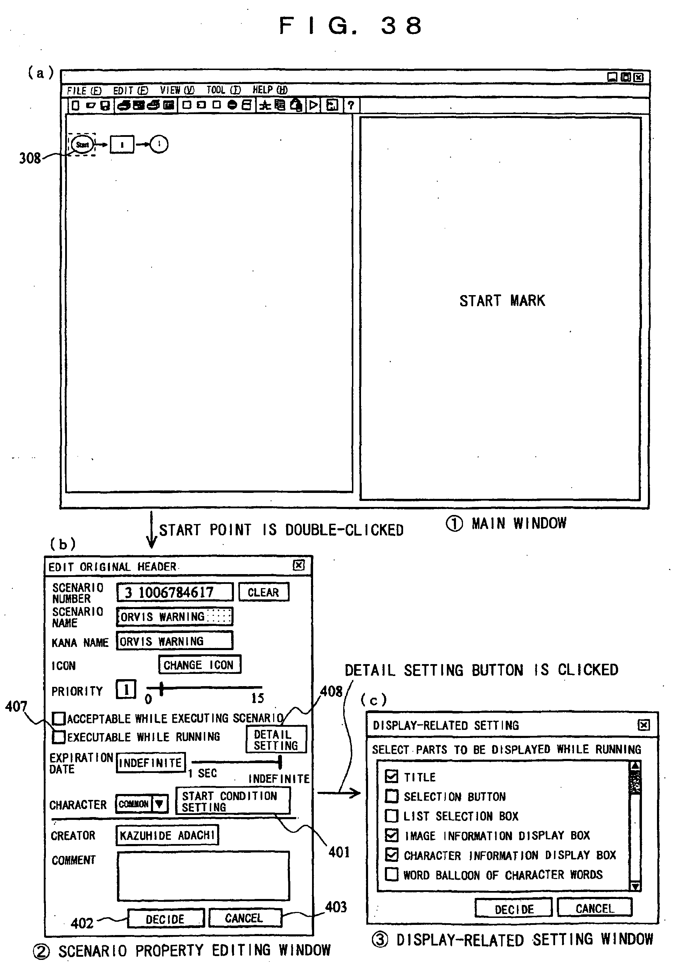

FIG. 38 is a view representing a flow of screen operation to edit a scenario property.

On a main window shown in FIG. 38(a), by double-clicking the start point 308 displayed in the scene development screen 305, a scenario property editing window shown in FIG. 38(b) is displayed to overlap on the main window.

On this scenario property editing window, it is possible to input a scenario name, input a katakana name, select an icon, set a priority, set an expiration date (the maximum value of a time lag from satisfying a start condition until an actual start thereof), set an execution condition while running, set an autonomous start condition of a scenario (separate window), input a creator's name, and input a comment. The scenario name input and kana name input which are inputted in this screen will be management data or the like in scenario data of the actual device fonnat.

On the scenario property editing window, when a "decide" button 402 is clicked, the editing contents are reflected on the data and the program returns to the main window. On the other hand, when a "cancel" button 403 is clicked, the editing contents are not reflected on the data and the program returns to the main window.

Although not being shown, on the scenario property editing window, when a "start condition setting" button 401 is clicked, a main editing window of the scenario start condition (autonomous start condition) is displayed to overlap thereon.

When a "complete" button is clicked on the main editing window of the scenario start condition, the editing of the scenario start condition is ended, and the program returns to the scenario property editing window (FIG. 35(b)).

Further, on the scenario property editing window (FIG. 38(b)), an execution condition while running is set by a checkbox 407 "enable execution while running" and a "detail setting" button 408.

Specifically, when the checkbox 407 "enable execution while running" is not checked (default state), the scenario data is set to be inexecutable while running.

When this inexecutable while running is selected, the created scenario is executed in the agent apparatus only when the vehicle is stopped, and when the vehicle start running on the middle thereof, the scenario being executed is interrupted by the scenario interruption processing (FIG. 28).

On the other hand, when the checkbox 407 "enable execution while running" is checked, the scenario data is set to be restrictively executable while running. Also, when the checkbox 407 is checked, the "detail setting" button becomes active (selectable), which displays a display-related setting window (FIG. 38(c)) to overlap thereon when left-clicked by the mouse.

On this display-related setting window, among all items (parts) constituting the scene screen, all items selectable by the user as the item selectively hidden while running are displayed in a list.

FIG. 39 is a view representing an example of a table of restrictive execution while running which defines default values of displaying/hiding while running for respective items constituting the scene screen.

As shown in FIG. 39, for respective items (parts) of the scene screen, any one of four types, "permanently displayed while running," "permanently hidden while running," "selected by the editor (default is "displayed")," and selected by the editor (default is "hidden"), is selected.

Among the items displayed in this table of restrictive execution while running, respective items which are set to be selected by the editor are displayed in a list on the display-related setting window in FIG. 38(c). When the items are displayed in the list for the first time, the displayed checkboxes of items having a default value "display" are checked in advance.

When the creator of the scenario data sets each item to display/hide, the creator selects the "detail setting" button 408 to display the display-related setting window (FIG. 38(c)), and thereafter checks the checkbox of an item which is desired to be displayed while running, and clears the checkbox of an item which is desired to be hidden while running. Then, the creator selects the "decide" button so that the item having unchecked checkbox is reflected on the scenario data as an item selectively hidden while running.

Thus, the creator of the scenario data can set to display/hide respective items while running according to the contents of the scenario being created.

Incidentally, regarding items not displayed in the list on the display-related setting window, the items defined to be permanently hidden (for example, the slider bar) on the table of restrictive execution while running in FIG. 39 are items permanently hidden while running, which are automatically set in the scenario data as items selectively hidden while running.

In reverse, items defined to be permanently displayed (for example, the background and the character) will not become items selectively hidden while running.

Thus, by checking/unchecking the checkbox 407 "enable execution while running," the scenario being created can be easily set to be either restrictively executable while running or inexecutable while running. Further, when the scenario is set to be restrictively executable while running, each predetermined item constituting the scene screen can be set as items selectively hidden while running (unchecked state) on the display-related setting window (FIG. 38(c)) which is further displayed by selecting the "detail setting" button 408.

Incidentally, when the creator of the scenario checks the checkbox 407 "enable execution while running" but does not select the "detail setting," forced settings (permanently displayed/permanently hidden) and default settings on the table of restrictive execution while running (FIG. 39) are reflected on the scenario data.

As described above, according to the running state of the vehicle, by restricting execution of at least a part of the screen elements (scenes), a setting means of execution condition while running according to the present invention is formed, and by setting whether or not to stop display of a part or the whole of the screen structure corresponding to the running condition, a display stop setting means according to the present invention is formed.

On the other hand, on the scenario property editing window (FIG. 38(b)), when the "start condition setting" button 401 is selected, the main editing window of the scenario start condition is displayed.

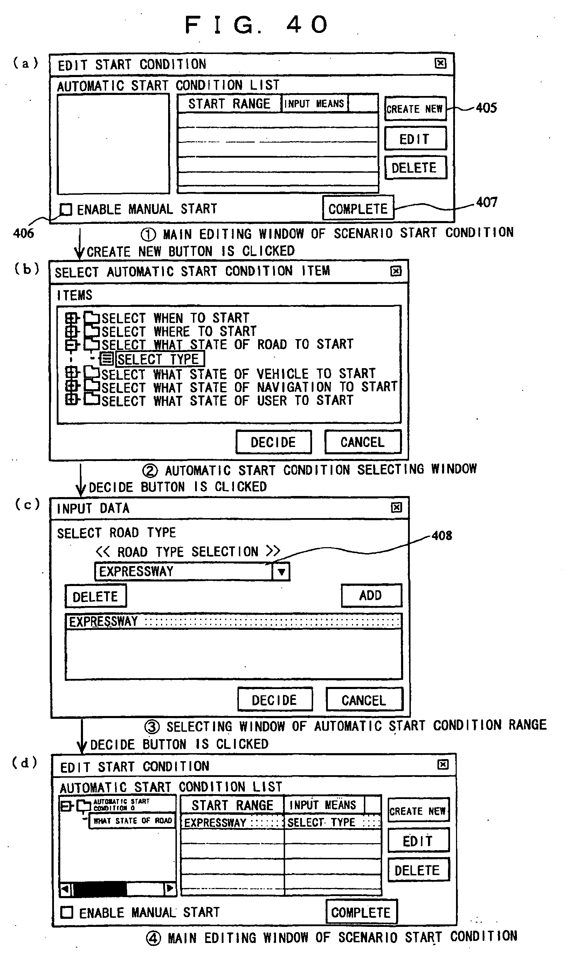

FIG. 40 is a view representing a flow of screen operation for editing the scenario start condition from the main editing window of the scenario start condition.

On the main editing window of the scenario start condition (FIG. 40(a)), the user can set the scenario to be manually started. In this example, a checkbox 406 is unchecked to set the scenario not to be started manually.

The automatic start condition (autonomous start condition) list on the left side of the main editing window of the scenario start condition (a) displays a condition of the system to automatically start a scenario. In the state in FIG. 40(a), the list is in a blank state because nothing is set yet.

On the main editing window of the scenario start condition (FIG. 40(a)), when a "create new" button 405 is clicked, an automatic start condition selecting window (FIG. 40(b)) is displayed on which a new start condition can be edited.

On the automatic start condition selecting window (FIG. 40(b)), when a judgment condition item (category) desired to be set is selected and a "decide" is clicked, it proceeds to a selecting window of an automatic start condition range (FIG. 40(c)). In the example of FIG. 40(b), the scenario is desired to be automatically started (autonomous start) while running on an expressway, so that "select type" in "select what state of road to start the scenario" is selected and the "decide" is clicked.

When the "cancel" is clicked, the program returns to the main editing window of the scenario start condition (FIG. 40(a)).

Items which can be displayed and selected on the automatic start condition selecting window (FIG. 40(b)) are the automatic start items shown in FIG. 30. In FIG. 40(b), when inside the folder of "select when to start the scenario" is selected, the condition items of No. 1 to No. 10 in FIG. 30 are displayed on a hierarchy one level lower thereof.

Similarly, the No. 1 to 16 are displayed when the folder of "select where to start the scenario" is selected, the No. 21 to No. 23 are displayed when the folder of "select what state of the road to start the scenario" is selected, the No. 17 to No. 20 are displayed when the folder of "select what state of vehicle to start the scenario" is selected, the No. 21 to No. 28 are displayed when the folder of "what state of navigation to start the scenario" is selected, and the No. 29 and No. 30 are displayed when the folder of "select what state of the user to start the scenario" is selected respectively on a hierarchy one level lower thereof.

On the selecting window of the automatic start condition range (FIG. 40(c)), the structure of the window changes according to the judgment condition item (category) selected on the previous window (b). In the shown example, a window of an item to select a road type is displayed.

The selectable items on the selecting window of the automatic start condition range (FIG. 40(c)) are the selectable items (FIG. 31) corresponding to the automatic start items selected on the automatic start condition selecting window (FIG. 40(b)). These selectable items are displayed by a pull-down menu by clicking a mark on the right side of the selectable item field 408.

When a condition range to permit the automatic start is selected from the list (or inputted by a numeral) and an "add" button is clicked, the selected item is set and displayed in a field therebelow. In the shown example, the case that an "expressway" is selected and the "add" button is clicked is shown.

When the "decide" button is clicked on the selecting window of the automatic start condition range 40(FIG. 40(c)), the setting state is decided and the program returns to the main editing window of the scenario start condition (FIG. 40(d)).

When the "cancel" is clicked, the program returns to the automatic start condition selecting window (FIG. 40(b)).

On the main editing window of the scenario start condition in FIG. 40(d), the automatic start condition set by the above operation (to start when the road type is expressway) is displayed on the automatic start condition list on the left side.

Further, when an automatic start condition displayed in the automatic start condition list screen is selected and the "edit" button is clicked, the automatic start condition selecting window (FIG. 40(b)) for further adding a condition setting to the selected condition is displayed.

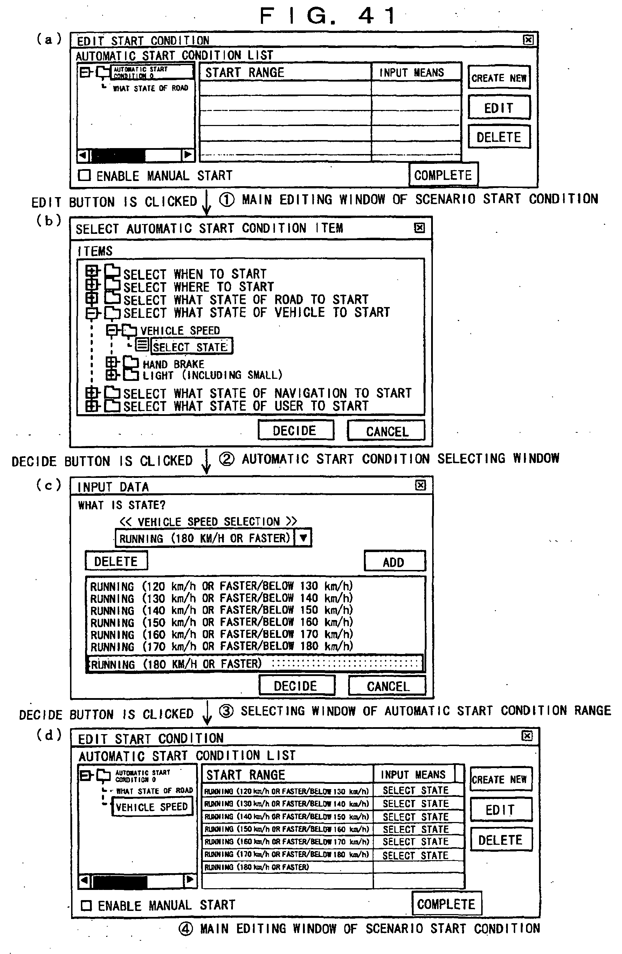

Next, operation to set an autonomous start condition in which a condition "and the vehicle speed is 120 km/h or faster" is added to the condition setting "when the road type is expressway" will be described according to screen transition shown in FIG. 41.

The automatic start condition list on the left side of the main editing window of the scenario start condition (FIG. 41(a)) displays the condition to automatically start the scenario (autonomous start condition) that is already set. In FIG. 41(a), the condition to automatically start when the road type is expressway is displayed, which is exemplary set in FIG. 40. In other words, as a first content of the automatic start condition 0 (zero) displayed on the automatic start condition list on the left field, the condition "select what state of the road to start the scenario" is displayed, and when its folder is selected, specific contents therein are displayed on the start range field on the right side (refer to FIG. 40(d)).

When setting other condition (AND condition) which will be a logical multiplication to the conditions included in the folders of respective hierarchies displayed on the automatic start condition list, a folder at a hierarchy one level higher is selected (FIG. 41(a)) and the "edit" button is clicked.

By clicking the "edit" button; the automatic start condition selecting window for setting the AND condition (FIG. 41(b)) is displayed.

Then, on the automatic start condition selecting window (FIG. 41(b)), a folder including conditions to be set as the AND condition is opened, an item which is desired to be set as the condition to automatically start is selected, and the "decide" is clicked.

In this example, the scenario is desired to automatically start when running at the vehicle speed of 120 km/h or faster, so that, as shown in FIG. 41(b), the item "select by state" below "vehicle speed" under "select what state of the vehicle to start the scenario" is selected and the "decide" is clicked.

By clicking this "decide" button, the selecting window of the automatic start condition range (FIG. 41 (c)) is opened.

Incidentally, by clicking the "cancel", the program can return to the main editing window of the scenario start condition (FIG. 41(a)).

On the selecting window of the automatic start condition range (FIG. 41(c)), the display structure of the window differs according to the item of the condition to automatically start selected on the previous window (the automatic start condition selecting window). In this example, a window on which the type of vehicle speed can be selected is displayed as shown in FIG. 41(c).

A condition range to automatically start is selected from the list, and the "add" button is clicked to set it. In this example, operation of selecting a condition which corresponds to 120 km/h or faster and clicking the "add" button are repeated to select all corresponding conditions. The selected conditions are all displayed in the field therebelow, and the respective conditions displayed in this field become a condition of logical add (OR condition).

When the "decide" button is clicked, the setting state at this moment is decided and the program returns to the main editing window of the scenario start condition (FIG. 41(d)).

Incidentally, when the "cancel" is clicked, the program can return to the automatic start condition selecting window (FIG. 41(b)).

On the main editing window of the scenario start condition (FIG. 41(d)) after the decision, the condition to start automatically (start automatically when the road type is expressway) that is set by the previous operation to which the condition that is set by the aforementioned operation (and start automatically when the vehicle speed is 120 km/h or faster) being added is displayed on the automatic start condition list on the left side.

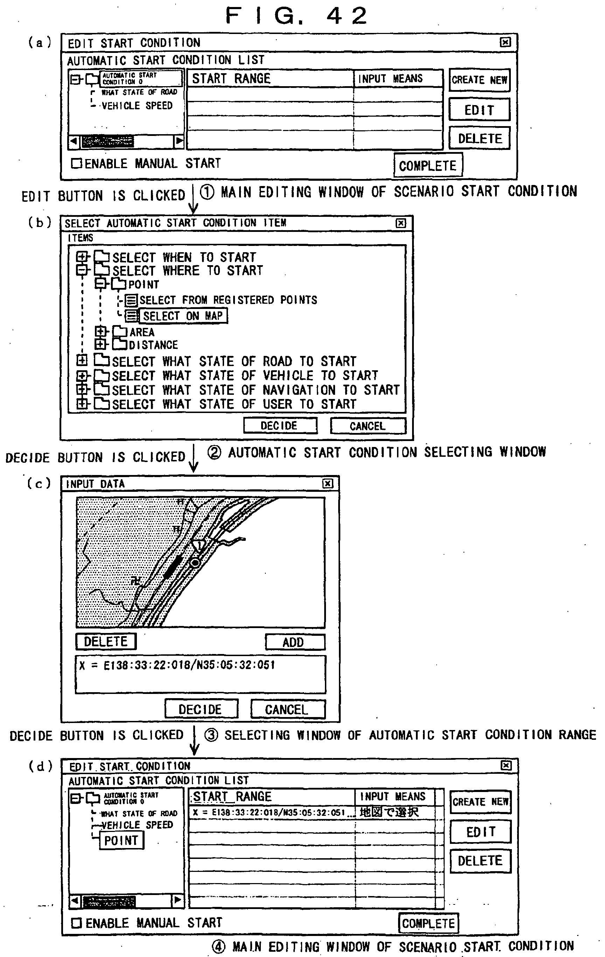

Next, operation to add a condition "and when it is at the point 2 km before the Orvis installed adjacent to the Yui PA on the downbound line of the Tomei Expressway" as an AND condition further added to the condition setting "when the road type is expressway" and "when the vehicle speed is 120 km/h or faster" will be described with reference to FIG. 42.

On the main editing window of the scenario start condition shown in FIG. 42(a), the condition of the agent system to automatically start the scenario (the autonomous start condition which is already set) is displayed on the automatic start condition list on the left side. Specifically, the condition to start automatically "when the road type is expressway" and "when the vehicle speed is 120 km/h or faster," which is set by the operation up to this point, are displayed. In order to set the AND condition added to both the conditions, the automatic start condition 0 (zero) at the hierarchy one level higher is selected and the "edit" is clicked to proceed to the automatic start condition selecting window (b).

On the automatic start condition selecting window (FIG. 42(b)), an item desired to be set as the condition to automatically start is selected and the "decide" is clicked. In this example, the scenario is desired to automatically start when the vehicle is at a specific point, so that the item "select on map" below "point" under "select when to start" is selected.

Incidentally, when "select from registered point" is selected, a list of already registered points (for example, points registered by the user such as a home, a company, a supermarket, a golf course and so on, and points registered as destinations in the navigation device, which are stored in the common definition DB (240-2-1) via the DB editing tool (240-1-3) by an IC card or the like) is displayed.

On the selecting window of the automatic start condition range (FIG. 42(c)), the window structure changes according to the item desired to be set as the condition to automatically start on the previous window (b). In this example, it shows a window on which a point can be selected from a map. Data of the map is read from the common definition data (240-1-1) in the storage device (240) and displayed. Incidentally, the used map is preferred to be the same as the map used in the navigation function of the agent apparatus, but a different map can be used when it is capable of specifying absolute coordinates (longitude and latitude). Regarding the map data, a map stored on a CD-ROM or DVD for navigation may be used, or a map downloaded via a network such as the internet or the like or other maps may be used.

On the selecting window of the automatic start condition range (27(c)), a condition range which may start automatically is selected from the map (the desired point is clicked) and set by clicking the "add" button. In this example, the point 2 km before the Orvis installed adjacent to the Yui PA (Parking Area) on the downbound line of the Tomei Expressway is selected by clicking on the map and further set by clicking the "add" button.

When the "decide" button is clicked, the set state is decided and the program returns to the main editing window of the scenario start condition shown in FIG. 42(d).

On the main editing window of the scenario start condition which is exemplary shown in FIG. 42(d), the condition to start automatically (start automatically when the road type is expressway and when the vehicle speed is 120 km/h or faster) that is set by the operation up to this point to which the condition set by this operation (and start automatically when it is at the point 2 km before the Orvis installed adjacent to the Yui PA on the downbound line of the Tomei Expressway) being added is displayed on the automatic start condition list on the left side.

When the "complete" button is clicked on the main editing window of the scenario start condition (d), the scenario start condition editing is finished.

Thus, there is completed a condition setting to automatically start when the vehicle is at the point 2 km before the Orvis installed adjacent to the Yui PA on the downbound line of the Tomei Expressway, the road type is expressway, and the vehicle is running at the vehicle speed of 120 km/h or faster.

When a further AND condition is desired to be set, plural conditions of logical multiplication can be set by repeating the similar processing.

Next, selecting windows of automatic start condition range for setting conditions desired to be started which are often used besides the above-described examples will be described.

Each of the windows is displayed by selecting a relevant item on the automatic start condition selecting window and clicking the "decide" button.

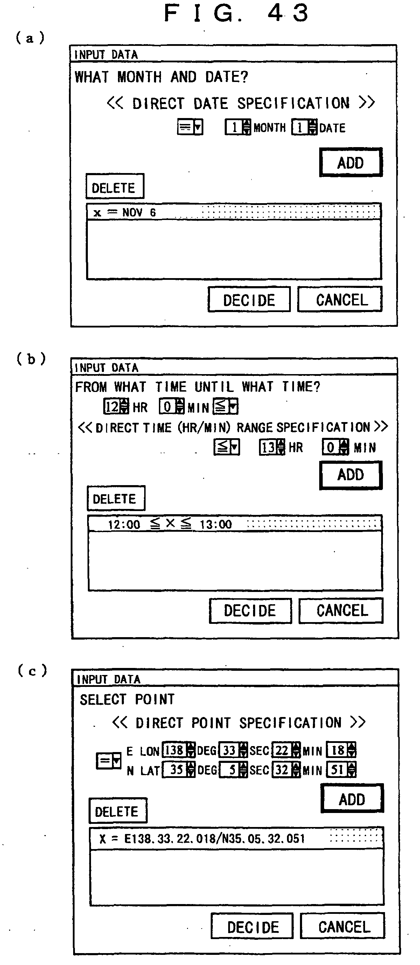

FIG. 43(a) is a selecting window of an automatic start condition range for inputting a date.

On this window, when a date desired to automatically start the scenario is inputted and an "add" button is clicked, the date is reflected in a condition display field therebelow, and when a "decide" button is further clicked, the date is set as a condition.

FIG. 43(b) is a selecting window of an automatic start condition range for inputting a time.

Also on this window, when a time desired to automatically start the scenario is inputted and the "add" button is clicked, the time is reflected in the condition display field therebelow, and when the "decide" button is further clicked, the time is set as a condition.

FIG. 43(c) is a selecting window of an automatic start condition range for inputting a point by coordinates of east longitude and west latitude.

On this window, when a point desired to automatically start the scenario is inputted by the coordinates of east longitude and west latitude (1/128 second unit) and the "add" button is clicked, the point is reflected in the condition display field therebelow, and when the "decide" button is further clicked, the time is set as a condition.

As has been described above, according to the scenario creating apparatus of this embodiment, the timing (plural conditions) to automatically start a created scenario is freely set. For example, it is also possible to create a creator's original scenario that starts only once every year on a particular day (for example, the Christmas Eve, a birthday, a marriage anniversary, or the like).

Settable conditions correspond to various status which can be detected by the agent apparatus that actually executes the created scenario, so that the scenario can be surely started when the set condition is satisfied. In other words, it is possible to set a condition that can surely start a scenario.

Since the agent apparatus of this embodiment is mounted on a vehicle and has a navigation function, it is possible to set a condition to autonomously start a scenario in cooperation with the navigation. For example, as an autonomous start condition of a scenario of introducing a place to have a rest while traveling on a vehicle, a condition to autonomously start when two hours passes from the engine is started and it is not in the vicinity of the user's home (for example, it is outside the circle of 20 km from the home) can be set.

Further, according to this embodiment, for example, it is possible to change a condition of a vehicle speed to 140 km/h or faster among conditions of a scenario to automatically present the agent and warn of an Orvis at a point 2 km before a location where the Orvis is set (specified by the coordinates of east longitude and west latitude), the road type is express way, and when the vehicle is running at the vehicle speed of 120 km/h or faster.

In this case, a folder including the condition desired to be changed on the automatic start condition list of the main editing window of the scenario start condition is selected so that the condition "120 km/h or faster" that is desired to be changed is displayed in the field of 1 "start range" on the right side. The displayed condition is then selected and the delete key is pressed, and thereafter the condition of 140 km/h is newly set.

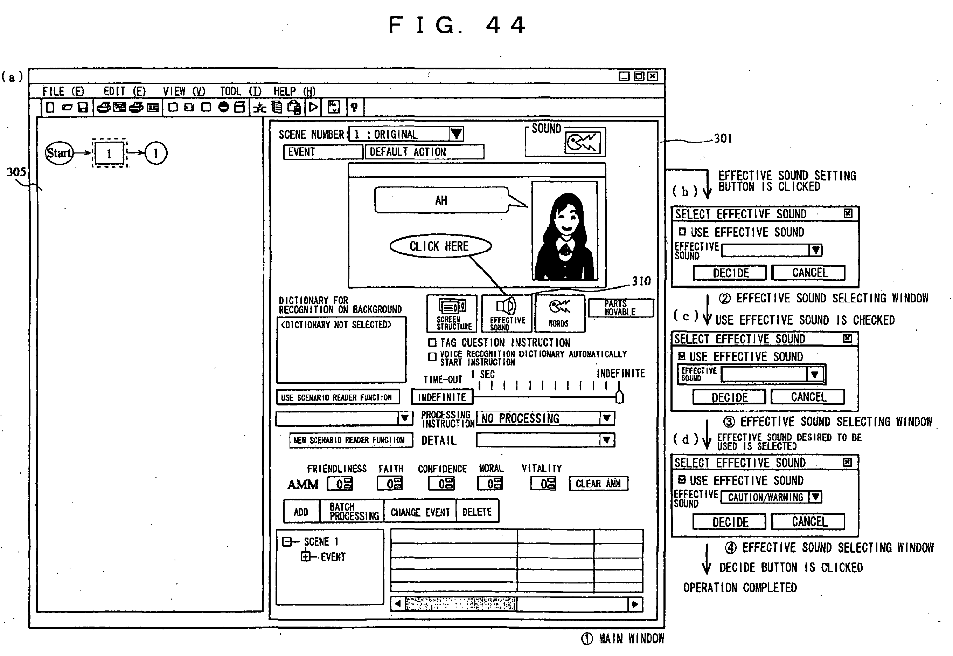

Next, an operation procedure of an effective sound setting means in this embodiment for setting effective sounds in each scenes of a scenario will be described with reference to FIG. 44.

This effective sound setting can be set in each scene besides the case that the agent autonomously appears.

On the main screen of the scenario editor shown in FIG. 44(a), on a scenario diagram displayed on the scene development screen 305 on the left side, a scene 1 is selected (clicked) to specify the scene on which the effective sound is set.

Then, the effective sound button 310 displayed on the main window is clicked to display an effective sound selecting window (FIG. 44(b)) (effective sound displaying means).

On the effective sound selecting window (b), a checkbox 1 "use effective sound" is checked to set so that the effective sound is used.

Then, as shown in FIG. 44(c), on the effective sound selecting window, a selection box for selecting an effective sound becomes active (selectable). In this selection box, respective names of plural effective sounds are displayed in a pull-down menu, and a needed sound is selected. Here, an example of the case selecting an effective sound of "caution/warning" is displayed.

There exist plural types of selectable effective sounds, which are grouped into start sound, notification, accident, operation on behalf of the driver, caution/warning, and so on and named to be displayed in the pull-down menu.

When an effective sound is selected on the effective sound selecting window (c), a "decide" button becomes active (d), and then the "decide" button is clicked to decide the effective sound (effective sound selecting means).

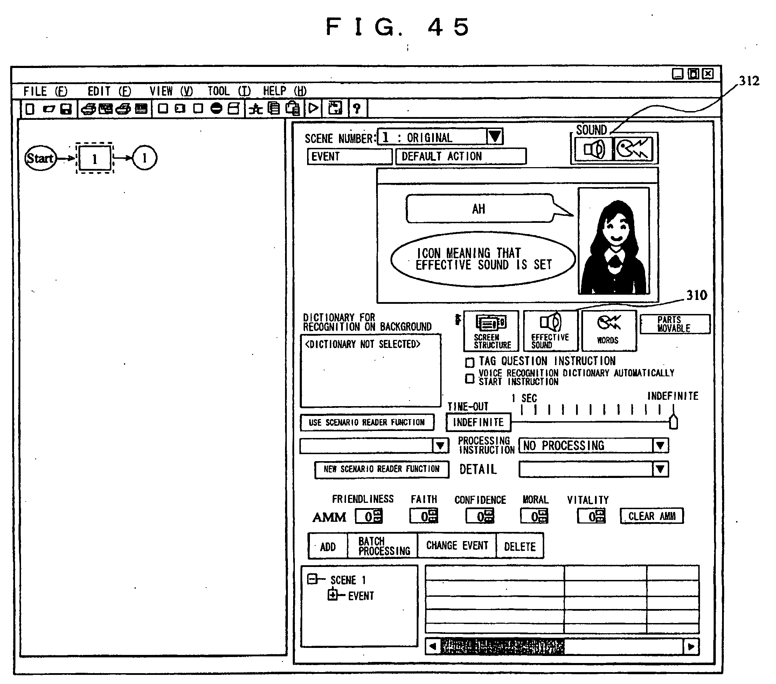

Accordingly, as shown in FIG. 45, an effective sound setting icon 312 indicating that the effective sound is set is displayed on a top right position of the scene detail setting region on the right side of the main window.

The creator of the scenario can know the setting status of the effective sound from existence of the effective sound setting icon 312 on the main window for each scene.

Next, various operation of creating a scenario other than the setting of the autonomous start condition and the effective sound will be described.

FIG. 46 is a view representing a flow of screen operation of selecting a screen structure desired to be displayed on the agent display screen 51 (refer to FIG. 14).

When the scene icon 307 displayed on the scene development screen 305 of the main window shown in FIG. 46(a) is selected to be active state, the scene screen 310 corresponding to the selected scene icon is displayed. The screen structure changing button 309 on the setting screen 303 is then clicked to display a selecting window of the screen structure (b).

On the selecting window (b) of the screen structure, screen structures which can be displayed on the scene display screen 54 (refer to FIG. 14) are displayed in an overall view. Various selectable screens such as a basic screen on which nothing is displayed, a two-selection screen on which two selection buttons are displayed, a button selection screen on which plural selection buttons are displayed, a list selection screen on which plural items such as prefectural names and the like are displayed in a list, an image display screen to display image data, and the like are displayed.

Among the respective screen structures displayed in the overall view, one screen structure is selected and a "decide" button is clicked. When the screen structure is changed, the change is confirmed by a confirmation dialogue, and thereafter, the screen structure is changed and the program returns to the main window (a). When the program returns to the main window, the scene screen 301 being changed to the newly selected screen structure is displayed.

Hereinafter, FIG. 47 to FIG. 49 form a screen element setting means for setting a screen structure based on display contents (images and voices) and processing contents of a character as well as a character setting means according to the present invention.

FIG. 47 is a view representing a flow of screen operation of editing a character action (agent action) instruction.

On the main window (FIG. 47(a)) representing a editing state of a scene screen, when an agent display screen 311 is double-clicked by a mouse, an action instruction editing dialogue (individual instruction) (b) or a character action instruction editing dialogue (standard instruction) (c) is displayed.

Regarding which window to be displayed, a previously used window is displayed such that (b) is displayed when the previous action instruction is instructed by a direct instruction for each character, and (c) is displayed when the previous action instruction is instructed by a state that is desired to be expressed by the character. When it is used first time, the character action instruction editing dialogue (standard instruction) (c) is displayed.

In the character action instruction editing dialogue (individual instruction) of FIG. 47(b), a motion (action), a facial expression (element of expressing emotion), a hairstyle (element of expressing growth), clothes (element of expressing TPO), a scale (element of a camera angle assuming that the character display region is a frame of a camera), a range of moving lips (range of assigning words), an action instruction timing, and a background of the character display region are selected.

In the character action instruction editing dialogue (individual instruction) of FIG. 47(b), when a "decide" button is clicked, the edited contents are reflected on the data and the program returns to the main window (a). When a "cancel" button is clicked, the program returns to the main window (a) without reflecting the edited contents on the data.

Further, when a "specify expression contents" button is clicked, the window switches to the character action instruction editing dialogue (standard instruction) (c).

When an action instruction (expression state) is selected in the character action instruction editing dialogue (individual instruction), a scene is defined as an action specific to the character. In this case, the agent apparatus 1 judges that, during character drawing/voice output processing in the drawing/voice output unit (101-5) of FIG. 23, it is not a standard action instruction which does not depend on a character (Step 505-6-6-1; N).

In the character action instruction editing dialogue (standard instruction) of FIG. 47(c), as states expressed by the character, elements of work, elements of mental state, elements of TPO expression, elements of expressing growth, and scale elements (element of a camera angle assuming that the character display region is a frame of a camera) corresponding to the standard action instruction table which does not depend on a character (refer to FIG. 35 and FIG. 36) stored in the common definition DB (240-2-1) are selectably displayed. Also, a selection window of an action instruction timing and a background of the character display region are displayed.

When the user selects each of the display states displayed on the character action state instruction editing window, the display state number corresponding to the display state selected as an action that does not depend on a character and is common to each character is set as a content of the scene that is being set.

On this window, when the "decide" button is clicked, the edited contents are reflected on the data and the program returns to the main window (a). When the "cancel" button is clicked, the program returns to the main window (a) without reflecting the edited contents on the data.

When a "specify direct instruction" button is clicked, the window switches to the character action instruction editing dialogue (individual instruction) (b).

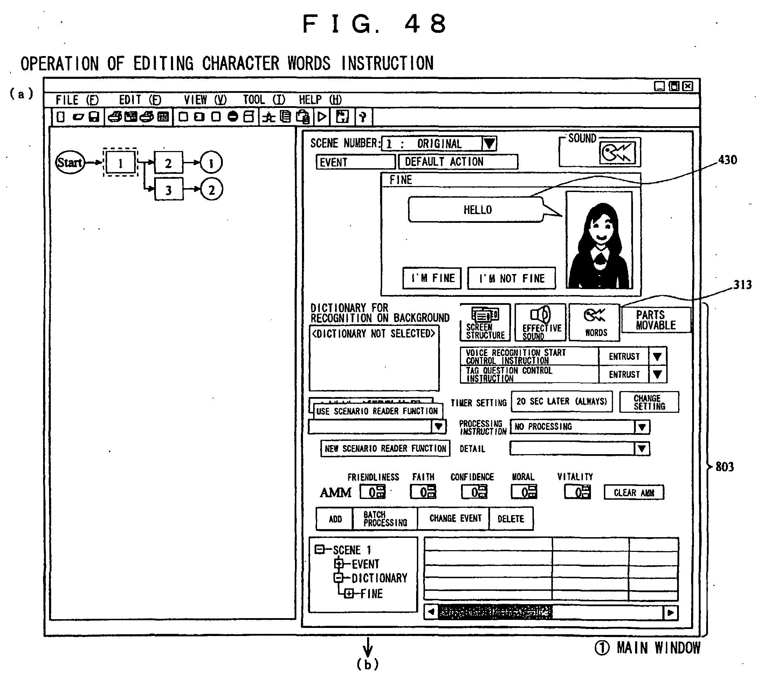

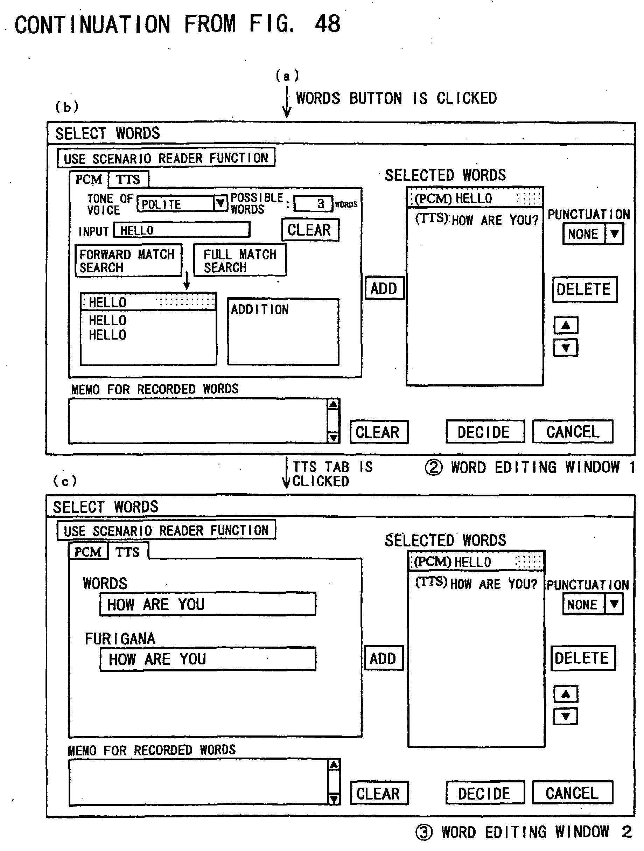

FIG. 48 is a view representing a flow of screen operation of editing a word instruction of a character (agent).

On the main window (FIG. 48(a)) representing an editing state of a scene screen, when the word editing button 313 on the setting screen 303 is clicked, a word editing window 1(b) is displayed.

On this word editing window 1(b), a tab screen "PCM" is displayed on which an instruction of PCM (voice data which is recorded and prepared) can be made.

When a "TTS" tab is selected on the word editing window 1(b), a word editing window 2(c) is displayed on which an instruction of TTS (synthesized voice) can be made.

In the case of PCM, words are inputted by double byte hiragana (aforementioned input box) and a search is performed to find pertinent words (a "search" button is clicked: two types of search methods, forward match and full match, are prepared), and the words are selected from the search result (there exists a search result list display field) so as to set the words for a character to speak (by clicking an "add" button).

In the case of TTS, a words name (data for displaying a word balloon) and furigana (data for creating a synthesized voice) are inputted to set (by clicking the "add" button) the words for the character to speak.

On the word editing windows 1(b) and 2(c), when a "decide" button is clicked, the editing contents are reflected as data for the word balloon screen 430 and the program returns to the main window (a), and when a "cancel" button is clicked, the program returns to the main window (a) without reflecting the editing contents on the data.

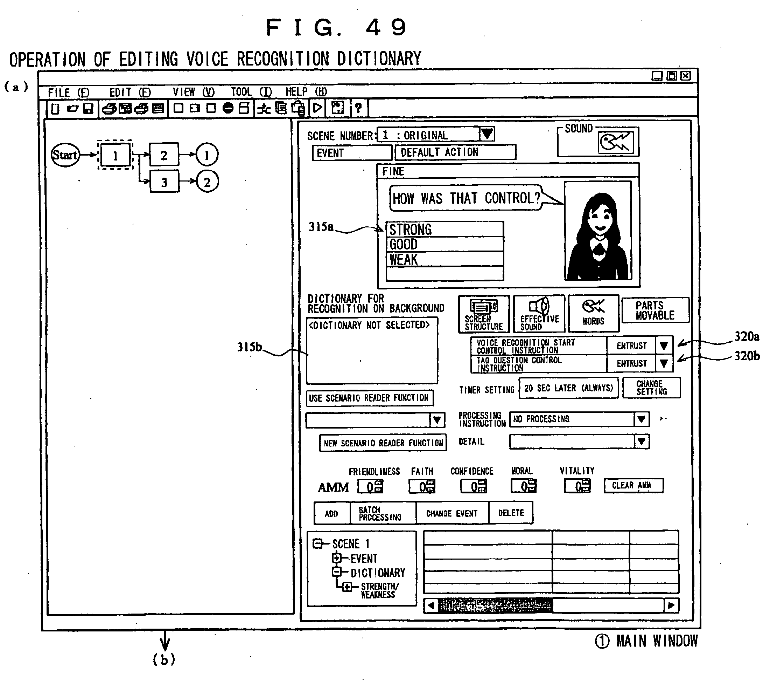

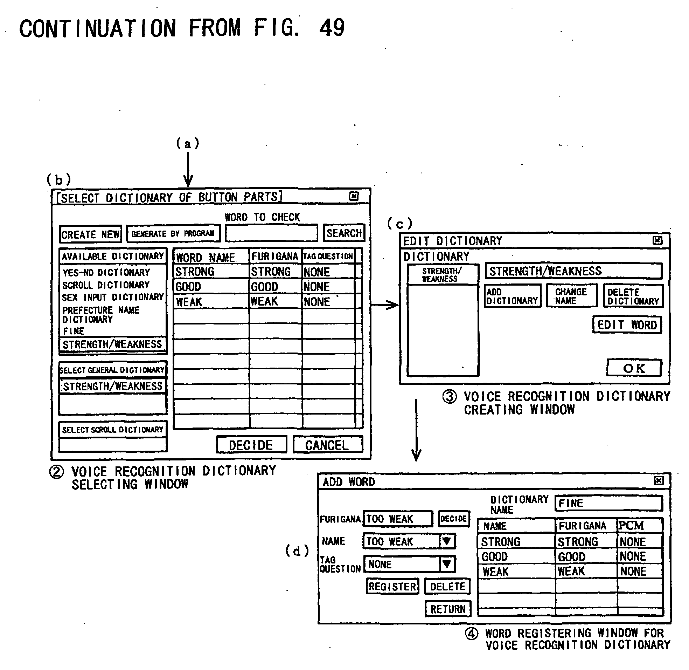

FIG. 49 is a view representing a flow of screen operation of editing a voice recognition dictionary.

This operation is to set a voice dictionary for recognizing an answer in voice returned from the user with respect to a question from the agent apparatus side to request an answer.

As an example, FIG. 49 represents screen operation in one scene of a scenario to perform travel control of a vehicle, in which the user is asked about an impression of the control after the travel control is completed, and an answer thereof is recognized.

On a main window (FIG. 49(a)) representing an editing state of the scene screen, by selecting an inverted triangle button displayed on the right side of the voice recognition start control instruction 320a, a pull-down menu is displayed. In the pull-down menu, "automatically start," "do not automatically start," and "entrust" (a case that the agent apparatus (on-vehicle apparatus) judges) are displayed. The user selects one instruction of voice recognition from this display (voice recognition start setting means). Incidentally, when the instruction of voice recognition that is already displayed is satisfactory, the instruction being displayed is selected by leaving as it is without displaying the pull-down menu. As described above, when the user is not setting a condition whether to start the voice recognition or not ("automatically start" or "do not automatically start"), the start of voice recognition is set to be judged by a predetermined condition ("entrust"), thereby forming an on-vehicle judgment setting means.

The instruction of voice recognition selected by the user is set as scene data of a selected scene.

Thus, the scenario creating apparatus 2 in this embodiment has a function to set an instruction (an instruction of voice recognition) whether to automatically start voice recognition or not, so that the creator of a scenario can set how to start the voice recognition in the agent apparatus 1.

By setting the voice recognition to "automatically start," the driver who is the user can answer (perform voice input) without selecting a trigger of starting the voice recognition (pushing a recognition start button). Thus, a driver who is the user of the agent apparatus can omit a step of operating equipment such as pushing a voice recognition start button when answering a question in conversation with a personified character. Further, since this step does not exist in a conversation between humans, the conversation with the personified character can be made closer to a conversation between humans than before as a result of the present invention.

Further, in the scenario creating apparatus 2 of this embodiment, "entrust" (to be judged by the agent apparatus) can be set as the instruction of voice start. In a scene in which the "entrust" is set, the agent apparatus selects whether or not to start the voice recognition according to the level of driving load.

Therefore, since the voice recognition is not started when the load is high, such as during operation of changing direction on an intersection or the like, and the start sound of requesting a voice input (answer by the driver) is not outputted, so that the driver can concentrate on' the driving operation having high load.

Further, on the main window (FIG. 49(a)) representing the editing state of the scene screen, by selecting a inverted triangle button displayed on the right side of the tag question control instruction 320b, a pull-down menu is displayed. In this pull-down menu, "add tag question," "do not add tag question," and "entrust" (a case that the agent apparatus (on-vehicle apparatus) judges) are displayed. From this display, the user selects one instruction of tag question control (voice recognition confirmation. setting means). Incidentally, when the instruction of voice recognition that is already displayed is satisfactory, the instruction being displayed is selected by leaving as it is without displaying the pull-down menu.

The instruction of the tag question control which is selected by the user is set as scene data for determining whether or not to add a tag question after voice recognition in a selected scene.

Thus, when the user does not set the condition whether or not to confirm a recognition result of voice recognition ("add tag question" or "do not add tag question"), the recognition result confirmation of voice recognition is set to be confirmed by a predetermined condition ("entrust"), thereby forming an on-vehicle confirmation setting means according to the present invention.

Thus, the scenario creating apparatus 2 in this embodiment has a function to set an instruction whether or not to add a tag question (the tag question control instruction) when an answer in voice from the user is voice-recognized, so that a scenario creator can set whether or not to add a tag question after the voice recognition in the agent apparatus 1.

In the scenario creating apparatus 2 of this embodiment, "entrust" (to be judged by the agent apparatus) can be set as the instruction of the tag question control, and in a scene in which the entrust is set, the agent apparatus performs status judgment by the number of words which are targets of the recognition (the number of words in the answer voice recognition dictionary) and the vehicle speed so as to determine whether or not to add a tag question to a recognition result.

Thus, in a conversation between the driver who is the user of the agent apparatus and the personified character, the personified character does not always repeat (add a tag question to) the recognition result, so that the use will not be annoyed.

Further, whether or not to add a tag question is controlled according to the status, so that the driver can safely have a conversation without looking to the screen while driving due to the tag question. In reverse, when the vehicle is stopped and a recognition result can be confirmed on the screen or when an answer of two choices having high recognition rate is requested, the tag question is not added so as to realize a smooth conversation.

In a conversation between humans, an act of asking back the contents of listening (act of adding a tag question) is performed or not performed according to status, so that, according to the present invention, communication close to the conversation between humans can be made between the agent and the user.

On the main window (FIG. 49(a)) representing the editing state of the scene screen, when the button parts portion 315a which is displayed according to the selected screen structure (it could also be a normal list box parts portion depending on the screen structure) is double clicked, a voice recognition dictionary selecting window (b) is displayed. Further, the voice recognition dictionary selecting window (b) is also displayed by double-clicking the list display portion 315b of dictionaries for recognizing on the background.

On the voice recognition dictionary selecting window (FIG. 49(b)), when a dictionary name on the displayed list of available dictionaries is double clicked, this voice recognition dictionary is determined to be used and displayed on a list selected as a general dictionary.

When a "decide" button is clicked, the editing contents are reflected on the data and the program returns to the main window (a), and when a "cancel" button is clicked, the program returns to the main window (a) without reflecting the editing contents on the data.

When a "create new" button is clicked, a voice recognition dictionary creating window (FIG. 49(c)) for creating a new voice recognition dictionary is displayed.

On the voice recognition dictionary creating window (FIG. 49(c)), when the name of a dictionary is inputted and an "add dictionary" button is clicked, a window (d) for creating a new voice recognition dictionary with the inputted name and registering words to the voice recognition dictionary is displayed.

When an "OK" button is clicked on the voice recognition dictionary creating window (c), the creation of the voice recognition dictionary is finished and the program returns to the voice recognition dictionary selecting window (b).

On the window (FIG. 49(d)) for registering words to the voice recognition dictionary, a word desired to be registered is inputted by single byte kana into the hurigana field and a "decide" button is clicked. Next, a name (name desired to be displayed) is selected or newly inputted, and a PCM voice for adding a tag question is selected (when none is selected, a TTS is used for adding a tag question). When a "register" button is clicked after these three items are inputted, the word is registered in the data and added to the registered word list on the right side.

When a "return" button is clicked after the registration of words desired to be registered is all completed, the program returns to the voice recognition dictionary creating window (FIG. 49(c)).

Next, operation of setting a time (timer setting) in each scene will be described.

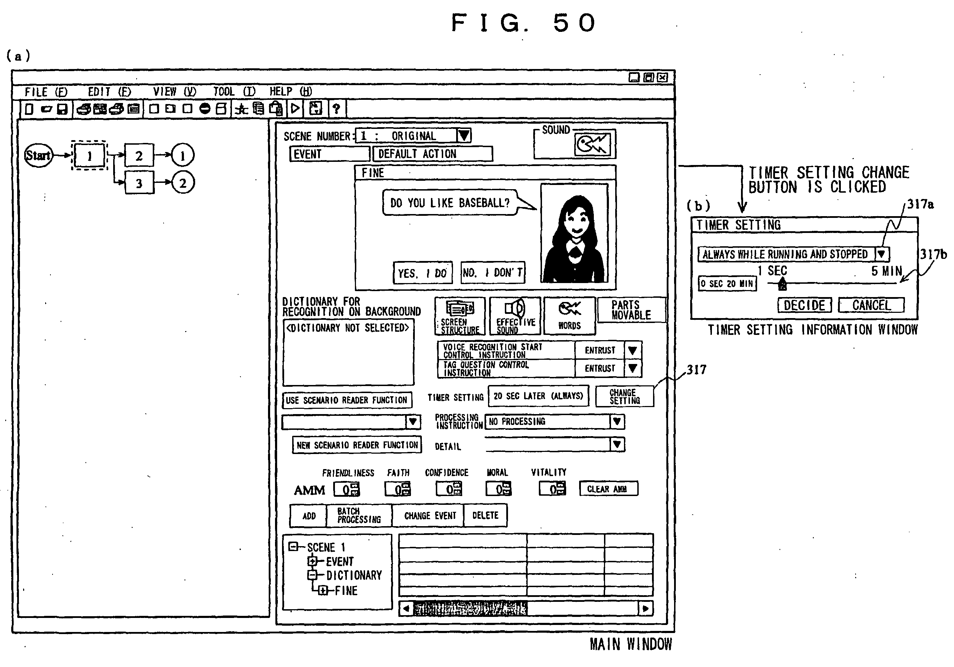

FIG. 50 is a view representing a flow of screen operation for performing a timer setting.

The main window exemplary shown in FIG. 50(a) shows a state that the character asks whether the user likes baseball or not, and answer selection buttons 315a (54) of two answers "I like it" and "I don't like it" are created as the answers thereof

On this main window (FIG. 50(a)), when the timer setting button 317 is selected, a timer setting information window (FIG. 50(b)) is displayed. However, the selection of the timer setting button 317 can be made in any stage of the scene setting, which can be done both before and after setting of questions of a character, setting an answer dictionary for them, and the like.

On the timer setting information window, when an inverted triangle button displayed on the right side of a timer setting condition field 317a is clicked, selectable timer setting conditions are displayed in a pull-down menu.

In this embodiment, as the selectable timer setting conditions, there exist cases of (a) always set while both running and stopped, (b) set only while running, (c) set only while stopped, and (d) do not set a timer at any time (the timer setting time is not defined in this case), which are displayed in the pull-down menu. A timer setting condition selected by the user is displayed in the timer setting condition field 317a.

On the other hand, the timer setting time can be set between one second and five minutes by moving the slider of the timer setting time bar 317b by the mouse. The timer setting time being set is displayed on a timer setting time display field on the left side of the timer setting time bar 317b.

On the timer setting information window, when setting and changing the timer setting time is completed and the user clicks a "decide", the set information is reflected and the program returns to the main window. At this time, in the timer setting information field on the right side of the timer setting button 317, the set timer setting information (the timer setting time is displayed, and the timer setting condition is displayed with parenthesis thereafter) are reflected and displayed.

Incidentally, when the user does not particularly set or change the timer setting information, a timer setting time = 20 seconds and a timer setting condition = (a) always set while both running and stopped are set as default values.

FIG. 51 is a view representing a flow of screen operation of editing a flow of a scenario.

A scene icon 307 (the icon 1 in FIG. 51) being created on the main window is selected to be active state. In this state, when the creating new scene button 321 is clicked, a transition selecting window (FIG. 51(b)) is displayed.

On this transition selecting window (FIG. 5 1 (b)), a transition condition to a next scene (newly created scene) is selected by selecting a condition of branching to the newly created scene from a branching event list. As shown in FIG. 51(b), in this embodiment, a case that a timer notification is performed (a setting time passes) without voice recognition, selection of a selecting box, or the like being performed within a timer setting time that is set on the timer setting information window shown in FIG. 50 is selectable as the transition condition (time limit setting means).

On the branching event selecting window 51(b), when a transition condition to the next scene (newly created scene) is selected and an "OK" button is clicked, this condition (branching event) is decided, and the program returns to the main screen (a).

On the main screen (c) after the return, a scene (the scene icon (4) in the diagram) is newly created on the scene development screen 305. The newly created scene icon is marked "NEW" to be distinguished from the other scene icons.

Incidentally, branching events selectable on the branching event selecting window are shown in FIG. 33.

As the above description of FIG. 51, by setting a condition for proceeding from one screen element to the next screen element, there are formed a transition condition setting means and a transition time limit setting means for setting a time limit to proceed from one action processing to next action processing of a character according to the present invention.

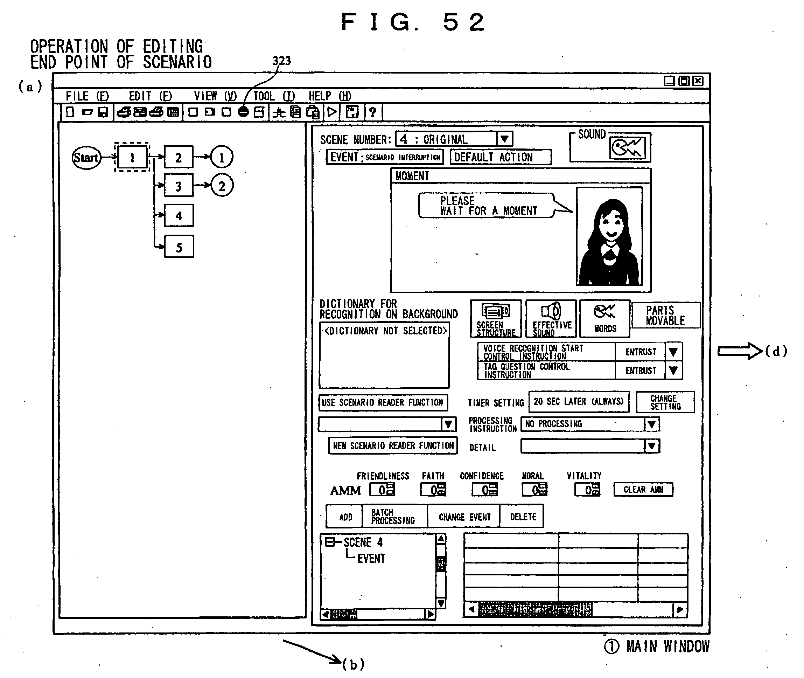

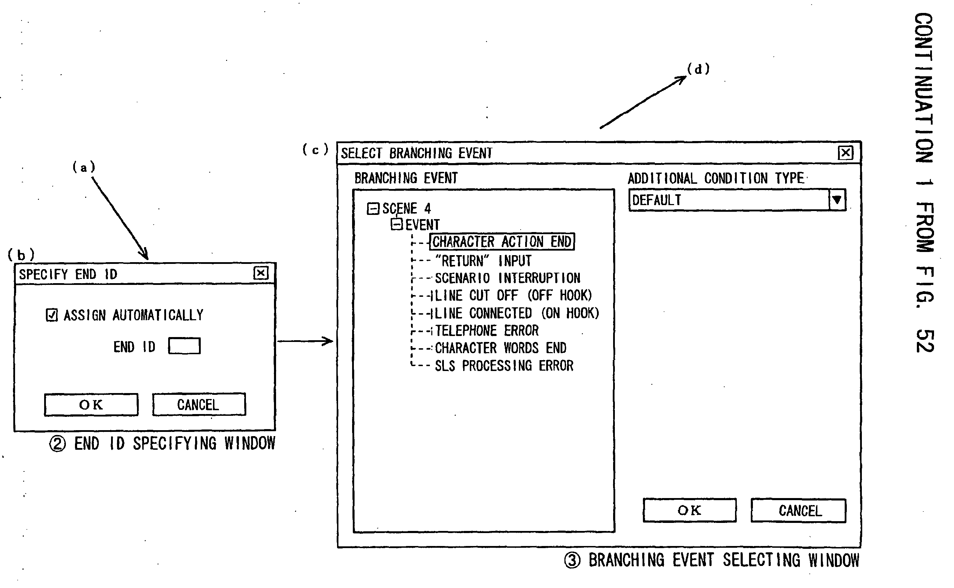

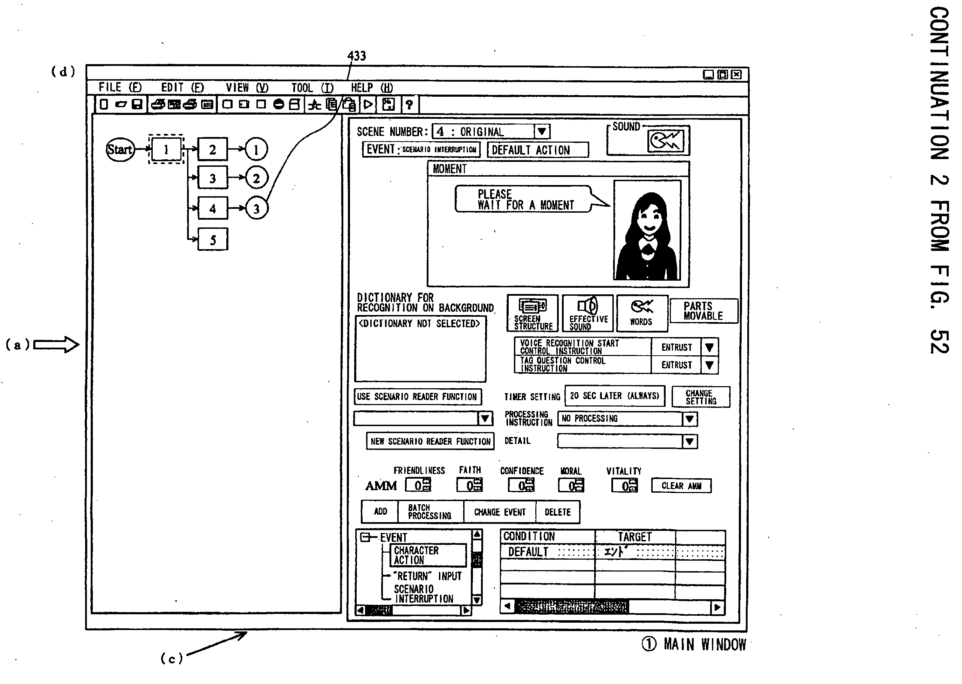

FIG. 52 is a view representing a flow of screen operation of editing an end point of a scenario.

On the main window (a), when the scenario end point creating button 323 is clicked, an end ID specifying window (b) is displayed.

On this end ID specifying window, an ID number to be given to an end point mark is specified. Normally, the ID number is automatically assigned, but when a checkbox on which written "assign automatically" is unchecked, the operator of the editor can assign it by himself/herself. When an "OK" button is clicked, the ID number is decided and a branching event selecting window (c) is displayed.

On the branching event selecting window (c), a branching condition for ending a scenario is set by the same operation manner as the creation of a new scene. An additional condition setting can be similarly performed. On this window, when an "OK" button is clicked, the condition (transition condition) is decided and the program returns to the main window (d) (transition condition setting means). At this time, a new scenario end point 433 is created on the scenario diagram.

As has been described above, there is formed a screen element transition object creating means for creating a screen element transition object (scenario) by combining screen elements and transition conditions between the screen elements, in which one screen element (scene) is a screen element on which at least one of a display content and a processing content of a character (agent) is defined.

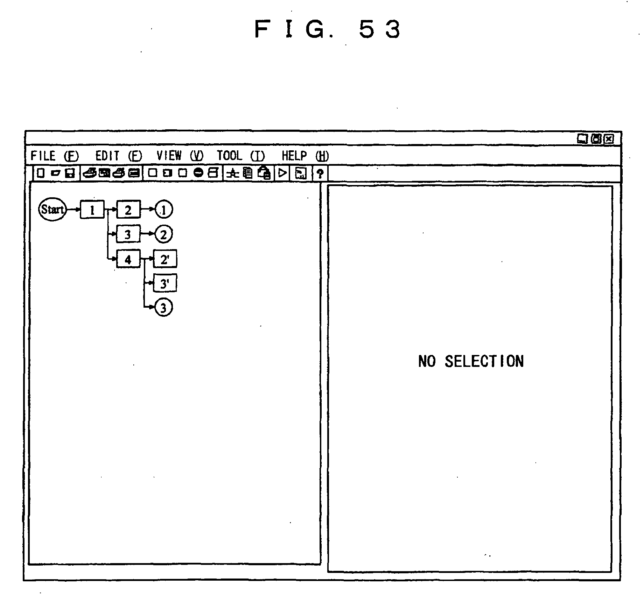

FIG. 53 is a view representing an example of a scene development in a scenario created as described above.

On the main screen shown in FIG. 53, scene icons 307 indicating a structure of the created scenario are displayed on the scene development screen 305. Incidentally, since none of the scene icon is selected in FIG. 53, nothing is displayed on the scene display screen 54 and the setting screen on the right side.

Using FIG. 53, an example of a scenario to obtain user information by confirming as driver information whether the user likes baseball or not will be described. An autonomous start condition in this case is set, for example, such that the user's hobby is not obtained and the driving load on the user is low such as when a straight road goes on and the vehicle is running at or below a predetermined vehicle speed, and the like.

When such an autonomous start condition is satisfied, a first scene 1 (square scene icons which are marked by a numeral 1, and so on), the character asks a question "do you like to watch baseball?" In this scene, as the user's response, "yes, I do" and "no, I don't" are expected, and answer selection buttons 54 with corresponding displays and a voice recognition dictionary are set. Further, as timer setting information of the scene 1, a timer setting time of 20 seconds and a timer setting condition (a) always set while both running and stopped are defined.

A scene to be branched (developed) by a transition condition that the user's answer is "yes, I do" is defined as a scene 2, a scene to be branched by a transition condition that the user's answer is "no, I don't" is defined as a scene 3, and a scene to be branched by a transition condition that the timer is notified before the user answers is defined as a scene 4.

In this case, the scene 2 to be branched when the answer is "yes, I do," the character outputs a voice, for example, "I see! Many people like baseball in Japan," and thereafter, the scenario ends (an end icon 1 in a round shape; and so on). A manner of ending in this case is defined by the icon 1, and the manner how the scenario ends is accumulated in the learned item data 10-2-3-7 in the agent apparatus 1. Further, data "the user likes baseball" is stored as a hobby item in the driver information data 10-2-3-6.

On the other hand, in the scene 3 to be branched when the answer is "no, I don't," the character outputs a voice, for example, "I see! Favor of sports is not only the baseball," and thereafter the scenario ends (end icon 2) Then, the end at the end icon 2 is accumulated in the learned item data 10-2-3-7 in the agent apparatus 1. Further, data "the user dislikes baseball" is stored as a hobby item in the driver information data 10-2-3-6.

Furthermore, in the scene 4 to be branched when the timer is notified without receiving an answer from the user, the character again outputs a voice of a question, for example, "do you have any interest in baseball?" or the like. As the user's response, "yes, I do" and "no, I don't" are expected, and answer selection buttons 54 with corresponding displays and a voice recognition dictionary are set. Further, as the timer setting information of the scene 1, for example, the timer setting time of 20 seconds and the timer setting condition (a) always set while both running and stopped are defined.

When the user answers "yes, I do" to the question asked again in the scene 4, it branches to a scene 2'. An icon with an apostrophe like this scene 2', which indicates the branching target in this case, represents branching to the scene 2 without an apostrophe. Therefore, when the answer in the scene 4 is "yes, I do," it branches to the scene 2 and ends by the end icon 1 after outputting a voice to confirm that the user likes baseball.

When the user answers "no, I don't" to the question asked again in the scene 4, due to the similarly displayed scene 3', it branches to the scene 3 and a development after the scene 3 proceeds.

On the other hand, when the timer is notified again for the question in the scene 4, it proceeds to the end icon 3 to end, and the end at the end icon 3 is stored in the learned item data 10-2-3-7. Accordingly, it is possible to judge that the user has no interest in the question itself regarding whether to like baseball or not, so that the same scenario can be restricted from being executed again. Such a response is possible by adding a condition "the scenario is not ended before at the end icon 3" to the autonomous start condition of the scenario.

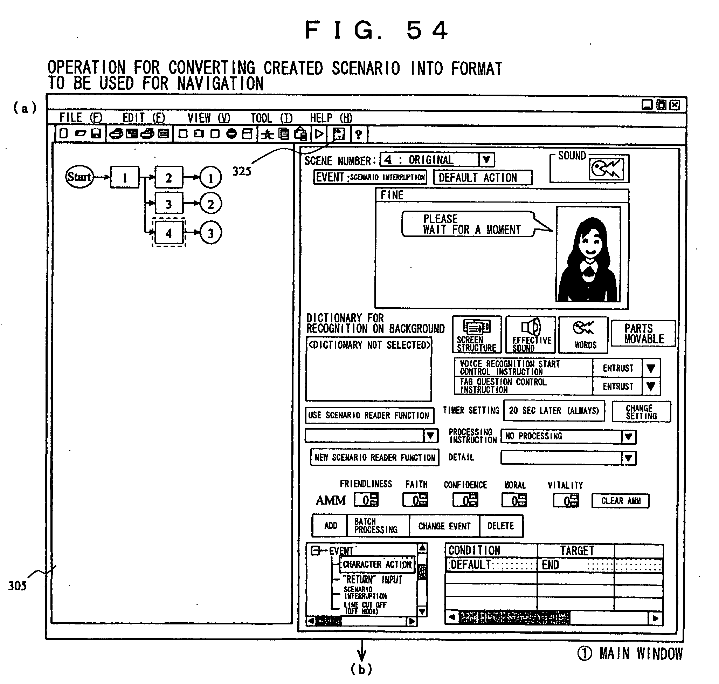

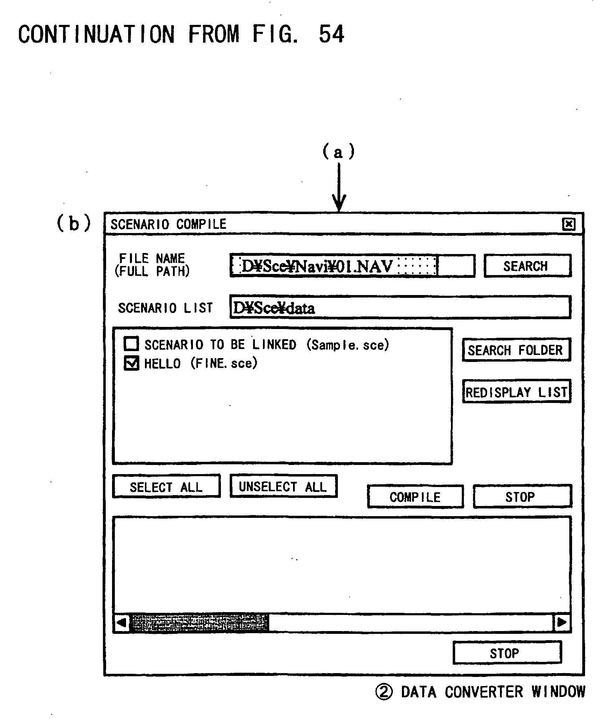

FIG. 54 is a view representing a flow of screen operation of compiling a created scenario into an actual device format (NAV format) that is usable in the agent apparatus.

On the main window (a), when the scenario compile button 325 is clicked, a scenario complier window (b) is displayed.

On this scenario compiler window (b), the name of a file to output compiled data is specified and a scenario to be converted is selected (scenarios checked on a scenario list are simultaneously compiled) at the same time, and when the compile button is clicked, the scenario compiler (240-1-2) starts converting the data. Status of the data conversion is displayed on a result display portion.

The data conversion is finished when a "complete" button is clicked, and the program returns to the main window (a).

Incidentally, regarding displaying and hiding a scenario while running, the scenario compiler (240-1-2) sets the execution condition while running to be inexecutable while running in the management data of the scenario when the checkbox 407 "enable execution while running" is unchecked.

On the other hand, when the checkbox 407 is checked, the scenario complier (240-1-2) sets the execution condition while running to be restrictively executable while running such that the item having no check on the display related setting window and the item defined to be permanently hidden on the table of restrictive execution while running become an item selectively hidden while running.

As described above, according to the scenario creating apparatus of this embodiment, the display states of characters for instructing actions of a character in each scene of a scenario are standardized so as not to depend on the type of the character, so that it is possible to create a scenario that can be executed without being restricted by characters, and scenarios created for respective characters can be combined into one scenario. Therefore, a scenario can be easily created.

Further, contents desired to be expressed by a character such as greeting for meeting, posting (information or the like), rejoicing, being angry, and the like are used as names of standard character action instruction modes, so that, when creating an instruction of character action by the scenario creating apparatus, the scenario creator only needed to be directly select an action desired to be performed by the character from these names. Therefore, a scenario can be easily created.

Further, according to this embodiment, processing to judge whether a condition to autonomously start (automatically present) an agent based on scenario data created by the scenario creating apparatus is satisfied or not is performed periodically or when a particular state is satisfied, and the agent can appear automatically when the condition is satisfied.

On the other hand, according to the scenario creating apparatus and the scenario editor of this embodiment, regardless of whether having the knowledge of programming or not, scenario data of the agent that automatically appears and responds when a particular condition is satisfied can be simply created and edited by having the scenario editor. Further, by the scenario creating apparatus, whether to produce a sound (effective sound) or not can be set, and when the sound is to be produced, what kind of sound to be produced can be set (for each of created scenes), so that a scenario capable of notifying the automatic appearance of the agent without making the driver look to the screen can be easily created. Therefore, the driver can safely know the appearance of the agent while performing driving operation.

Furthermore, according to the described embodiment, the creator of the scenario data can easily and freely decide, according to the contents of a scenario to be created, whether or not to start execution of the scenario (and whether to interrupt or continue a scenario that is being executed), which item on a scene screen to hide when the scenario continues, and the like depending on a state of the vehicle such as running or stopped.

The agent apparatus can carry on the execution of a scenario according to an execution condition while running that is set in the scenario.

Therefore, according to the contents of the scenario, excessive communication can be prevented while the vehicle is running, thereby alleviating annoyance to the user. Thus, the communication with a personified character can be made closer to the communication between humans.

Further, according to the described embodiment, when there is no answer to a question for a given length of time, it is judged by the timer setting function that there is no answer for the question depending on status, so that the communication with a personified character can be made closer to the communication between humans.

Further, the annoyance to the user to always answer can be avoided.

When there is no answer within a set period of time, the agent apparatus can proceed to the next scene by taking that there is no answer as a proceeding condition. Thus, it is possible to avoid that one scenario is in an executed state for long time. Accordingly, it is possible to avoid that a scenario, which newly satisfies a start condition by a change in status such as movement of the vehicle or the like, is kept in an execution waiting state.

In the foregoing, one embodiment of the on-vehicle apparatus, the data creating apparatus, and the data creating program according to the present invention has been described. However, the present invention is not limited to the described embodiment, and various modifications can be made.

For example, in the scenario creating apparatus of the described embodiment, when the restrictive execution while running is set as the execution condition while running, respective items constituting a scene screen can be set to be displayed or hidden, but settings of the respective items may uniformly be set to settings defined by default (FIG. 39) so that the user cannot select them.

In reverse, the displaying and hiding may be settable in further detail. For example, in the described embodiment, displaying and hiding are commonly set for all scenes, but they may be set individually in each scene.

Further, in the described embodiment, the execution state of a scenario is changed (interrupted or restrictively executed) according to the running state (running or stopped), but the display may be restricted according to other vehicle states.

For example, the display may be changed by a vehicle state such as whether or not the vehicle is changing a course, whether or not the vehicle is at a position between a predetermined distance before a course changing point and a predetennined distance after passing the course changing point when a driving route is searched by the navigation function, and the like. Further, the displayed items and hidden items may be settable according to a driving road such as whether it is raining or not, whether the vehicle is running on a snowy road or not, and the like.

Further, it is also possible to restrict displaying the word balloon and the selection buttons only while running on a curve by detecting a road shape such as a curve based on handling operation from the rudder sensor, map data or the like, to restrict displaying when a high-speed running is expected by detecting the road type such as an expressway and a toll road, and to restrict displaying according to user's impatience or health state using a sweat sensor or an infrared sensor.

In each of these cases, the restriction of display is possible when the user is busy on driving operation or when the user's concentration is low, so that a large amount of information will not be displayed. Therefore, the display will not be annoyance to the user.

Furthermore, the creator of the scenario data may select a vehicle state and a driving road state, and for each of the selected states, inexecution (including interruption) and restrictive execution (and setting of display restricted item) of a scenario may be set.

Further, in the described embodiment, the timer setting is described as a time limit in a scene to perform voice recognition, but it may be a time until a user's answer to a question is inputted. Specifically, the user's answer includes an answer by voice input, but there may be a case that answers in voice are not set (an answer voice recognition dictionary is not set), or the scene data may be configured to accept only answers from the answer selection buttons 54 (315a) on the screen.

A response in such a case becomes possible by setting the timer setting time not as a time for voice recognition but as a time until an answer is inputted.

Further, in the described embodiment, when setting or changing the timer setting information, the timer setting button 317 is selected to display the timer setting information window (FIG. 53(b)), and the setting is done on this window. However, the timer setting information (a timer setting time and a timer setting condition) may be selectable on the main window.

Further, the agent apparatus 1 of the described embodiment is configured not to perform voice recognition when the "entrust" (judged by the agent apparatus) is set and the driving load is high. Alternatively, the agent apparatus 1 may be configured such that the voice recognition is not instantly started when the load on the driver is high but is started at the time the load on the driver becomes no longer high.

Specifically, in the status judgment (Step 505-6-8-2) in FIG. 24, a case is described that the return is performed when the load on the driver is judged to be high, but here the return is not performed and the processing goes back to the Step 505-6-8-2. Thus, the voice recognition unit (101-7) waits until the load on the driver becomes low, and at the time the load on the driver become low, the start sound is outputted to request voice input.

In the described embodiment, "user's sex" and "user's age" are defined as selectable items as the autonomous start conditions exemplified in FIG. 30 and FIG. 31, but other automatic start conditions regarding the driver (refer to FIG. 30) may be added. For example, as automatic start items, items regarding a state of a driver such as "skill level," "emotion," and the like are added. Then, "low," "normal," and "high" are added as selectable items corresponding to the "skill level" (refer to FIG. 31 and FIG. 32), and "anxiety," "impatience," "tension," and the like are added as selectable items corresponding to the "emotion."

In this case, in the agent apparatus, the state of the driver such as the skill level and the emotion are obtained as status information from operation history and the like of the driver stored in the driver information data (10-2-3-6) and in the learned item data (10-2-3-7), and compared with the start condition of the scenario and judged.

Specifically, in the agent apparatus, for example, the agent OS unit (101-8) obtains information coming from the various status detecting system (6) through the external I/F unit (101-9) from the overall processing unit (102), and the learning unit (101-3) judges the current state of the driver based on the driver information data (10-2-3-6) stored in the learning unit (101-3) and on the driver operation history stored in the learned item data (10-2-3-7), and the like.

As examples of the driver states to be judged, the driver's anxiety, impatience, tension, and so on as well as the skill level on the agent apparatus, and the like, which correspond to respective items of the autonomous start condition, are judged and estimated.

For example, it is conceivable to judge that the driver is being inpatient regarding time (in a hurry) when a speed exceeding state continues for a long time and a rapid increase/decrease of speed is performed many times within a predetermined period of time.

Further, the total number of times of use and the total time of use (communication time) of the agent, and further the number of times of automatic start occurrence and the like are used to judge the skill level on the agent apparatus by three steps of low, normal, and high, and the like. The number of steps and the judgment conditions are given as examples, which may be changed.

Thus, by registering conditions detectable on the agent apparatus side in the scenario creating apparatus to be usable by the scenario editor, the driver states can be used as the start conditions (autonomous start conditions) of the screen element transition object (scenario).

Accordingly, it is possible that the agent does not appear autonomously to have communication when the driver is being impatient (adding a condition "when the driver is not impatient" to the autonomous start condition).

It should be noted that, in this embodiment, the following structures are also possible for an object A to provide an agent apparatus for vehicles capable of realizing an agent function according to standardized scenario data and starting a scenario based on an autonomous start condition defmed in the scenario data, and for an object B to provide a scenario data creating apparatus capable of easily creating a standardized scenario for realizing the agent function in the agent apparatus and easily creating the autonomous start condition to autonomously start a scenario.
(a) An agent apparatus which judges states in a vehicle room and of a vehicle and executes a function to autonomously perform processing according to a judgment result thereof in conjunction with a motion of appearance and a voice of an agent, the agent apparatus is characterized in that it includes: an agent display means for displaying an image of the agent having a predetermined appearance in the vehicle room;
   a scenario constituted by one or plural continuous scenes in which one scene is constituted by at least one of a processing content performed by the device, an image of the agent, and a voice; a scenario storing means for storing scenario data having an autonomous start condition to autonomously start a development of the scenario; a status information obtaining means for obtaining states in a vehicle room and of a vehicle as status information; a condition judging means for judging whether or not the obtained status information satisfies the autonomous start condition of each scenario stored in the scenario storing means; and a scenario executing means for autonomously starting a scenario corresponding to the autonomous start condition judged to be satisfied by the condition judging means to thereby develop respective scenes in sequence, in which the condition judging means judges whether or not the status information satisfies the autonomous start condition by a predetermined timing.
(b) The agent apparatus according to (a) is characterized in that the condition judging means performs judgment periodically at every predetermined time and when the obtained status information satisfies specific status which is set in advance.
(c) The agent apparatus according to (a) or (b) is characterized in that, when an effective sound is set in a scene, the scenario executing means outputs the effective sound corresponding to effective sound information at the time when the scene is developed.
(d) A scenario data creating apparatus for creating scenario data for an agent apparatus, which autonomously starts a scenario when an autonomous start condition of the scenario is satisfied, the scenario being constituted by one or plural continuous scenes in which one scene is constituted by at least one of a processing content performed autonomously by an agent apparatus for vehicles, an image of the agent, and a voice, the scenario data creating apparatus is characterized in that it includes: a scene element selecting means for selecting at least one of a processing content of the agent, an agent image, and voice data which are selectable as a component of a scene; a scene creating means for creating from the obtained scene component a scene constituted by at least one of a processing content of the agent, an image of the agent, and an output voice as one scene; a scene development structure creating means for creating a development structure of each scene from one or plural transition conditions for proceeding from one predetermined scene to a next scene and transition target data which specifies transition target scenes corresponding to respective transition conditions; an offering means for offering respective items of status information regarding states in a vehicle room and of a vehicle which are obtainable by the agent apparatus; a selecting means for selecting one or more items from the respective items of the offered status information; an autonomous start condition creating means for creating an autonomous start condition of a scenario from the selected one or plural items of the state display; and an outputting means for outputting scenario data constituted by the created scenes, the development structures of the respective created scenes, and the autonomous start condition of the created scenario.
(e) The scenario data creating apparatus according to (d) is characterized in that the scenario starts from a scene whose content is an active action such as a suggestion, a question, a greeting, and the like by the agent.
(f) The scenario data creating apparatus according to (d) or (e) is characterized in that it further includes: a scene selecting means for selecting a scene; an effective sound displaying means for displaying effective sound information which specifies one or plural effective sounds in a list; an effective sound selecting means for selecting one effective sound information from the displayed effective sound information; and an effective sound setting means for setting an effective sound corresponding to the selected effective sound information as an effective sound outputted at the time when the selected scene is started.

According to an embodiment of (a), an agent function can be realized according to standardized scenario data, and starting a scenario based on an autonomous start condition defined in the scenario data becomes possible.

Further, according to an embodiment described in (b), a standardized scenario for realizing an agent function in an agent apparatus and an autonomous start condition to autonomously start the scenario can be easily created without having sufficient knowledge of programming.

### Industrial Availability

According to the present invention, a screen element transition object constituted by combining screen elements can be executed, in which one screen element defines at least one of a display state of a character and a processing content of a character, and at least a part of the screen element can be executed according to whether the vehicle is running or not.

Further, according to the present invention, a screen element transition object constituted by combining screen elements can be easily created, in which one screen element defines at least one of a display state of a character and a processing content of a character to be executed in an on-vehicle apparatus, and a screen element transition object in which an execution condition while running restricting execution of at least a part of the screen element is set can be easily created.

Further, according to the present invention, a screen element transition object constituted by combining screen elements can be easily created by a computer, in which one screen element defines at least one of a display state of a character and a processing content of a character to be executed in an on-vehicle apparatus, and a screen element transition object in which an execution condition while running restricting execution of at least, a part of the screen element is set can be easily created by a computer.

## Claims

1. An on-vehicle apparatus, comprising:
a screen element transition storing means for externally obtaining and storing a screen element transition object constituted by combining screen elements, in which one screen element defines at least one of a display content and a processing content of a character, and a start condition of the screen element transition object;
a condition judging means for judging whether or not the start condition is satisfied based on at least one of an on-vehicle sensor and user data; and
a screen element transition object executing means for executing the screen element transition object when the start condition is judged to be satisfied.

2. The on-vehicle apparatus according to claim 1,
wherein said on-vehicle sensor detects at least one of a time, a location, a road type, a vehicle state, and an operating state of a navigation device.

3. The on-vehicle apparatus according to claim 1,
wherein said screen transition object executing means displays an executed screen transition object on a display device in a vehicle room.

4. A data creating apparatus, comprising:
an offering means for offering a plurality of selection items for at least one target out of a time; a location, a road type, a vehicle state, an operating state of a navigation device, and user data;
a character setting means for selecting one or more items from the offered plural selection items and setting a display content and a processing content of a character to the selected item; and
a screen element transition object creating means for creating a screen element transition object by combining screen elements, in which one screen element defines at least one of the display content and the processing content of the character, and a transition condition between the screen elements.

5. The data creating apparatus according to claim 4,
wherein the screen element transition object starts from a screen element whose content is an active action such as a suggestion, a question, a greeting, and the like by the character.

6. The data creating apparatus according to claim 4, further comprising:
an effective sound displaying means for displaying effective sound information which specifies one or plural effective sounds in a list;
an effective sound selecting means for selecting one effective sound information from the displayed effective sound information; and
an effective sound setting means for setting an effective sound corresponding to the selected effective sound information as an effective sound to be outputted at a time of starting one screen element or in conjunction with the display content and the processing content of the character.

7. A data creating program for realizing functions on a computer, the functions comprising:
a screen element setting function to set one screen element based on a display content and a processing content of a character;
a transition condition setting function to set one or more transition conditions for proceeding from one screen element to a next screen element which are set by said screen element setting function; and
a screen element transition object setting function to create a screen element transition object to be executed and processed in a display device in a vehicle room based on the screen element and the transition condition.

8. The data creating program for realizing functions on a computer according to claim 7, the functions further comprising:
a start condition setting function to set a start condition for starting the screen element transition object by at least one of a time, a location, a road type, a vehicle state, an operation state of a navigation device, and user data.

9. The data creating program for realizing functions on a computer according to claim 7, the functions further comprising:
a converting function to convert the screen element transition object into an operation format to be operated in a navigation device.

10. The data creating program according to claim 7,
wherein said screen element setting function comprises an effective sound setting function to set an effective sound to be outputted at a time of starting the screen element or in conjunction with the display content and the processing content of the character.

11. The data creating program for realizing functions on a computer according to claim 7, the functions further comprising:
a mental state setting function to enable setting of the transition condition according to a mental state of the character.
